# EUROPÄISCHE PATENTSCHRIFT

(11) **EP 3 535 380 B1**
(45) Veröffentlichungstag und Bekanntmachung des Hinweises auf die Patenterteilung: **16.10.2024**
(21) Anmeldenummer: 17794309.9
(22) Anmeldetag: 02.11.2017
(51) Int. Cl.: C12C 7/16, C12C 5/00, C12C 7/14, C12C 7/24, C12C 3/12

(54) **BRAUANLAGE UND VERFAHREN ZUR GEWINNUNG UND BEHANDLUNG EINER WÜRZE IN DER BIERBRAUEREI ODER GETRÄNKEINDUSTRIE UND ENTSPRECHENDE VERWENDUNGEN**
BREWING SYSTEM AND METHOD FOR OBTAINING AND TREATING A WORT IN BEER BREWING OR IN THE BEVERAGE INDUSTRY, AND CORRESPONDING APPLICATIONS
INSTALLATION DE BRASSAGE ET PROCÉDÉ POUR L'OBTENTION ET LE TRAITEMENT D'UN MOÛT DANS UNE BRASSERIE OU DANS L'INDUSTRIE DES BOISSONS ET UTILISATIONS CORRESPONDANTES

(30) Priorität: 03.11.2016 DE 102016121016
(43) Veröffentlichungstag der Anmeldung: 11.09.2019
(73) Patentinhaber: Ziemann Holvrieka GmbH, 71636 Ludwigsburg (DE)
(72) Erfinder: GEHRIG, Klaus, 71640 Ludwigsburg (DE); WASMUHT, Klaus Karl, 91792 Ellingen (DE); BECHER, Tobias, 71701 Schwieberdingen (DE); ZILLER, Konstantin, 71638 Ludwigsburg (DE); BENNINGHAUS, Tom, 70178 Stuttgard (DE)
(74) Vertreter: Kuhnen & Wacker Patent- und Rechtsanwaltsbüro PartG mbB
(86) Internationale Anmeldenummer: PCT/EP2017/078040
(87) Internationale Veröffentlichungsnummer: WO 2018/083168

(56) Entgegenhaltungen:
- EP-A1- 3 138 902
- DE-A1- 4 234 392
- DE-C1- 19 602 167
- US-A1- 2015 275 158

## Beschreibung

Die Erfindung betrifft eine Brauanlage und ein Verfahren zur Gewinnung und Behandlung von Würze in der Bierbrauerei oder Getränkeindustrie und entsprechende Verwendungen.

### Einleitung

Die in jüngster Zeit vorgestellten Verfahren zur Würzegewinnung in der Bierbrauerei oder Getränkeindustrie, welche im Gegensatz zu althergebrachten Verfahren nicht auf einer Tiefenfiltration, sondern ganz oder im Wesentlichen auf einer Oberflächenfiltration, insbesondere Siebfiltration, basieren, erlauben ein Abläutern in einer hohen Geschwindigkeit, wodurch sich der Läuterschritt und damit das gesamte Brauverfahren erheblich verkürzen lässt. Derartige Verfahren und die zugehörigen Vorrichtungen sind beispielsweise in den deutschen Offenlegungsschriften DE 10 2014 116 304 A1, DE 10 2014 116 305 A1, DE 10 2014 116 307 A1 und DE 10 2014 116 308 A1 beschrieben.

Bei einer tiefergehenden Betrachtung der neuen Läuterverfahren wurde von den Erfindern der vorliegenden Anmeldung jedoch festgestellt, dass die resultierenden Würzen eine hohe Trübung aufweisen, wie sie bei den herkömmlich eingesetzten Läutertechniken, wie dem Läuterbottich, und üblicher Fahrweise erfolgreich vermieden werden. Diese Trübung, die vermutlich von Partikeln mit einer Größe von > 5 µm, insbesondere > 20 µm, verursacht wird, zeigt eine hohe Durchgängigkeit durch die beim Läuterschritt verwendeten Oberflächen- oder Siebfilter, so dass die Partikel in der Würze verbleiben.

Bisher lagen keine gesicherten Erkenntnisse vor, wie sich die Zusammensetzung der Würzen der mit der an die Oberflächenfiltration angelehnte neuartige Läutertechnologie auf die Gärung und die Qualität der resultierenden Biere bzw. Getränke auswirkt.

Nach weit verbreiteter Ansicht ist jedoch zu besorgen, dass die erhöhte Trübung zu einer Beeinträchtigung der Gärung (das sog. "Verschmieren der Hefe") und zu Qualitätseinbußen bei den weiteren Herstellungsschritten (z.B. bei der Filtration des Bieres nach der Lagerung) oder im fertigen Bier oder Getränk führen könnte (Geschmacksqualität, Geschmacksstabilität, Alterungsbeständigkeit, chemischphysikalische Stabilität, Anfälligkeit auf mikrobiologischen Befall). So herrscht in den Fachkreisen der deutschen und internationalen Brauwirtschaft die Meinung vor, dass die Gewinnung trüber Läuterwürzen mit Blick auf die Gärung und Bierqualität zu vermeiden ist. Dagegen wird im Allgemeinen eine möglichst hohe Klarheit der Würze beim Läutern als Voraussetzung für eine gute Verarbeitbarkeit der Würze und Erzielung einer einwandfreien Bierqualität angesehen.

Ferner wurde festgestellt, dass gerade beim Einsatz der neuen, auf Oberflächenfiltration basierenden Läutertechniken durch die Verwendung problematischer, schwer aufschließbarer Malze oder anderer schwer aufschließbarer Rohstoffe, oder bei verkürzten Maischverfahren, bei denen bei einer relativ geringen Temperatur (ca. 65 °C oder darunter) abgemaischt wird, die beschriebenen Feintrübungen mit den damit verbundenen Nachteilen auftreten können.

Demzufolge besteht das Bedürfnis, die neue Läutertechnologie basierend im Wesentlichen auf einer Oberflächenfiltration dahingehend weiterzuentwickeln, dass einerseits eine schnelle Abläuterung mit Läuterdauern von weniger als 50 min, vorzugsweise weniger als 40 min, für einen großtechnischen Sud ermöglicht wird, dabei jedoch eine Verbesserung oder weitere Verbesserung der Würzequalität insbesondere mit Blick auf die Gärung und die resultierende Bier- bzw. Getränkequalität zu erzielen.

Der Fachmann kennt herkömmliche Verfahren zu Würzegewinnung für die Bierherstellung und entsprechende Vorrichtungen hierzu beispielsweise aus den Offenlegungsschriften DE 196 02 167 C1, US 2015/0 275 158 A1 und DE 42 34 392 A1.

### Definitionen

Erfindungsgemäß wird unter dem Begriff "Brauanlage" eine Anlage in der Bierbrauerei oder bei Getränkeherstellung verstanden, die geeignet ist, eine Würze aus einer Maische zu gewinnen und die erhaltene Würze mittels eines enzymhaltigen Substrats zu behandeln. Dabei kann die Anlage optional noch weitere Komponenten umfassen, wie beispielsweise eine Vorrichtung zum Zerkleinern der Rohstoffe, wie eine Malzmühle; eine Vorrichtung zum Erzeugen einer Maische, insbesondere ein Maischepfanne oder ein Maischbottich; eine Vorrichtung zur thermischen Behandlung der Würze, insbesondere eine Würzepfanne; eine Einrichtung zum Klären der Würze, insbesondere ein Whirlpool; und/oder eine Vorrichtung zum Kühlen der Würze, insbesondere ein Plattenwärmeüberträger.

Im Sinn der Erfindung umfasst der Begriff "Maische" die dem Fachmann im Brauerei- oder Getränkebereich geläufige Bedeutung. Dabei kann "Maische" aber auch verdünnte Maischen, insbesondere Gemische aus einer Maische und Wasser, und konzentrierten Maischen, z.B. Restmaischen, also Maischen, aus denen Würze oder verdünnten Würze bereits abgetrennt wurde, einschließen. Zudem kann "Maische" alle dem Fachmann bekannten Arten von Maischen, insbesondere Biermaischen und Whiskeymaischen, umfassen. Erfindungsgemäß kann der Begriff "Maische" aber auch auf kohlenhydrathaltige Medien beschränkt sein, die zur Herstellung von Getränken, vorzugsweise von alkoholischen Getränken, insbesondere Bier oder Biermischgetränken, oder Getränken auf Würzebasis geeignet sind.

Im Sinn der Erfindung umfasst der Begriff "Würze" die dem Fachmann im Brauerei- oder Getränkebereich geläufige Bedeutung. Dabei kann "Würze" aber auch Vorderwürze, Pfanne-voll-Würze, Ausschlagwürze, Anstellwürze, gehopfte Würze, verdünnte Würze, insbesondere Gemische aus einer Würze und Wasser, Nachguss bzw. Nachgussabläufe und Glattwasser sowie konzentrierte Würzen einschließen. Zudem kann "Würze" alle dem Fachmann bekannten Arten von Würzen, insbesondere Bierwürze, umfassen. Erfindungsgemäß kann der Begriff "Würze" aber auch auf kohlenhydrathaltige Medien beschränkt sein, die aus einer Maische wie vorstehend definiert insbesondere durch Abreicherung von Feststoffen gewonnen wurden und zur Herstellung von Getränken, vorzugsweise von alkoholischen Getränken, insbesondere Bier oder Biermischgetränken, oder Getränken auf Würzebasis geeignet sind.

Unter dem Begriff "Trennvorrichtung" wird erfindungsgemäß jede Vorrichtung verstanden, die geeignet ist, ein oder mehrere Bestandteile eines Stoffgemischs zu trennen. Insbesondere schließt "Trennvorrichtung" ein Filter, ein Sieb oder ähnliches ein.

Unter "Mischen" wird erfindungsgemäß das Zusammengeben oder Inkontaktbringen zweier oder mehrerer Stoffe verstanden. Dies kann aber auch das Homogenisieren der resultierenden Mischung einschließen.

Unter dem Begriff "Klären" oder "Klärung" wird erfindungsgemäß ein Vorgang verstanden, bei dem die Klarheit eines Mediums durch teilweise oder vollständige Abscheidung von trübungsbildenden Stoffen erhöht wird, beispielsweise die wenigstens teilweise Entfernung des Heißtrubes aus der Würze im Whirlpool. Darüber hinaus kann der Begriff "Klären" oder "Klärung" auch das Einstellen einer Trübung eines Mediums umfassen.

Im Sinne der vorliegenden Anmeldung wird ein Verfahren oder Verfahrensschritt als "kontinuierlich" definiert, wenn dieses Verfahren oder dieser Verfahrensschritt ohne Unterbrechungen durchgeführt wird oder abläuft. Erfindungsgemäß kann die Definition von "kontinuierlich" zusätzlich jedoch auch Verfahren oder Verfahrensschritte umfassen, die eine oder mehrere Unterbrechungen in einem zeitlichen Ausmaß von insgesamt höchstens 20 %, vorzugsweise höchstens 15 %, vorzugsweise höchstens 10 %, vorzugsweise höchstens 5 %, insbesondere höchstens 2 %, der Gesamtdauer des betreffenden Verfahrens oder Verfahrensschritts aufweisen; oder eine oder mehrere Unterbrechungen in einem Ausmaß des Massen- oder Volumendurchsatzes von insgesamt höchstens 20 %, vorzugsweise höchstens 15 %, vorzugsweise höchstens 10 %, vorzugsweise höchstens 5 %, insbesondere höchstens 2 %, des gesamten Massen- oder Volumendurchsatzes des betreffenden Verfahrens oder Verfahrensschritts aufweisen.

Im Rahmen dieser Anmeldung werden alle Verfahren oder Verfahrensschritte, welche nicht in die vorstehende Definition von "kontinuierlich" fallen, als "diskontinuierlich" oder "batchweise" definiert. Dabei kann die Definition von "diskontinuierlich" auch Verfahren oder Verfahrensschritte fallen, deren Durchführung zwar ohne Unterbrechung stattfindet, deren Durchführung jedoch nach höchstens acht Stunden, vorzugsweise höchstens sechs Stunden, abgeschlossen ist und bei denen eine vorbestimmte Portion eines Substrats, wie beispielsweise ein Sud, Doppelsud oder Teilsud und dergleichen einer Maische oder einer Würze, behandelt oder verarbeitet wird.

Im Sinne der vorliegenden Anmeldung umfasst der Begriff "Oberfläche" (FA, FA1, FA2, ...) einer Trennvorrichtung (LT, LT1, LT2, ...) den Teil der gesamten, äußeren, d.h. mit der Umgebung in Kontakt befindlichen Ober- oder Umfangsfläche der Trennvorrichtung, der die Öffnungen OP zum Trennen einer Maische oder Restmaische und damit eine Trenn- oder Filterfunktion aufweist.

Erfindungsgemäß wird unter dem Begriff "Portion einer Maische" insbesondere eine Stoffportion verstanden, welche aus einer Maische besteht. Der Begriff ist jedoch nicht hierauf beschränkt, sondern kann erfindungsgemäß auch eine Stoffportion einschließen, welche Maische enthält. Insbesondere kann der erfindungsgemäße Begriff "Portion einer Maische" auch Gemische aus Maische und Wasser oder aus Maische und Maischeauszügen oder aus Maische und Würze oder dergleichen umfassen. Darüber hinaus umfasst der Begriff auch Konzentrate einer Maische. Zudem umfasst der Begriff "Portion einer Maische" auch Gemische von wenigstens zwei Maischeportionen, wobei die Maischeportionen demselben oder unterschiedlichen Suden entstammen können.

Im Lichte der vorstehenden Definition des Begriffs "Portion einer Maische" gilt Entsprechendes auch für die erfindungsgemäßen Begriffe "Portion eines Maischeauszugs" und "Portion enthaltend eine nicht über 80 °C erwärmte, enzymhaltige Würze, vorzugsweise eine Portion der Vorderwürze" und den erfindungsgemäßen Gemischen aus den Portionen. Dabei kann der Begriff "eine nicht über 80 °C erwärmte, enzymhaltige Würze" eine Vorderwürze und auch eine wässerige Verdünnung oder ein Konzentrat einer Vorderwürze und insbesondere eine mit Nachguss verdünnte Vorderwürze, also eine herkömmliche Würze oder Pfanne-voll-Würze, einschließen, solange die Würze nicht derart erwärmt wurde, insbesondere nicht über 80 °C, dass die darin enthaltenen, für den jeweiligen Anwendungsfall und für die zu erzielende Wirkung relevanten Enzyme vollständig inaktiviert oder ihre enzymatische Funktion wesentlich beeinträchtigt wurde (insbesondere Verlangsamung des Stoffumsatzes oder der Reaktionsgeschwindigkeit auf < 50 % im Vergleich zu dem Zustand der Portion ohne Erwärmung). Folglich kann erfindungsgemäß der Begriff "Portion enthaltend eine nicht über 80 °C erwärmte, enzymhaltige Würze" auch eine nicht über 80 °C erwärmte Vorderwürze, ein nicht über 80 °C erwärmtes Gemisch aus Vorderwürze und einem Nachguss bzw. dessen Ablauf oder mehreren Nachgüssen bzw. deren Abläufen, jeweils auch in verdünnter oder konzentrierter Form, eine nicht über 80 °C erwärmte Pfanne-voll-Würze umfassen. Eine entsprechende Auslegung gilt für andere erfindungsgemäße Temperaturen.

Dem Begriff "Pfanne-voll-Volumen" der Würze wird die brauereiübliche Bedeutung zugeordnet, insbesondere das Gesamtvolumen der Würzecharge unmittelbar vor dem oder beim Beginn der thermischen Behandlung der Würze, bspw. durch Heißhalten oder Kochen.

Erfindungsgemäß wird unter "Heißhalten" der Würze das Halten der Würze bei einer Temperatur im Bereich von größer 85 °C, vorzugsweise größer 90 °C, insbesondere größer 95 °C, bis zur Kochtemperatur, beispielsweise 100 °C, verstanden.

Die in dieser Anmeldung angegebenen Temperaturangaben müssen nicht auf die exakten jeweiligen Temperaturen beschränkt sein. Die jeweils angegebenen Temperaturen können auch Temperaturen umfassen, welche um höchstens 2 °C, vorzugsweise höchstens 1 °C, von dem angegebenen Wert abweichen. So kann beispielsweise ein Wert von 80 °C auch einen Bereich von 78 bis 82 °C, vorzugsweise 79 bis 81 °C, umfassen.

Erfindungsgemäß umfasst der Begriff "Zugeben" das Mischen zweier oder mehr Fluide oder Suspensionen. Erfindungsgemäß muss der Begriff "Zugeben" jedoch nicht hierauf beschränkt sein. Er kann auch das Mischen und Homogenisieren zweier oder mehr Fluide oder Suspensionen umfassen.

Im Rahmen der vorliegenden Anmeldung wird unter "Bierbereitungsverfahren" ein Verfahren zum Herstellen eines Bieres einschließlich eines alkoholfreien Bieres oder eines bierhaltigen oder bierähnlichen Getränks oder einer Vorstufe derselben verstanden. Dies schließt folglich auch ein Verfahren zum Zubereiten einer Bierwürze (Bierwürzebereitungsverfahren) mit ein. Ferner kann "Bierbereitungsverfahren" auch ein Verfahren zum Herstellen eines beliebigen Getränks umfassen, insbesondere, wenn zur Herstellung des Getränks ein zum Bierbrauen verwendbarer Rohstoff verwendet wird und/oder das Getränk mit der üblichen Brauereiausstattung hergestellt werden kann, wie beispielsweise malzbasierte Getränke oder Softdrinks.

"Hopfensubstrat" ist ein Substrat oder eine Mischung aus Substraten, ausgewählt aus der Gruppe, die umfasst: Hopfen, vorzugsweise Naturhopfen; Hopfenprodukt, vorzugsweise Hopfenpellets, Hopfenextrakt, oder ein sonstiges Substrat, das isomerisierbare Hopfenbestandteile, vorzugsweise wenigstens eine α-Säure und/oder wenigstens eine β-Säure, aufweist.

"Isomerisierungssubstrat" ist ein wässeriges Fluid oder eine wässerige Suspension, ausgewählt aus der Gruppe, die umfasst: Wasser, (Bier-)Maische, (Bier-)Würze, einschließlich Vorderwürze, Pfanne-voll-Würze, Nachguss bzw. Nachgussablauf, Glattwasser, oder Mischungen, Verdünnungen oder Konzentrate der genannten Substrate, jeweils insbesondere aus dem Bierbereitungsverfahren.

Unter "thermischer Behandlung" im Sinne dieser Anmeldung wird ein Heißhalten oberhalb von 85 °C, vorzugsweise oberhalb von 95 °C, oder Kochen verstanden, dessen Dauer vorzugsweise 40 bis 120 min, insbesondere 50 bis 90 min, ist. Die thermische Behandlung einer Würze beginnt beim Erwärmen der bei der Läuterung gewonnenen Würze, insbesondere der Pfanne-voll-Würze, und endet beim Ausschlagen der Würze aus der Würzepfanne. Nachgelagerte Verfahrensschritte, welche keinen oder keinen nennenswerten Wärmeeintrag in die Würze umfassen, wie beispielweise die herkömmliche Trubabscheidung im Whirlpool oder ein Strippen der Würze ohne Nacherwärmen, sind nicht Teil der thermischen Behandlung der Würze. Die thermische Behandlung der erfindungsgemäßen, mit einem Zuschlagstoff angereicherten Würze beginnt mit dem Erwärmen der angereicherten Würze, vorzugsweise ab Erreichen eines vorbestimmten Temperaturminimums von 85 °C, insbesondere 95 °C, und endet mit dem Ausschlagen der angereicherten Würze analog zum Ausschlagen der Würze wie vorstehend definiert.

"Ausdampfen" meint das Freisetzen eines Dampfes oder eines Aerosols aus dem Isomerisierungssubstrat oder aus einem Gemisch enthaltend das Isomerisierungssubstrat, was auf ein Verdampfen und/oder ein Verdunsten einer Flüssigkeit bei oder unterhalb der Siedetemperatur derselben zurückzuführen ist.

"Zwischen- oder Enderzeugnis des Bierbereitungsverfahrens" umfasst: (Bier-)Maische, (Bier-)Würze, einschließlich Vorderwürze, Nachguss bzw. Nachgussablauf, Glattwasser, Pfanne-voll-Würze, Ausschlagwürze, geklärte Würze oder Würze nach dem Whirlpool schritt, Kaltwürze, belüftete Würze, Anstellwürze, Grünbier, Jungbier, gärendes Bier, endvergorenes Bier, Bier im Stadium der Reifung oder Lagerung; filtriertes Bier; Drucktankbier, abgefülltes Bier, voll- oder teilentalkoholisiertes Bier, Biermischgetränk oder beliebige Mischungen derselben.

Das "Einstellen der Temperatur des resultierenden Gemisches (IG)" umfasst das Erwärmen und das Abkühlen des Gemisches IG auf eine Temperatur innerhalb des angegebenen Temperaturbereichs. Es umfasst aber auch das Halten oder Belassen der Temperatur des Gemisches IG, wenn das Gemisch IG bereits beim oder nach dem Mischen im Schritt (3c) (vorstehende Nr. 100) bzw. (3b) (vorstehende Nr. 101) eine Temperatur innerhalb des angegebenen Temperaturbereichs aufweist und daher keine Änderung der Temperatur im Schritt (3d) (vorstehende Nr. 100) bzw. (3c) (vorstehende Nr. 101) erforderlich ist. Analoges gilt für das Vorrichtungsmerkmal "Einrichtung zum Einstellen der Temperatur des Gemischs (IG)".

Unter der "oberen Hälfte des Gefäßes (KVB)" wird der Teil des Innenraumes des Gefäßes (KVB) verstanden, welcher von einer Flüssigkeit nicht eingenommen wird, wenn eine Portion dieser Flüssigkeit in das Gefäß eingefüllt ist und das Volumen der Flüssigkeitsportion der Hälfte des Gesamtvolumens des Innenraumes des Gefäßes (KVB) entspricht.

Unter dem "oberen Drittel des Gefäßes (KVB)" wird der Teil des Innenraumes des Gefäßes (KVB) verstanden, welcher von einer Flüssigkeit nicht eingenommen wird, wenn eine Portion dieser Flüssigkeit in das Gefäß (KVB) eingefüllt ist und das Volumen der Flüssigkeitsportion zwei Dritteln des Gesamtvolumens des Innenraumes des Gefäßes (KVB) entspricht.

Unter der "unteren Hälfte des Gefäßes (KVB)" wird der Teil des Innenraumes des Gefäßes (KVB) verstanden, welcher von einer Flüssigkeit eingenommen wird, wenn eine Portion dieser Flüssigkeit in das Gefäß eingefüllt ist und das Volumen der Flüssigkeitsportion der Hälfte des Gesamtvolumens des Innenraumes des Gefäßes (KVB) entspricht.

Unter dem "unteren Drittel des Gefäßes (KVB)" wird der Teil des Innenraumes des Gefäßes (KVB) verstanden, welcher von einer Flüssigkeit eingenommen wird, wenn eine Portion dieser Flüssigkeit in das Gefäß (KVB) eingefüllt ist und das Volumen der Flüssigkeitsportion einem Drittel des Gesamtvolumens des Innenraumes des Gefäßes (KVB) entspricht.

Im Rahmen dieser Anmeldung wird unter "Feststoff" oder "Feststoffe" oder "feste Bestandteile" in Bezug auf Suspensionen, insbesondere auf Würze oder ein Gemisch enthaltend Würze, alle festen Substanzen verstanden, wie sie beispielweise gemäß der Methode MEBAK Band II, 2002, 2.6.2, bestimmt werden können.

"Zuschlagstoff" ist ein Substrat oder eine Mischung aus Substraten, ausgewählt aus einer Gruppe, bestehend aus einem Hopfentrub, einem Heißtrub, einem Kühltrub, einer Kieselgur, einem Kieselgel, PVPP, Bentonit, Reisschalen, Getreideschalen, Holzhackschnitzeln, Aktivkohle, einem Naturhopfen, Hopfenpellets, und festen Bestandteilen von Naturhopfen oder von Hopfenpellets. Dabei umfassen Getreideschalen vorzugsweise Schalen von Weizen, Roggen, Reis und/oder Hafer.

"Hopfensubstrat" ist ein Substrat oder eine Mischung aus Substraten, ausgewählt aus der Gruppe, die umfasst: Hopfen, vorzugsweise Naturhopfen; Hopfenprodukt, vorzugsweise Hopfenpellets, Hopfenextrakt, oder ein sonstiges Substrat, das isomerisierbare Hopfenbestandteile, vorzugsweise wenigstens eine α-Säure und/oder wenigstens eine β-Säure, aufweist.

"Isomerisiertes Hopfensubstrat" ist ein Hopfensubstrat, das isomerisierte Hopfenbestandteile, vorzugsweise wenigstens eine Iso-α-Säure und/oder wenigstens eine Iso-β-Säure, aufweist.

### Aufgabe der Erfindung

Es ist eine Aufgabe der vorliegenden Erfindung, eine Brauanlage und ein Verfahren zur Gewinnung und Behandlung einer Würze in der Bierbrauerei oder Getränkeindustrie und entsprechende Verwendungen bereitzustellen, die geeignet sind, die Gewinnung und/oder die Behandlung von Würze in der Bierbrauerei oder Getränkeindustrie zu verbessern. Insbesondere ist es eine Aufgabe der vorliegenden Erfindung, eine Brauanlage und ein Verfahren zur Gewinnung und Behandlung einer Würze in der Bierbrauerei oder Getränkeindustrie und entsprechende Verwendungen bereitzustellen, mittels derer/dessen eine für die Bier- oder Getränkeherstellung geeignete Würze in einer kurzen Zeitdauer und gleichzeitig in guter bzw. weiter verbesserter Qualität, insbesondere betreffend deren Zusammensetzung und Vergärbarkeit, hergestellt werden kann. Daneben ist es ein Aspekt der Erfindung, eine entsprechende Würze und/oder ein daraus hergestelltes Getränk oder Bier bereitzustellen.

### Beschreibung der Erfindung

Die vorstehend beschriebene Aufgabe wird durch die Gegenstände der unabhängigen Ansprüche gelöst.

So wird die Aufgabe durch die Brauanlage nach Anspruch 1, das Verfahren nach Anspruch 5, die Verwendung nach Anspruch 13 und die Würze bzw. das Bier oder Getränk nach Anspruch 14 gelöst. Vorteilhafte Ausführungsformen der vorliegenden Erfindung sind Gegenstand der abhängigen Ansprüche oder nachfolgend beschrieben.

Beansprucht wird eine Brauanlage (OM) zur kontinuierlichen oder diskontinuierlichen Gewinnung und Behandlung einer Würze (WO) in der Bierbrauerei oder Getränkeindustrie,
wobei die Würze (WO) wenigstens eine Würze enthält, die ausgewählt ist aus einer Gruppe, wenigstens bestehend aus einer ersten Würze (WO1), einer zweiten Würze (WO2), einer dritten Würze (WO3) und einer vierten Würze (WO4),
die Brauanlage (OM) mit:
   wenigstens einer ersten Läutervorrichtung (LV1) zur kontinuierlichen oder diskontinuierlichen Gewinnung der ersten Würze (WO1) aus einer Maische (MA), wenigstens mit:
   einer ersten Aufnahmeeinrichtung (AG1) zum Aufnehmen der Maische (MA);
   wenigstens einer ersten Trennvorrichtung (LT1) mit jeweils einer ersten Oberfläche (FA1);
   wobei die erste Oberfläche (FA1) eine Vielzahl von Öffnungen (OP) aufweist;
   wobei die erste Läutervorrichtung (LV1) vorzugsweise geeignet ist, mittels der ersten Oberfläche (FA1) der ersten Trennvorrichtung (LT1) die Maische (MA) in die erste Würze (WO1) und eine erste Restmaische (RM1) kontinuierlich oder diskontinuierlich zu trennen;
   wobei die erste Oberfläche (FA1) oder ein Teil derselben mit der Maische (MA) in Kontakt bringbar ist, wenn die Maische (MA) zum Trennen in die erste Würze (WO1) und die erste Restmaische (RM1) in der ersten Aufnahmeeinrichtung (AG1) vorhanden ist;
   wobei die erste Oberfläche (FA1) während des Betriebs der ersten Läutervorrichtung (LV1) zur in der ersten Aufnahmeeinrichtung (AG1) aufgenommenen Maische (MA), zur ersten Restmaische (RM1) und/oder zur ersten Aufnahmeeinrichtung (AG1) relativ beweglich oder bewegbar oder drehbar angeordnet ist;
   wobei die Brauanlage (OM) ferner eine zweite Vorrichtung (V2) umfasst, wobei die zweite Vorrichtung (V2) aufweist:
      eine erste Einrichtung (WK1) zum Einstellen der Temperatur, insbesondere zum Kühlen der Würze (WO) auf eine erste Temperatur (T1) zwischen 0 und 85 °C nach dem Abschluss des Heißhaltens oder Kochens der Würze (WO); und
      eine Einrichtung (AD) zum Zugeben wenigstens einer Portion (PES) eines enzymhaltigen Substrats (ES), vorzugsweise wenigstens einer Portion (PMA) einer Maische (MA) und/oder wenigstens einer Portion (PMAA) wenigstens eines Maischeauszugs (MAA) und/oder einer Portion (PVW) enthaltend eine nicht über 80 °C erwärmte, enzymhaltige Würze (WOE), vorzugsweise einer Portion (PVW) einer Vorderwürze (VW), vorzugsweise der ersten Würze (WO1), zu der nach dem Einstellen, insbesondere Kühlen, auf die erste Temperatur (T1) erhaltene Würze (WO);
      wobei die erste Einrichtung (WK1) zum Einstellen der Temperatur, insbesondere Kühlen, der Würze (WO) stromabwärts zu einer Einrichtung (WP) zum Heißhalten oder Kochen der Würze (WO) angeordnet ist; und
      wobei die Einrichtung (AD) stromabwärts zur ersten Einrichtung (WK1) zum Einstellen der Temperatur, insbesondere Kühlen, der Würze (WO) auf die erste Temperatur (T1) angeordnet ist.

Erfindungsgemäß kann die Würze (WO) aus der ersten Würze (WO1), der zweiten Würze (WO2), der dritten Würze (WO3), der vierten Würze (WO4) oder weiterer, in weiteren Trennschritten erzeugter Würzen bestehen oder diese enthalten. Bevorzugt ist die Würze (WO) ein Gemisch, enthaltend oder bestehend aus wenigstens zwei der ersten Würze (WO1), der zweiten Würze (WO2), der dritten Würze (WO3), der vierten Würze (WO4) oder weiterer, in weiteren Trennschritten erzeugter Würzen. Noch bevorzugter ist die Würze (WO) ein Gemisch enthaltend die erste Würze (WO1) und die zweite Würze (WO2), und vorzugsweise weitere Würzen (WO3, WO4, ...), insbesondere sofern weitere Trennschritte vorgesehen sind, oder bestehend aus diesen. Insbesondere ist die Würze (WO) ein Gemisch enthaltend die erste Würze (WO1), die zweite Würze (WO2), die dritte Würze (WO3), und die vierte Würze (WO4) oder bestehend aus diesen. Besonders bevorzugst ist, wenn die die Würze (WO) ein Gemisch enthaltend die erste Würze (WO1) und die zweite Würze (WO2) oder die erste Würze (WO1), die zweite Würze (WO2) und die dritte Würze (WO3) ist, oder aus diesen Würzen besteht.

Bevorzugt werden daher alle oder eine Auswahl der in der Brauanlage (OM), vorzugsweise in der Läutervorrichtung (LV), erzeugten Würzen (WO1, WO2, WO3, ...) in dem Volumenverhältnis, in dem die jeweiligen Würzen im Prozess anfallen oder in einem beliebigen anderen Volumenverhältnis, vereinigt und vorzugsweise homogenisiert, woraus die Würze (WO) entsteht, welche dann in den weiteren Teilvorrichtungen oder Teilverfahren der Erfindung weiterverarbeitet wird.

Die erste Einrichtung (WK1) kann jede geeignete und dem Fachmann bekannte Vorrichtung sein, mit der die Temperatur einer Suspension oder eines Fluids auf eine vorgegebene Temperatur eingestellt werden kann, vorzugsweise ein Würzekühler, insbesondere ein Plattenkühler.

Die Einrichtung (AD) zum Zugeben wenigstens einer Portion (PES) eines enzymhaltigen Substrats (ES) kann jede geeignete und dem Fachmann bekannte Vorrichtung sein, mit der eine Suspension oder ein Fluid zugegeben oder dosiert werden kann, vorzugsweise eine Dosierpumpe.

Bei der erfindungsgemäßen Brauanlage (OM) kann die wenigstens eine erste Trennvorrichtung (LT1) derart in der ersten Läutervorrichtung (LV1) angeordnet sein, dass durch die Ausführung der relativen Bewegung oder Drehbewegung der Kontakt der ersten Oberfläche (FA1) oder einer Teilfläche derselben mit der in der ersten Aufnahmeeinrichtung (AG1) vorhandenen Maische (MA) zeitweise unterbrechbar und nach erfolgter Unterbrechung wiederherstellbar ist;
wobei das Unterbrechen und Wiederherstellen des Kontakts der ersten Oberfläche (FA1) oder eines Teils derselben mit der Maische (MA) vorzugsweise wiederholbar ist.

Bei der erfindungsgemäßen Brauanlage (OM) kann die wenigstens eine erste Trennvorrichtung (LT1) derart in der ersten Läutervorrichtung (LV1) angeordnet sein, dass durch die Ausführung der relativen Bewegung oder Drehbewegung die Oberfläche (FA) oder eine Teilfläche derselben die Maische (MA) im Bereich des Maischespiegels oder am Maischespiegel oder im Bereich der Maischeoberfläche oder an der Maischeoberfläche verlässt, dort aus der Maische (MA) austritt oder der Kontakt zur Maische (MA) dort unterbrochen wird, wobei die Bewegungsrichtung der ersten Oberfläche (FA1), betrachtet im Bereich des Maischespiegels oder am Maischespiegel, mit dem Maischespiegel oder der Maischeoberfläche oder der Horizontalen einem Winkel von 30 bis 90 °, vorzugsweise 45 bis 90 °, vorzugsweise 60 bis 90 °, vorzugsweise 70 bis 90 °, vorzugsweise 80 bis 90 °, vorzugsweise 85 bis 90 °, vorzugsweise 87 bis 90 °, insbesondere 90°, einschließt.

Bei der erfindungsgemäßen Brauanlage (OM) kann die erste Läutervorrichtung (LV1), insbesondere die wenigstens eine erste Trennvorrichtung (LT1), mittels einer Steuervorrichtung (C) derart steuerbar sein, dass eine relative Bewegung oder Drehbewegung der ersten Oberfläche (FA1) während der gesamten Dauer des Trennens der Maische (MA) oder der Restmaische (RM) erfolgt.

Bei der erfindungsgemäßen Brauanlage (OM) kann die wenigstens eine erste Trennvorrichtung (LT1) derart zur ersten Aufnahmeeinrichtung (AG1) angeordnet sein, dass während des Betriebs der ersten Läutervorrichtung (LV1) zum Trennen der Maische (MA) die erste Oberfläche (FA1) zu einem Anteil im Bereich von 1 bis 95 %, vorzugsweise 5 bis 25 %, vorzugsweise 5 bis 20 %, vorzugsweise 5 bis 15 %, vorzugsweise 5 bis 10 %, vorzugsweise 5 bis 95 %, vorzugsweise 10 bis 90 %, vorzugsweise 15 bis 80 %, vorzugsweise 20 bis 80 %, vorzugsweise 20 bis 70 %, vorzugsweise 20 bis 60 %, vorzugsweise 20 bis 50 %, vorzugsweise 20 bis 40 %, vorzugsweise 30 bis 40 %, insbesondere 20 bis 30 %, von der Maische (MA) bedeckt ist oder in die Maische (MA) eintaucht, wenn die Maische (MA) in der ersten Aufnahmeeinrichtung (AG1) vorhanden ist; und
kann die erste Oberfläche (FA1) im Umfang des restlichen Anteils vorzugsweise in einen ersten gasgefüllten Raum (GR1) oberhalb der Maische (MA) angeordnet sein oder darin hineinragen.

Bei der erfindungsgemäßen Brauanlage (OM) können die Öffnungen (OP) eine Größe oder Porengröße oder Maschenweite im Bereich von 5 bis 10.000 µm, vorzugsweise 10 bis 1.000 µm, vorzugsweise 10 bis 500 µm, vorzugsweise 20 bis 400 µm, vorzugsweise 25 bis 500 µm, vorzugsweise 30 bis 300 µm, vorzugsweise 40 bis 250 µm, vorzugsweise 45 bis 350 µm, vorzugsweise 45 bis 200 µm, vorzugsweise 45 bis 100 µm, vorzugsweise 55 bis 300 µm, insbesondere 65 bis 250 µm, aufweisen.

Bei der erfindungsgemäßen Brauanlage (OM) kann die erste Trennvorrichtung (LT1) als eine Trennvorrichtung mit einer drehbar gelagerten Welle oder mit einer drehbar gelagerten ersten Oberfläche (FA1) oder als drehbar gelagerte Trennvorrichtung oder drehbar gelagertes Filter ausgeführt sein; und/oder
kann die erste Trennvorrichtung (LT1) in scheibenförmiger oder zylindrischer Gestalt, oder in im Wesentlichen scheibenförmiger oder zylindrischer Gestalt ausgebildet sein; und/oder
kann die Grundfläche und/oder die Mantelfläche der ersten Trennvorrichtung (LT1) teilweise oder vollständig als Trenn- oder Filterfläche, insbesondere als die Oberfläche (FA), ausgebildet sein; und/oder
kann die erste Trennvorrichtung (LT1) derart in der ersten Läutervorrichtung (LV1) angeordnet sein, dass die Mittelachse oder eine Drehachse der ersten Trennvorrichtung (LT1) oder der Oberfläche (FA) im Wesentlichen parallel zum Flüssigkeitsspiegel einer in die erste Aufnahmeeinrichtung (AG1) der ersten Läutervorrichtung (LV1) eingefüllten Flüssigkeit angeordnet ist, oder die Mittelachse oder eine Drehachse der wenigstens ersten Trennvorrichtung (LT1) oder der ersten Oberfläche (FA1) mit dem Flüssigkeitsspiegel einer in die erste Aufnahmeeinrichtung (AG1) der ersten Läutervorrichtung (LV1) eingefüllten Flüssigkeit oder mit der Horizontalen einen Winkel mit einem Betrag im Bereich von 0 bis < 90 °, vorzugsweise 0 bis 45 °, vorzugsweise 0 bis 30 °, vorzugsweise 0 bis 20 °, vorzugsweise 0 bis 15 °, vorzugsweise 0 bis 10 °, insbesondere 0 bis 5 °, einschließt.

Bei der erfindungsgemäßen Brauanlage (OM) kann die relative Bewegung oder Drehbewegung der ersten Oberfläche (FA1) ununterbrochen oder zeitweise, insbesondere in regelmäßigen zeitlichen Intervallen, erfolgen.

Bei der erfindungsgemäßen Brauanlage (OM) kann die erste Läutervorrichtung (LV1) wenigstens einen Strömungsweg ausbilden; und/oder
der wenigstens eine Strömungsweg von einer Flüssigkeit, insbesondere von der Maische (MA), schwerkraftgetrieben durchströmbar sein.

Bei der erfindungsgemäßen Brauanlage (OM) kann die erste Oberfläche (FA1) als eine ebene oder plane Fläche oder als eine Fläche ausgebildet sein, die eine zur Maische (MA) konvex oder konkav gewölbte oder wellenförmige oder zickzackförmige Kontur aufweist; und/oder
kann die wenigstens eine erste Trennvorrichtung (LT1), vorzugsweise die erste Oberfläche (FA1), wenigstens einen Vorsprung (VO) aufweisen;
wobei der wenigstens eine Vorsprung (VO) derart angeordnet ist, dass er mit der Maische in Kontakt bringbar ist;
wobei der wenigstens eine Vorsprung (VO) geeignet ist, aus der Maische (MA) stammende Feststoffpartikeln in der Maische (MA) zu bewegen oder mitzunehmen und vorzugsweise aus der Maische (MA) und/oder aus der ersten Aufnahmeeinrichtung (AG1) auszutragen;
wobei der wenigstens eine Vorsprung (VO) vorzugsweise eine Gestalt nach Art eines Stegs, Paddels, Sterns, einer Rinne oder einer Tasche aufweist.

Bei der erfindungsgemäßen Brauanlage (OM) kann die erste Läutervorrichtung (LV1) zwei erste Trennvorrichtungen (LT11, LT12) aufweisen;
wobei die zwei ersten Trennvorrichtungen (LT11, LT12) jeweils als eine Trennvorrichtung mit einer drehbar gelagerten Welle oder als drehbar gelagerte Trennvorrichtung oder drehbar gelagertes Filter ausgeführt sind; und/oder wobei die zwei ersten Trennvorrichtungen (LT11, LT12) jeweils derart in der ersten Läutervorrichtung (LV1) angeordnet sind, dass die Mittelachse oder eine Drehachse von jeder der zwei ersten Trennvorrichtungen (LT11, LT12) oder ihrer zwei ersten Oberflächen (FA11, FA12) im Wesentlichen parallel zum Flüssigkeitsspiegel einer in die erste Aufnahmeeinrichtung (AG1) der ersten Läutervorrichtung (V1) eingefüllten Flüssigkeit angeordnet ist, oder die Mittelachse oder eine Drehachse von jeder der zwei ersten Trennvorrichtungen (LT11, LT12) oder ihrer jeweiligen ersten Oberflächen (FA11, FA12) mit dem Flüssigkeitsspiegel einer in die erste Aufnahmeeinrichtung (AG1) der ersten Läutervorrichtung (LV1) eingefüllten Flüssigkeit oder mit der Horizontalen einen Winkel mit einem Betrag im Bereich von 0 bis < 90 °, vorzugsweise 0 bis 45 °, vorzugsweise 0 bis 30°, vorzugsweise 0 bis 20°, vorzugsweise 0 bis 15 °, vorzugsweise 0 bis 10 °, insbesondere 0 bis 5 °, einschließt; und/oder
wobei die zwei ersten Trennvorrichtungen (LT11, LT12) in der ersten Läutervorrichtung (LV1) und derart zueinander angeordnet sind, dass die Mittelachsen oder eine Drehachse jeder der zwei ersten Trennvorrichtungen (LT11, LT12) oder ihrer ersten Oberflächen (FA11, FA12) einen Winkel mit einem Betrag im Bereich von 0 bis < 90 °, vorzugsweise 0 bis 45 °, vorzugsweise 0 bis 30 °, vorzugsweise 0 bis 20°, vorzugsweise 0 bis 15 °, vorzugsweise 0 bis 10 °, insbesondere 0 bis 5 °, einschließen; und/oder
wobei die zwei ersten Trennvorrichtungen (LT11, LT12) eine identische Mittelachse oder Drehachse aufweisen oder ihre Mittelachsen oder Drehachsen kollinear in der ersten Läutervorrichtung (LV1) angeordnet sind; und/oder wobei die zwei ersten Trennvorrichtungen (LT11, LT12) eine gemeinsame Drehwelle aufweisen; und/oder
wobei die zwei ersten Trennvorrichtungen (LT11, LT12) derart in der ersten Läutervorrichtung (LV1) angeordnet sind, dass der größte, vorzugsweise parallel zur Drehwelle oder als Normalabstand gemessene Abstand zwischen den beiden Oberflächen (FA1, FA2) der zwei ersten Trennvorrichtungen (LT11, LT12) im Bereich von > 2 cm bis 100 cm, vorzugsweise 3 bis 50 cm, vorzugsweise 4 bis 30 cm, vorzugsweise 5 bis 25 cm, vorzugsweise 10 bis 30 cm, insbesondere 10 bis 20 cm, ist; und/oder
der kleinste, vorzugsweise parallel zur Drehwelle oder als Normalabstand gemessene Abstand zwischen den beiden ersten Oberflächen (FA11, FA12) der zwei ersten Trennvorrichtungen (LT11, LT12) im Bereich von > 2 cm bis 100 cm, vorzugsweise 3 bis 50 cm, vorzugsweise 4 bis 30 cm, vorzugsweise 5 bis 25 cm, vorzugsweise 10 bis 30 cm, insbesondere 10 bis 20 cm, ist.

Bei der erfindungsgemäßen Brauanlage (OM) kann die wenigstens eine erste Trennvorrichtung (LT1) derart in der ersten Läutervorrichtung (LV1) angeordnet sein, dass der größte, vorzugsweise als Normalabstand gemessene Abstand zwischen der wenigstens einen ersten Oberfläche (FA1) und einer Wand der ersten Läutervorrichtung (LV1), vorzugsweise der ersten Aufnahmeeinrichtung (AG1), im Bereich von > 2 bis 100 cm, vorzugsweise 3 bis 50 cm, vorzugsweise 4 bis 30 cm, vorzugsweise 5 bis 25 cm, vorzugsweise 10 bis 30 cm, insbesondere 10 bis 20 cm, ist; und/oder
der kleinste, vorzugsweise als Normalabstand gemessene Abstand zwischen der wenigstens einen ersten Oberfläche (FA1) und einer Wand der ersten Läutervorrichtung (LV1), vorzugsweise der ersten Aufnahmeeinrichtung (AG1), im Bereich von > 2 bis 100 cm, vorzugsweise 3 bis 50 cm, vorzugsweise 4 bis 30 cm, vorzugsweise 5 bis 25 cm, vorzugsweise 10 bis 30 cm, insbesondere 10 bis 20 cm, ist.

Bei der erfindungsgemäßen Brauanlage (OM) kann die erste Läutervorrichtung (LV1) aufweisen:
eine wannenartige erste Aufnahmeeinrichtung (AG1) zum Aufnehmen der Maische (MA);
wenigstens eine erste Trennvorrichtung (LT1), vorzugsweise zwei erste Trennvorrichtungen (LT11, LT12), mit jeweils einer ersten Oberfläche (FA1; FA11, FA12);
wobei die wenigstens eine erste Trennvorrichtung (LT1) jeweils als drehbar gelagertes, scheibenförmiges oder zylindrisches Filter ausgebildet ist;
wobei die wenigstens eine erste Oberfläche (FA1) jeweils die Grundfläche der jeweiligen wenigstens einen ersten Trennvorrichtung (LT1) oder ein Teil davon ist; wobei die erste Oberfläche (FA1) jeweils als ebene oder im Wesentlichen ebene Filterfläche mit einer Vielzahl von Öffnungen (OP) ausgebildet ist;
wobei die erste Läutervorrichtung (LV1) vorzugsweise geeignet ist, mittels der ersten Oberfläche (FA1) die Maische (MA) in die erste Würze (WO1) und die erste Restmaische (RM1) kontinuierlich oder diskontinuierlich zu trennen;
wobei die jeweilige Drehachse der wenigstens einen ersten Trennvorrichtung (LT1) senkrecht oder im Wesentlichen senkrecht zur jeweiligen ersten Oberfläche (FA1) angeordnet ist;
wobei die jeweilige Drehachse der wenigstens einen ersten Trennvorrichtung (LT1) mit dem Flüssigkeitsspiegel einer in die erste Aufnahmeeinrichtung (AG1) eingefüllten Flüssigkeit oder mit der Horizontalen einen Winkel mit einem Betrag im Bereich von 0 bis 20°, vorzugsweise 0 bis 15 °, vorzugsweise 0 bis 10°, insbesondere 0 bis 5 °, einschließt;
wobei bei Vorhandensein von zwei ersten Trennvorrichtungen (LT11, LT12) diese derart in der ersten Läutervorrichtung (LV1) angeordnet sind, dass der Normalabstand zwischen den beiden ersten Oberflächen (FA11, FA12) der beiden ersten Trennvorrichtungen (LT11, LT12) im Bereich von 3 bis 50 cm, vorzugsweise 4 bis 30 cm, vorzugsweise 5 bis 25 cm, vorzugsweise 10 bis 30 cm, insbesondere 10 bis 20 cm, ist; und
wobei die wenigstens eine erste Trennvorrichtung (LT1) derart zur ersten Aufnahmeeinrichtung (AG1) angeordnet ist, dass während des Betriebs der ersten Läutervorrichtung (LV1) zum Trennen der Maische (MA) die erste Oberfläche (FA1) zu einem Anteil im Bereich von 1 bis 80 %, vorzugsweise 5 bis 25 %, vorzugsweise 5 bis 20 %, vorzugsweise 5 bis 15 %, vorzugsweise 5 bis 10 %, vorzugsweise 15 bis 80 %, vorzugsweise 20 bis 80 %, vorzugsweise 20 bis 70 %, vorzugsweise 20 bis 60 %, vorzugsweise 20 bis 50 %, vorzugsweise 20 bis 40 %, vorzugsweise 30 bis 40 %, insbesondere 20 bis 30 %, von der Maische (MA) bedeckt ist oder in die Maische (MA) eintaucht, wenn die Maische (MA) in der ersten Aufnahmeeinrichtung (AG1) vorhanden ist; und
die erste Oberfläche (FA1) im Umfang des restlichen Anteils im ersten gasgefüllten Raum (GR1) oberhalb der Maische (MA) angeordnet ist oder darin hineinragt;
wobei die erste Oberfläche (FA1) oder ein Teil derselben mit der Maische (MA) in Kontakt bringbar ist, wenn die Maische (MA) zum Trennen in die erste Würze (WO1) und die erste Restmaische (RM1) in der ersten Aufnahmeeinrichtung (AG1) vorhanden ist;
wobei die erste Oberfläche (FA1) während des Betriebs der ersten Läutervorrichtung (LV1) zur Maische (MA), zur ersten Restmaische (RM1) und/oder zur ersten Aufnahmeeinrichtung (AG1) relativ beweglich oder bewegbar oder drehbar angeordnet ist.

Bei der erfindungsgemäßen Brauanlage (OM) kann die erste Läutervorrichtung (LV1), insbesondere die erste Trennvorrichtung (LT1), mittels einer ersten Steuervorrichtung (C1) derart steuerbar sein, dass eine relative Bewegung oder Drehbewegung der wenigstens einen ersten Oberfläche (FA1) während der gesamten Dauer des Trennens der Maische (MA) erfolgt.

Bei der erfindungsgemäßen Brauanlage (OM) kann die erste Trennvorrichtung (LT1) derart zur ersten Aufnahmeeinrichtung (AG1) angeordnet sein, dass während des Betriebs der ersten Läutervorrichtung (LV1) zum Trennen der Maische (MA) die wenigstens eine erste Oberfläche (FA1) jeweils zu einem Anteil im Bereich von 1 bis 95 %, vorzugsweise 5 bis 95 %, vorzugsweise 5 bis 25 %, vorzugsweise 5 bis 20 %, vorzugsweise 5 bis 15 %, insbesondere 5 bis 10 %, von der Maische (MA) bedeckt ist oder in die Maische (MA) eintaucht, wenn die Maische (MA) in der ersten Aufnahmeeinrichtung (AG1) vorhanden ist; und
kann die wenigstens eine erste Oberfläche (FA1) im Umfang des restlichen Anteils vorzugsweise im ersten gasgefüllten Raum (GR1) oberhalb der Maische (MA) angeordnet sein oder darin hineinragen.

Bei der erfindungsgemäßen Brauanlage (OM) kann die Brauanlage (OM) ferner aufweisen:
wenigstens eine zweite Läutervorrichtung (LV2), wobei die zweite Läutervorrichtung (LV2) vorzugsweise eine Gestalt aufweist, welche identisch ist zur ersten Läutervorrichtung (LV1), wie sie vorstehend definiert ist;
wobei die zweite Läutervorrichtung (LV2) eine zweite Aufnahmeeinrichtung (AG2), vorzugsweise ein Aufnahmegefäß, zum Aufnehmen der ersten Restmaische (RM1) oder eines Gemischs enthaltend die erste Restmaische (RM1), aufweist;
wobei die zweite Läutervorrichtung (LV2) wenigstens eine zweite Trennvorrichtung (LT2) mit wenigstens einer zweiten Oberfläche (FA2) aufweist;
wobei die wenigstens eine zweite Oberfläche (FA2) eine Vielzahl von Öffnungen (OP) aufweist;
wobei die zweite Läutervorrichtung (LV2) vorzugsweise geeignet ist, mittels der wenigstens einen zweiten Oberfläche (FA2) der wenigstens einen zweiten Trennvorrichtung (LT2) eine erste Restmaische (RM1) in eine zweite Würze (WO2), insbesondere einen ersten Nachguss (NG1), und eine zweite Restmaische (RM2) kontinuierlich oder diskontinuierlich zu trennen;
wobei die wenigstens eine zweite Oberfläche (FA2) mit der ersten Restmaische (RM1) in Kontakt bringbar ist, wenn die erste Restmaische (RM1) zum Trennen in die zweite Würze (WO2) und die zweite Restmaische (RM2) in der zweiten Aufnahmeeinrichtung (AG2) vorhanden ist;
wobei die wenigstens eine zweite Oberfläche (FA2) während des Betriebs der zweiten Läutervorrichtung (LV2) zur ersten Restmaische (RM1), zur zweiten Restmaische (RM2) und/oder zur zweiten Aufnahmeeinrichtung (AG2) relativ beweglich oder bewegbar oder drehbar angeordnet ist; und
wobei die zweite Läutervorrichtung (LV2), insbesondere die wenigstens eine zweite Trennvorrichtung (LT2), mittels einer zweiten Steuervorrichtung (C2) vorzugsweise derart steuerbar ist, dass die relative Bewegung der wenigstens einen zweiten Oberfläche (FA2) während der gesamten Dauer des Trennens der ersten Restmaische (RM1) ununterbrochen oder zeitweise, insbesondere in regelmäßigen zeitlichen Intervallen, erfolgt; und
wobei die Brauanlage (OM), vorzugsweise die zweite Läutervorrichtung (LV2), vorzugsweise eine erste Einrichtung (WZ1) zum Zuführen von Wasser oder einer verdünnten Würze, vorzugsweise einer dritten Würze (WO3), aufweist.

Bei der erfindungsgemäßen Brauanlage (OM) kann die wenigstens eine zweite Trennvorrichtung (LT2) derart zur zweiten Aufnahmeeinrichtung (AG2) angeordnet sein, dass die wenigstens eine zweite Oberfläche (FA2) während des Betriebs der zweiten Läutervorrichtung (LV2) zum Trennen der ersten Restmaische (RM1) jeweils zu einem Anteil im Bereich von 1 bis 95 %, vorzugsweise 5 bis 95 %, vorzugsweise 5 bis 25 %, vorzugsweise 5 bis 20 %, vorzugsweise 5 bis 15 %, insbesondere 5 bis 10 %, von der ersten Restmaische (RM1) bedeckt ist oder in die erste Restmaische (RM1) eintaucht, wenn die erste Restmaische (RM1) in der zweiten Aufnahmeeinrichtung (AG2) vorhanden ist; und
der restliche Anteil der wenigstens einen zweiten Oberfläche (FA2) vorzugsweise in einem zweiten gasgefüllten Raum (GR2) angeordnet ist oder darin hineinragt, wobei der zweite gasgefüllten Raum (GR2) über oder oberhalb der ersten Restmaische (RM1) angeordnet ist.

Bei der erfindungsgemäßen Brauanlage (OM) kann die Brauanlage (OM) ferner aufweisen:
wenigstens eine dritte Läutervorrichtung (LV3), wobei die dritte Läutervorrichtung (LV3) vorzugsweise eine Gestalt aufweist, welche identisch ist zur ersten Läutervorrichtung (LV1), wie sie vorstehend definiert ist;
wobei die dritte Läutervorrichtung (LV3) eine dritte Aufnahmeeinrichtung (AG3), vorzugsweise ein Aufnahmegefäß, zum Aufnehmen der zweiten Restmaische (RM2) oder eines Gemischs enthaltend die zweite Restmaische (RM2), aufweist;
wobei die dritte Läutervorrichtung (LV3) wenigstens eine dritte Trennvorrichtung (LT3) mit wenigstens einer dritten Oberfläche (FA3) aufweist;
wobei die wenigstens eine dritte Oberfläche (FA3) eine Vielzahl von Öffnungen (OP) aufweist;
wobei die dritte Läutervorrichtung (LV3) vorzugsweise geeignet ist, mittels der wenigstens einen dritten Oberfläche (FA3) der wenigstens einen dritten Trennvorrichtung (LT3) eine zweite Restmaische (RM2) in eine dritte Würze (WO3), insbesondere einen zweiten Nachguss (NG2), und eine dritte Restmaische (RM3) kontinuierlich oder diskontinuierlich zu trennen;
wobei die wenigstens eine dritte Oberfläche (FA3) jeweils mit der zweiten Restmaische (RM2) in Kontakt bringbar ist, wenn die zweite Restmaische (RM2) zum Trennen in die dritte Würze (WO3) und die dritte Restmaische (RM3) in der dritten Aufnahmeeinrichtung (AG3) vorhanden ist;
wobei die wenigstens eine dritte Oberfläche (FA3) während des Betriebs der dritten Läutervorrichtung (LV3) jeweils zur zweiten Restmaische (RM2), zur dritten Restmaische (RM3) und/oder zur dritten Aufnahmeeinrichtung (AG3) relativ beweglich oder bewegbar oder drehbar angeordnet ist; und
wobei die dritte Läutervorrichtung (LV3), insbesondere die wenigstens eine dritte Trennvorrichtung (LT3), mittels einer dritten Steuervorrichtung (C3) vorzugsweise derart steuerbar ist, dass die relative Bewegung der wenigstens einen dritten Oberfläche (FA3) während der gesamten Dauer des Trennens der zweiten Restmaische (RM2) ununterbrochen oder zeitweise, insbesondere in regelmäßigen zeitlichen Intervallen, erfolgt; und
wobei die Brauanlage, vorzugsweise die dritte Läutervorrichtung (LV3), vorzugsweise eine zweite Einrichtung (WZ2) zum Zuführen von Wasser oder einer verdünnten Würze, vorzugsweise einer vierten Würze (WO4), aufweist.

Bei der erfindungsgemäßen Brauanlage (OM) kann die wenigstens eine dritte Trennvorrichtung (LT3) jeweils derart zur dritten Aufnahmeeinrichtung (AG3) angeordnet sein, dass die wenigstens eine dritte Oberfläche (FA3) während des Betriebs der dritten Läutervorrichtung (LV3) zum Trennen der zweiten Restmaische (RM2) jeweils zu einem Anteil im Bereich von 1 bis 95 %, vorzugsweise 5 bis 95 %, vorzugsweise 5 bis 25 %, vorzugsweise 5 bis 20 %, vorzugsweise 5 bis 15 %, insbesondere 5 bis 10 % von der zweiten Restmaische (RM2) bedeckt ist oder in die zweite Restmaische (RM2) eintaucht, wenn die zweite Restmaische (RM2) in der dritten Aufnahmeeinrichtung (AG3) vorhanden ist; und
der restliche Anteil der wenigstens einen dritten Oberfläche (FA3) jeweils vorzugsweise in einem dritten gasgefüllten Raum (GR3) angeordnet ist oder darin hineinragt, wobei der dritte gasgefüllten Raum (GR3) über oder oberhalb der zweiten Restmaische (RM2) angeordnet ist.

Bei der erfindungsgemäßen Brauanlage (OM) kann die Brauanlage (OM) ferner aufweisen:
eine vierte Läutervorrichtung (LV4), wobei die vierte Läutervorrichtung (LV4) vorzugsweise eine Gestalt aufweist, welche identisch ist zur ersten Läutervorrichtung (LV1), wie sie vorstehend definiert ist;
wobei die vierte Läutervorrichtung (LV4) eine vierte Aufnahmeeinrichtung (AG4), vorzugsweise ein Aufnahmegefäß, zum Aufnehmen der dritten Restmaische (RM3) oder eines Gemischs enthaltend die dritte Restmaische (RM3), aufweist;
wobei die vierte Läutervorrichtung (LV4) wenigstens eine vierte Trennvorrichtung (LT4) mit jeweils wenigstens einer vierten Oberfläche (FA4) aufweist;
wobei die wenigstens eine vierte Oberfläche (FA4) eine Vielzahl von Öffnungen (OP) aufweist;
wobei die vierte Läutervorrichtung (LV4) vorzugsweise geeignet ist, mittels der wenigstens einen vierten Oberfläche (FA4) der wenigstens einen vierten Trennvorrichtung (LT4) eine dritte Restmaische (RM3) in eine vierte Würze (WO4), insbesondere einen dritten Nachguss (NG3), und eine vierte Restmaische (RM4), insbesondere Treber, kontinuierlich oder diskontinuierlich zu trennen;
wobei die wenigstens eine vierte Oberfläche (FA4) jeweils mit der dritten Restmaische (RM3) in Kontakt bringbar ist, wenn die dritte Restmaische (RM3) zum Trennen in die vierte Würze (WO4) und die vierte Restmaische (RM4) in der vierten Aufnahmeeinrichtung (AG4) vorhanden ist;
wobei die wenigstens eine vierte Oberfläche (FA4) während des Betriebs der vierten Läutervorrichtung (LV4) zur dritten Restmaische (RM3), zur vierten Restmaische (RM4) und/oder zur vierten Aufnahmeeinrichtung (AG4) relativ beweglich oder bewegbar oder drehbar angeordnet ist; und
wobei die vierte Läutervorrichtung (LV4), insbesondere die wenigstens eine vierte Trennvorrichtung (LT4), mittels einer vierten Steuervorrichtung (C4) vorzugsweise derart steuerbar ist, dass die relative Bewegung der wenigstens einen vierten Oberfläche (FA4) während der gesamten Dauer des Trennens der dritten Restmaische (RM3) ununterbrochen oder zeitweise, insbesondere in regelmäßigen zeitlichen Intervallen, erfolgt; und
wobei die Brauanlage, vorzugsweise die vierte Läutervorrichtung (LV4), vorzugsweise wenigstens eine dritte Einrichtung (WZ3) zum Zuführen von Wasser oder einer verdünnten Würze, aufweist.

Bei der erfindungsgemäßen Brauanlage (OM) kann die wenigstens eine vierte Trennvorrichtung (LT4) jeweils derart zur vierten Aufnahmeeinrichtung (AG4) angeordnet sein, dass die wenigstens eine vierte Oberfläche (FA4) während des Betriebs der vierten Läutervorrichtung (LV4) zum Trennen der dritten Restmaische (RM3) jeweils zu einem Anteil im Bereich von 1 bis 95 %, vorzugsweise 5 bis 95 %, vorzugsweise 5 bis 25 %, vorzugsweise 5 bis 20 %, vorzugsweise 5 bis 15 %, insbesondere 5 bis 10 % von der dritten Restmaische (RM3) bedeckt ist oder in die dritte Restmaische (RM3) eintaucht, wenn die dritte Restmaische (RM3) in der vierten Aufnahmeeinrichtung (AG4) vorhanden ist; und
der restliche Anteil der wenigstens einen vierten Oberfläche (FA4) vorzugsweise in einem vierten gasgefüllten Raum (GR4) angeordnet ist oder darin hineinragt, wobei der vierte gasgefüllten Raum (GR4) über oder oberhalb der dritten Restmaische (RM3) angeordnet ist.

Ferner kann die erfindungsgemäße Brauanlage (OM) eine erste Einrichtung (WZ1), eine zweite Einrichtung (WZ2) und/oder eine dritte Einrichtung (WZ3) jeweils zum Zuführen von Wasser oder einer verdünnten Würze aufweisen; und
wobei die erste Einrichtung (WZ1) vorzugsweise derart in der Brauanlage (OM) angeordnet ist, dass das Wasser oder die verdünnte Würze der Maische (MA) oder der ersten Restmaische (RM1) in der ersten Läutervorrichtung (LV1) und/oder stromabwärts zur ersten Läutervorrichtung (LV1) und stromaufwärts zur zweiten Läutervorrichtung (LV2) und/oder in der zweiten Läutervorrichtung (LV2), zugeführt wird; und/oder
wobei die zweite Einrichtung (WZ2) vorzugsweise derart in der Brauanlage (OM) angeordnet ist, dass das Wasser oder die verdünnte Würze der zweiten Restmaische (RM2) in der zweiten Läutervorrichtung (LV2) und/oder stromabwärts zur zweiten Läutervorrichtung (LV2) und stromaufwärts zur dritten Läutervorrichtung (LV3) und/oder in der dritten Läutervorrichtung (LV3) zugeführt wird; und/oder
wobei die dritte Einrichtung (WZ3) vorzugsweise derart in der Brauanlage (OM) angeordnet ist, dass das Wasser oder die verdünnte Würze einer dritten Restmaische (RM3) in der dritten Läutervorrichtung (LV3) und/oder stromabwärts zur dritten Läutervorrichtung (LV3) und stromaufwärts zu einer vierten Läutervorrichtung (LV4) und/oder in der vierten Läutervorrichtung (LV4) zugeführt wird.

Bei der erfindungsgemäßen Brauanlage (OM) kann die erste Einrichtung (WZ 1), die zweite Einrichtung (WZ2) und/oder die dritte Einrichtung (WZ3) jeweils als Auslassöffnung, vorzugsweise als Düse, insbesondere als Flachstrahldüse, Sprühkopf, oder Sprühkugel, ausgebildet sein.

Bei der erfindungsgemäßen Brauanlage (OM) kann wenigstens eine Trennvorrichtung (LT), ausgewählt aus der Gruppe, bestehend aus der wenigstens einen ersten Trennvorrichtung (LT1), der wenigstens einen zweiten Trennvorrichtung (LT2), der wenigstens einen dritten Trennvorrichtung (LT3) und der wenigstens einen vierten Trennvorrichtung (LT4), als eine Trennvorrichtung mit einer jeweils drehbar gelagerten Trenn- oder Filterfläche, insbesondere mit einer jeweils drehbar gelagerten Oberfläche (FA1, FA2, FA3, FA4), oder jeweils als drehbar gelagerte Trennvorrichtung oder drehbar gelagertes Filter ausgeführt sein; und/oder
kann die wenigstens eine Trennvorrichtung (LT), ausgewählt aus der Gruppe, bestehend aus der wenigstens einen ersten Trennvorrichtung (LT1), der wenigstens einen zweiten Trennvorrichtung (LT2), der wenigstens einen dritten Trennvorrichtung (LT3) und der wenigstens einen vierten Trennvorrichtung (LT4), jeweils in scheibenförmiger oder zylindrischer Gestalt, oder in im Wesentlichen scheibenförmiger oder zylindrischer Gestalt ausgebildet sein; und/oder
kann die Grundfläche und/oder die Mantelfläche der jeweiligen wenigstens einen Trennvorrichtung (LT) oder eines Teils der wenigstens einen Trennvorrichtung (LT) teilweise oder vollständig als Trenn- oder Filterfläche, insbesondere als die erste Oberfläche (FA1) oder die zweite Oberfläche (FA2) oder die dritte Oberfläche (FA3) oder die vierte Oberfläche (FA4), ausgebildet sein; und/oder
kann die wenigstens eine Trennvorrichtung (LT), ausgewählt aus der Gruppe, bestehend aus der wenigstens einen ersten Trennvorrichtung (LT1), der wenigstens einen zweiten Trennvorrichtung (LT2), der wenigstens einen dritten Trennvorrichtung (LT3) und der wenigstens einen vierten Trennvorrichtung (LT4), derart in der Brauanlage angeordnet sein, dass die Mittelachse oder eine Drehachse der wenigstens einen Trennvorrichtung (LT) im Wesentlichen parallel zum Flüssigkeitsspiegel einer in die jeweilige erste, zweite, dritte oder vierte Aufnahmeeinrichtung (AG1, AG2, AG3, AG4) der jeweiligen ersten, zweiten, dritten oder vierten Läutervorrichtung (LV1, LV2, LV3, LV4) eingefüllten Flüssigkeit angeordnet ist oder die Mittelachse oder eine Drehachse der wenigstens einen Trennvorrichtung (LT) oder seiner jeweiligen ersten, zweiten, dritten oder vierten Oberfläche (FA1, FA2, FA3, FA4) jeweils mit dem Flüssigkeitsspiegel einer in die jeweilige erste, zweite, dritte oder vierte Aufnahmeeinrichtung (AG1, AG2, AG3, AG4) der jeweiligen ersten, zweiten, dritten oder vierten Läutervorrichtung (LV1, LV2, LV3, LV4) eingefüllten Flüssigkeit oder mit der Horizontalen einen Winkel mit einem Betrag im Bereich von 0 bis < 90 °, vorzugsweise 0 bis 45 °, vorzugsweise 0 bis 30 °, vorzugsweise 0 bis 20 °, vorzugsweise 0 bis 15 °, vorzugsweise 0 bis 10 °, insbesondere 0 bis 5 °, einschließt.

Bei der erfindungsgemäßen Brauanlage (OM) können die Öffnungen (OP) eine Größe oder Porengröße oder Maschenweite im Bereich von 5 bis 10.000 µm, vorzugsweise 10 bis 1.000 µm, vorzugsweise 10 bis 500 µm, vorzugsweise 20 bis 400 µm, vorzugsweise 25 bis 500 µm, vorzugsweise 30 bis 300 µm, vorzugsweise 40 bis 250 µm, vorzugsweise 45 bis 350 µm, vorzugsweise 45 bis 200 µm, vorzugsweise 55 bis 300 µm, vorzugsweise 45 bis 100 µm, insbesondere 65 bis 250 µm, aufweisen.

Bei der erfindungsgemäßen Brauanlage (OM) kann die relative Bewegung oder Drehbewegung der wenigstens einen ersten Oberfläche (FA1), der wenigstens einen zweiten Oberfläche (FA2), der wenigstens einen dritten Oberfläche (FA3) und/oder der wenigstens einen vierten Oberfläche (FA4) ununterbrochen oder zeitweise, insbesondere in regelmäßigen zeitlichen Intervallen, erfolgen.

Bei der erfindungsgemäßen Brauanlage (OM) kann die erste Oberfläche (FA1) während des Betriebs der ersten Läutervorrichtung (LV1) zum Trennen der Maische (MA) zu einem Anteil im Bereich von 1 bis 95 %, vorzugsweise 5 bis 95 %, vorzugsweise 5 bis 25 %, vorzugsweise 5 bis 20 %, vorzugsweise 5 bis 15 %, vorzugsweise 5 bis 10 %, vorzugsweise 10 bis 90 %, vorzugsweise 15 bis 80 %, vorzugsweise 20 bis 80 %, vorzugsweise 20 bis 70 %, vorzugsweise 20 bis 60 %, vorzugsweise 20 bis 50 %, vorzugsweise 20 bis 40 %, vorzugsweise 30 bis 40 %, insbesondere 20 bis 30 %, von der Maische (MA) bedeckt ist oder in die Maische (MA) eintauchen.

Bei der erfindungsgemäßen Brauanlage (OM) kann die zweite Oberfläche (FA2) während des Betriebs der zweiten Läutervorrichtung (LV2) zum Trennen der ersten Restmaische (RM1) zu einem Anteil im Bereich von 1 bis 95 %, vorzugsweise 5 bis 95 %, vorzugsweise 5 bis 25 %, vorzugsweise 5 bis 20 %, vorzugsweise 5 bis 15 %, vorzugsweise 5 bis 10 %, vorzugsweise 20 bis 90 %, vorzugsweise 30 bis 80 %, vorzugsweise 35 bis 70 %, insbesondere 40 bis 60 %, von der ersten Restmaische (RM1) bedeckt ist oder in die erste Restmaische (RM1) eintauchen.

Bei der erfindungsgemäßen Brauanlage (OM) kann die dritte Oberfläche (FA3) während des Betriebs der dritten Läutervorrichtung (LV3) zum Trennen der zweiten Restmaische (RM2) zu einem Anteil im Bereich von 1 bis 95 %, vorzugsweise 5 bis 95 %, vorzugsweise 5 bis 25 %, vorzugsweise 5 bis 20 %, vorzugsweise 5 bis 15 %, vorzugsweise 5 bis 10 %, vorzugsweise 20 bis 90 %, vorzugsweise 30 bis 80 %, vorzugsweise 35 bis 70 %, insbesondere 40 bis 60 %, von der zweiten Restmaische (RM2) bedeckt ist oder in die zweite Restmaische (RM2) eintauchen.

Bei der erfindungsgemäßen Brauanlage (OM) kann die vierte Oberfläche (FA4) während des Betriebs der vierten Läutervorrichtung (LV4) zum Trennen der dritten Restmaische (RM3) zu einem Anteil im Bereich von 1 bis 95 %, vorzugsweise 5 bis 95 %, vorzugsweise 5 bis 25 %, vorzugsweise 5 bis 20 %, vorzugsweise 5 bis 15 %, vorzugsweise 5 bis 10 %, vorzugsweise 20 bis 90 %, vorzugsweise 30 bis 80 %, vorzugsweise 35 bis 70 %, insbesondere 40 bis 60 %, von der dritten Restmaische (RM3) bedeckt ist oder in die dritte Restmaische (RM3) eintauchen.

Bei der erfindungsgemäßen Brauanlage (OM) können zwei, drei, vier oder mehr, vorzugsweise bis zu zehn, Vorrichtungen, ausgewählt aus der Gruppe, bestehend aus der ersten Läutervorrichtung (LV1), der zweiten Läutervorrichtung (LV2), der dritten Läutervorrichtung (LV3) und der vierten Läutervorrichtung (LV4), in Serie und/oder parallel geschaltet sein.

Bei der erfindungsgemäßen Brauanlage (OM) können zwei, drei, vier oder mehr erste Läutervorrichtungen (LV1) parallel geschaltet sein; und/oder
zwei, drei, vier oder mehr zweite Läutervorrichtungen (LV2) parallel geschaltet sein; und/oder
zwei, drei, vier oder mehr dritte Läutervorrichtungen (LV3) parallel geschaltet sein; und/oder
zwei, drei, vier oder mehr vierte Läutervorrichtungen (LV4) parallel geschaltet sein; und
die ersten Läutervorrichtungen (LV1), die zweiten Läutervorrichtungen (LV2), die dritten Läutervorrichtungen (LV3) und/oder die vierte Läutervorrichtungen (LV4) in Serie geschaltet sein.

Die erfindungsgemäße Brauanlage (OM) kann wenigstens einen Strömungsweg ausbilden; und
der wenigstens eine Strömungsweg kann von einer Flüssigkeit oder insbesondere der Maische (MA), der ersten Restmaische (RM1), der zweiten Restmaische (RM2), der dritten Restmaische (RM3) und/oder der vierten Restmaische (RM4) vorzugsweise schwerkraftgetrieben durchströmbar sein.

Die erfindungsgemäße Brauanlage (OM) kann wenigstens ein Stauelement aufweisen;
wobei vorzugsweise ein erstes Stauelement stromabwärts zur ersten Läutervorrichtung (LV1) und stromaufwärts zur zweiten Läutervorrichtung (LV2) angeordnet ist; und/oder
wobei vorzugsweise ein zweites Stauelement stromabwärts zur zweiten Läutervorrichtung (LV2) und stromaufwärts zur dritten Läutervorrichtung (LV3) angeordnet ist; und/oder
wobei vorzugsweise ein drittes Stauelement stromabwärts zur dritten Läutervorrichtung (LV3) und stromaufwärts zur vierten Läutervorrichtung (LV4) angeordnet ist.

Bei der erfindungsgemäßen Brauanlage (OM) kann die Einrichtung (AD) zum Zugeben der wenigstens einen Portion (PES) des enzymhaltigen Substrats (ES) stromaufwärts zu oder stromabwärts zu oder im Bereich einer Einrichtung (WH) zum Klären der Würze (WO) angeordnet sein.

Die erfindungsgemäße Brauanlage (OM) kann ferner wenigstens eine der nachfolgenden Einrichtungen aufweisen:
eine Einrichtung (MB) zum Herstellen einer Maische (MA);
eine Einrichtung (WP) zur thermischen Behandlung, vorzugsweise zum Heißhalten oder Kochen, der in der Brauanlage (OM) erzeugten Würze (WO), vorzugsweise eine Würzepfanne;
eine Einrichtung (WH) zum wenigstens teilweisen Klären der Würze (WO), vorzugsweise ein Whirlpool oder ein Setzbottich; und
eine zweite Einrichtung (WK2) zum Kühlen der in der Einrichtung (WH) behandelten Würze (WO) auf eine zweite Temperatur (T2) zwischen der ersten Temperatur (T1) und 0 °C, vorzugsweise ein Wärmeüberträger zum Kühlen der Würze (WO) auf eine Anstelltemperatur;
wobei die Einrichtung (AD) zum Zugeben der wenigstens einen Portion (PES) des enzymhaltigen Substrats (ES) vorzugsweise stromaufwärts zur Einrichtung (WH) zum Klären der Würze (WO) angeordnet ist.

Die erfindungsgemäße Brauanlage (OM) kann ferner eine Einrichtung (WE) zum Erwärmen der Würze (WO) auf eine dritte Temperatur (T3) zwischen 82 und 99 °C, vorzugsweise zwischen 82 und 95 °C, vorzugsweise zwischen 82 bis 90 °C, insbesondere zwischen 82 bis 85 °C, aufweisen;
wobei die Einrichtung (WE) stromabwärts zur Einrichtung (AD) zum Zugeben und vorzugsweise stromabwärts zur Einrichtung (WH) zum Klären der Würze (WO) angeordnet ist; oder
wobei die Einrichtung (WE) stromabwärts zur Einrichtung (AD) zum Zugeben und stromaufwärts zur oder im Bereich der Einrichtung (WH) zum Klären der Würze (WO) angeordnet ist.

Die erfindungsgemäße Brauanlage (OM) kann ferner wenigstens eine Einrichtung (SP) zum Abziehen und/oder Speichern der wenigstens einer Portion (PES) eines enzymhaltigen Substrats (ES), vorzugsweise der wenigstens einen Portion (PM) der Maische (MA) und/oder der wenigstens einen Portion (PMAA) des wenigstens einen Maischeauszugs (MAA) und/oder der Portion (PVW) enthaltend eine nicht über 80 °C erwärmte, enzymhaltige Würze (WOE), vorzugsweise der Portion (PVW) der Vorderwürze (VW), aufweisen.

Die erfindungsgemäße Brauanlage (OM) kann ferner wenigstens eine Isomerisierungsvorrichtung (IV) zum Isomerisieren von isomerisierbaren Hopfenbestandteilen in einem Isomerisierungssubstrat (IS), aufweisen:
einen Behälter (IB) zur Aufnahme des Isomerisierungssubstrates (IS) oder eines Gemisches (IG) enthaltend das Isomerisierungssubstrat (IS);
wobei der Behälter (IB) eine Einlassöffnung (EIB) zum Einbringen des Isomerisierungssubstrates (IS) oder des Gemisches (IG) in den Behälter (IB) aufweist; wobei die Einlassöffnung (EIB) mit wenigstens einer der ersten Läutervorrichtung (LV1), der zweiten Läutervorrichtung (LV2), der dritten Läutervorrichtung (LV3) und der vierten Läutervorrichtung (LV4) in Fluidverbindung steht;
wobei der Behälter (IB) eine Auslassöffnung (AIB) zum Ausbringen des Isomerisierungssubstrates (IS) oder des Gemisches (IG) aus dem Behälter (IB) aufweist; wobei die Auslassöffnung (AIB) mit einem bier- oder würzeführenden Gefäß (L) in Fluidverbindung steht,
wobei das bier- oder würzeführende Gefäß (L) bezogen auf einen Würzestrom vorzugsweise stromabwärts zur Einrichtung (WH) zum wenigstens teilweisen Klären der Würze (WO) angeordnet ist;
ein Dunstrohr (ID) zum Abführen von Dampf oder Dunst des Isomerisierungssubstrates (IS) oder des Gemisches (IG) aus dem Behälter (IB); und vorzugsweise eine Einrichtung zum Einstellen der Temperatur des Gemisches (IG);
wobei der Behälter (IB) ein zur Einrichtung (WP) zum thermischen Behandeln der in der Brauanlage (OM) erzeugten Würze (WO) separater Behälter ist;
wobei der Behälter (IB) vorzugsweise ein Nutzvolumen von höchstens 60 %, vorzugsweise höchstens 50 %, insbesondere höchstens 40 %, des Nutzvolumens, vorzugsweise des Pfanne-voll-Volumens, der Einrichtung (WP) zum thermischen Behandeln der in der Brauanlage (OM) erzeugten Würze (WO).

Dabei kann die Fluidverbindung des Behälters (IB) zu wenigstens einer der Läutervorrichtungen (LV1, LV2, LV3, LV4) unmittelbar, d.h. ohne Einbauten in der Leitung, sein. Die Fluidverbindung kann jedoch auch mittelbar, z.B. mit einem zwischengeschalteten Wärmeüberträger zum Temperieren der Würze (WO), sein.

Entsprechend kann die Fluidverbindung vom Behälter (IB) zum bier- oder würzeführenden Gefäß (L) unmittelbar oder mittelbar sein.

Der Behälter (IB) weist optional eine weitere Einbringöffnung zum Einbringen des Hopfensubstrates (IH) auf.

Bei der erfindungsgemäßen Brauanlage (OM) kann die Isomerisierungsvorrichtung (IV) ferner einen Wärmeüberträger (IU) zum Temperieren, vorzugsweise Erwärmen, des Isomerisierungssubstrates (IS) oder des Gemisches (IG) aufweisen;
wobei der Wärmeüberträger (IU) stromabwärts zu wenigstens einer der ersten Läutervorrichtung (LV1), der zweiten Läutervorrichtung (LV2), der dritten Läutervorrichtung (LV3) und der vierten Läutervorrichtung (LV4) angeordnet ist;
und wobei der Wärmeüberträger (IU) stromaufwärts zum Behälter (IB), insbesondere stromaufwärts zur Einlassöffnung (EIB), angeordnet ist; oder
wobei der Wärmeüberträger (IU) derart ausgestaltet und angeordnet ist, dass das Isomerisierungssubstrat (IS) oder das Gemisch (IG) temperierbar, vorzugsweise erwärmbar ist, während es sich im Behälter (IB) befindet, wobei der Wärmeüberträger (IU) vorzugsweise als Wand- und/oder Bodenheizung des Behälters (IB) ausgestaltet ist.

Bei der erfindungsgemäßen Brauanlage (OM) kann der Behälter (IB) oder wenigstens ein Boden des Behälters (IB) konusförmig ausgestaltet sein; und/oder
kann der Behälter (IB) oder ein Teil desselben die Gestalt eines Kegels oder Stumpfkegels aufweisen;
wobei der Öffnungswinkel (α) des Kegels oder Stumpfkegels vorzugsweise im Bereich von 15 bis 120 °, insbesondere 45 bis 75 °, liegt; und/oder
kann der Behälter (IB) oder ein Teil desselben die Gestalt eines Zylinders oder Zylindrokonus, vorzugsweise mit rundem, elliptischem oder mehreckigem Querschnitt, aufweisen.

Durch diese Ausgestaltung des Behälters (IB) wird eine bessere Absetzung und damit Abtrennung der festen Hopfenbestandteile erzielt.

Darüber hinaus kann erfindungsgemäß die Möglichkeit der Rückführung von festen, im Behälter (IB) abgesetzten Hopfenbestandteilen in die Würze (WO) nach deren Gewinnung in der Läutervorrichtung (LV1, LV2, LV3, LV4) bestehen. Insbesondere kann das Sediment zum Isomerisierungssubstrat (IS) (nächste Charge oder stromabwärts) in den Behälter (IB) oder in die Leitung, mittels derer das Isomerisierungssubstrat (IS) dem Behälter (IB) zugeführt wird, zugedrückt werden.

Bei der erfindungsgemäßen Brauanlage (OM) kann der Behälter (IB) geeignet sein, in seinem Inneren einem Druck unterhalb des Umgebungsdrucks standzuhalten; und kann vorzugsweise eine Einrichtung zur Erzeugung eines Drucks unterhalb des Umgebungsdrucks im Inneren des Behälters (IB) aufweisen.

Die erfindungsgemäße Brauanlage (OM) kann ferner wenigstens eine Klärvorrichtung (KV) zum wenigstens teilweisen Abtrennen von Feststoffen aus der Würze (WO), vorzugsweise einer Ausschlagwürze, wobei die Würze (WO) eine Temperatur von wenigstens 50 °C aufweisen,
wobei die Klärvorrichtung (KV) ein Gefäß (KVB) zum Aufnehmen der Würze (WO) aufweist,
wobei das Gefäß (KVB) bezogen auf den Strom der Würze (WO) vorzugsweise stromabwärts zur Einrichtung (WP) zum Heißhalten oder Kochen der Würze (WO) und stromabwärts zur Einrichtung (AD) zum Zugeben der wenigstens einen Portion (PES) des enzymhaltigen Substrats (ES) angeordnet ist; und
wobei das Gefäß (KVB) bezogen auf den Strom der Würze (WO) vorzugsweise stromaufwärts zur zweiten Einrichtung (WK2) zum Kühlen der Würze (WO) angeordnet ist; und
wobei das Gefäß (KVB) wenigstens eine Einlassöffnung (EKVB) zum Einbringen der Würze (WO) in das Gefäß (KVB) aufweist; und
wobei das Gefäß (KVB) wenigstens eine Auslassöffnung (AKVB) zum Abziehen der Würze (WO) aus dem Gefäß (KVB) aufweist;
wobei die Klärvorrichtung (KV) eine Kühleinrichtung (KVK) aufweist;
wobei die Kühleinrichtung (KVK) geeignet ist, vorzugsweise derart in der Brauanlage (OM) angeordnet ist, die Würze (WO) oder nur die Würze (WO), welche sich in der oberen oder unteren Hälfte des Gefäßes (KVB), vorzugsweise im oberen oder unteren Drittel des Gefäßes (KVB), befindet, oder ein Teilvolumen derselben zu kühlen.

Es ist besonders vorteilhaft, wenn die erfindungsgemäße Klärvorrichtung (KV) die Einrichtung (WH) zum Klären der Würze (WO), welche beispielsweise ein herkömmlicher Whirlpool oder Setzbottich ist, ersetzt.

Bei der erfindungsgemäßen Brauanlage (OM) kann das Gefäß (KVB) oder Teile desselben die Gestalt eines Kegels oder Stumpfkegels aufweisen;
wobei der Öffnungswinkel (α) des Kegels oder Stumpfkegels vorzugsweise im Bereich von 15 bis 120 °, insbesondere 45 bis 75 °, liegt.

Bei der erfindungsgemäßen Brauanlage (OM) kann das Gefäß (KVB) oder Teile desselben die Gestalt eines Zylinders oder Zylindrokonus, vorzugsweise mit rundem, elliptischen oder mehreckigem Querschnitt, aufweisen.

Bei der erfindungsgemäßen Brauanlage (OM) kann die Kühleinrichtung (KVK) als eine Wandkühlung des Gefäßes (KVB), vorzugsweise als eine Mantel- oder Seitenwandkühlung, ausgebildet sein.

Bei der erfindungsgemäßen Brauanlage (OM) kann die wenigstens eine Einlassöffnung (EKVB) derart angeordnet sein, dass sie ein Einströmen der Würze (WO) in tangentialer oder im Wesentlichen tangentialer Richtung zur Wand des Gefäßes (KVB), vorzugsweise zum Mantel oder Seitenwand des Gefäßes (KVB), ermöglicht.

Bei der erfindungsgemäßen Brauanlage (OM) kann die wenigstens eine Auslassöffnung (AKVB) als eine Mehrzahl von Auslassöffnungen (AKVB) ausgestaltet sein, wobei die Auslassöffnungen (AKVB) derart am Gefäß (KVB) oder in dessen Wand angeordnet sind, dass sie ein Abziehen der Würze (WO) an unterschiedlichen Stellen in Bezug auf die Höhe des Gefäßes (KVB) ermöglichen.

Ferner wird beansprucht ein Verfahren (VO) zur kontinuierlichen oder diskontinuierlichen Gewinnung und Behandlung einer Würze (WO) in der Bierbrauerei oder Getränkeindustrie;
wobei die Würze (WO) wenigstens eine Würze enthält, die ausgewählt ist aus einer Gruppe, wenigstens bestehend aus einer ersten Würze (WO1), einer zweiten Würze (WO2), einer dritten Würze (WO3) und einer vierten Würze (WO4);
wobei das Verfahren (VO) ein erstes Teilverfahren (TV1) zur Gewinnung der Würze (WO) aus einer Maische (MA) umfasst, wenigstens mit den Schritten:
   (1a) kontinuierliches oder diskontinuierliches Zuführen einer Maische (MA) zu einer ersten Aufnahmeeinrichtung (AG1) einer ersten Läutervorrichtung (LV1), vorzugsweise der ersten Läutervorrichtung (LV1) ist, wie sie vorstehend definiert ist;
   (1b) kontinuierliches oder diskontinuierliches Trennen der Maische (MA) in der ersten Läutervorrichtung (LV1) in eine erste Würze (WO1) und eine erste Restmaische (RM1), mittels Trennen oder Filtrieren der Maische (MA) unter Zuhilfenahme wenigstens einer ersten Oberfläche (FA 1) einer ersten Trennvorrichtung (LT1);
wobei das Filtrat oder Permeat die erste Würze (WO1) und der Filterrückstand oder Retentat die erste Restmaische (RM1) ist;
wobei das Trennen durch den hydrostatischen Druck der Maische (MA) und/oder einen anderen auf die Maische (MA) einwirkenden Druck und/oder einen auf die erste Restmaische (RM1) einwirkenden Unterdruck angetrieben wird;
wobei sich während des Trennens der Maische (MA) in die erste Würze (WO1) und die erste Restmaische (RM1) die erste Oberfläche (FA1) der ersten Trennvorrichtung (LT1) zur in der ersten Läutervorrichtung (LV1) vorhandenen Maische (MA), zur in der ersten Läutervorrichtung (LV1) vorhandenen, ersten Restmaische (RM1) und/oder zur ersten Aufnahmeeinrichtung (AG1) relativ bewegt, oder
die erste Oberfläche (FA1) sich während des Trennens der Maische (MA) um eine erste Achse oder erste Mittelachse (AX1) der ersten Trennvorrichtung (LT1) dreht; und
wobei die relative Bewegung oder die Drehbewegung der ersten Oberfläche (FA1) während der gesamten Dauer des Trennens der Maische (MA) ununterbrochen oder zeitweise, vorzugsweise in regelmäßigen zeitlichen Intervallen, erfolgt;
wobei die erste Würze (WO1) vorzugsweise einen Gehalt an Feststoffen (F) von wenigstens 300 mg/L, vorzugsweise wenigstens 500 mg/L, vorzugsweise wenigstens 1.000 mg/L, insbesondere wenigstens 2.000 mg/L, aufweist;
wobei das Verfahren (VO) ferner ein zweites Teilverfahren (TV2) zum Behandeln der im ersten Teilverfahren (TV1) erhaltenen Würze (WO) umfasst, wenigstens mit den Schritten:
   (2a) nach einer thermischen Behandlung, vorzugsweise einem Heißhalten oder Kochen, der im ersten Teilverfahren (TV1) erhaltenen Würze (WO), Einstellen der Temperatur, insbesondere Kühlen, der Würze (WO) auf eine erste Temperatur (T1) zwischen 0 und 85 °C, vorzugsweise zwischen 0 und 80 °C, vorzugsweise zwischen 70 und 85 °C, vorzugsweise zwischen 72 und 83 °C, vorzugsweise zwischen 80 und 85 °C, vorzugsweise zwischen 80 und 82 °C, vorzugsweise zwischen 72 und 78 °C, vorzugsweise zwischen 40 und 55 °C, vorzugsweise zwischen 45 und 50 °C; und
   (2b) Zugeben wenigstens einer Portion (PES) eines enzymhaltigen Substrats (ES), vorzugsweise wenigstens einer Portion (PMA) einer Maische (MA) und/oder wenigstens einer Portion (PMAA) eines Maischeauszugs (MAA) und/oder einer Portion (PVW) enthaltend eine nicht über 80 °C, vorzugsweise nicht über 78 °C, vorzugsweise nicht über 76 °C, vorzugsweise nicht über 74 °C, vorzugsweise nicht über 72 °C, vorzugsweise nicht über 70 °C, vorzugsweise nicht über 68 °C, insbesondere nicht über 66 °C, erwärmte, enzymhaltige Würze (WOE), insbesondere einer Portion (PVW) einer Vorderwürze (VW), vorzugsweise der ersten Würze (WO1), oder vorzugsweise eines Gemischs aus wenigstens zwei der Portion (PMA), der Portion (PMAA) und der Portion (PVW), zur Würze (WO);
wobei die Würze (WO) beim Zugeben höchstens die erste Temperatur (T1) aufweist; und
wobei das zweite Teilverfahren (TV2) vorzugsweise unter Einsatz der zweiten Vorrichtung (V2) durchgeführt wird, wie sie vorstehend definiert ist.

Beim erfindungsgemäßen Verfahren kann das erste Teilverfahren (TV1) ferner die Schritte umfassen:
(1c) Mischen von Wasser oder einer verdünnten Würze, vorzugsweise der dritten Würze (WO3), mit der bei der Trennung gemäß Schritt (1b) erhaltenen ersten Restmaische (RM1) in einem vordefinierten Volumenstromverhältnis, wobei ein erstes Gemisch (MX1) erhalten wird;
(1d) vor Schritt (1c): kontinuierliches oder diskontinuierliches Zuführen der ersten Restmaische (RM1) zur zweiten Aufnahmeeinrichtung (AG2) der zweiten Läutervorrichtung (LV2); oder
(1e) nach Schritt (1c): kontinuierliches oder diskontinuierliches Zuführen des ersten Gemischs (MX1) zur zweiten Aufnahmeeinrichtung (AG2) der zweiten Läutervorrichtung (LV2);
wobei die zweite Läutervorrichtung (LV2) vorzugsweise eine Gestalt aufweist, welche identisch ist zur ersten Läutervorrichtung (LV1), wie sie vorstehend definiert ist;
(1f) kontinuierliches oder diskontinuierliches Trennen des so erhaltenen ersten Gemischs (MX1) in eine zweite Würze (WO2) und eine zweite Restmaische (RM2) mittels der wenigstens einen zweiten Trennvorrichtung (LT2) oder mittels Trennen oder Filtrieren des ersten Gemischs (MX1) unter Zuhilfenahme einer zweiten Oberfläche (FA2) der zweiten Trennvorrichtung (LT2) in der zweiten Läutervorrichtung (LV2);

wobei das Filtrat oder Permeat die zweite Würze (WO2) und der Filterrückstand oder das Retentat die zweite Restmaische (RM2) ist;
wobei das Trennen durch den hydrostatischen Druck des ersten Gemischs (MX1) und/oder einen anderen auf das erste Gemisch (MX1) einwirkenden Druck und/oder einen auf die zweite Restmaische (RM2) einwirkenden Unterdruck angetrieben wird;
wobei sich während des Trennens des ersten Gemischs (MX1) in die zweite Würze (WO2) und die zweite Restmaische (RM2) die zweite Oberfläche (FA2) zum in der zweiten Läutervorrichtung (LV2) vorhandenen ersten Gemisch (MX1), zur in der zweiten Läutervorrichtung (LV2) vorhandenen, zweiten Restmaische (RM2) und/oder zur zweiten Aufnahmeeinrichtung (AG2) relativ bewegt, oder
sich während des Trennens des ersten Gemischs (MX1) in die zweite Würze (WO2) und die zweite Restmaische (RM2) die zweite Oberfläche (FA2) um eine zweite Achse oder zweite Mittelachse (AX2) der zweiten Trennvorrichtung (LT2) dreht; und
wobei die relative Bewegung oder die Drehbewegung der zweiten Oberfläche (FA2) während der gesamten Dauer des Trennens des ersten Gemischs (MX1) ununterbrochen oder zeitweise, vorzugsweise in regelmäßigen zeitlichen Intervallen, erfolgt.

Das erfindungsgemäße Verfahren kann ferner die Schritte aufweisen:
(1g) Mischen von Wasser oder einer verdünnten Würze, vorzugsweise der vierten Würze (WO4), mit der bei der Trennung gemäß Schritt (1f) erhaltenen zweiten Restmaische (RM2) in einem vordefinierten Volumenstromverhältnis, wobei ein zweites Gemisch (MX2) erhalten wird;
(1h) vor Schritt (1g): kontinuierliches oder diskontinuierliches Zuführen der zweiten Restmaische (RM2) zur dritten Aufnahmeeinrichtung (AG3) der dritten Läutervorrichtung (LV3); oder
(1i) nach Schritt (1g): kontinuierliches oder diskontinuierliches Zuführen des zweiten Gemischs (MX2) zur dritten Aufnahmeeinrichtung (AG3) der dritten Läutervorrichtung (LV3);
wobei die dritte Läutervorrichtung (LV3) vorzugsweise eine Gestalt aufweist, welche identisch ist zur ersten Läutervorrichtung (LV1), wie sie vorstehend definiert ist;
(1k) kontinuierliches oder diskontinuierliches Trennen des so erhaltenen zweiten Gemischs (MX2) in die dritte Würze (WO3) und eine dritte Restmaische (RM3), mittels der wenigstens einen dritten Trennvorrichtung (LT3) oder mittels Trennen oder Filtrieren des zweiten Gemischs (MX2) unter Zuhilfenahme einer dritten Oberfläche (FA3) der dritten Trennvorrichtung (LT3) in der dritten Läutervorrichtung (LV3);
wobei das Filtrat oder Permeat die dritte Würze (WO3) und der Filterrückstand oder das Retentat die dritte Restmaische (RM3) ist;
wobei das Trennen durch den hydrostatischen Druck des zweiten Gemischs (MX2) und/oder einen anderen auf das zweite Gemisch (MX2) einwirkenden Druck und/oder einen auf die dritte Restmaische (RM3) einwirkenden Unterdruck angetrieben wird;
wobei sich während des Trennens des zweiten Gemischs (MX2) in die dritte Würze (WO3) und die dritte Restmaische (RM3) die dritte Oberfläche (FA3) zum in der dritten Läutervorrichtung (LV3) vorhandenen zweiten Gemisch (MX2), zur in der dritten Läutervorrichtung (LV3) vorhandenen, dritten Restmaische (RM3) und/oder zur dritten Aufnahmeeinrichtung (AG3) relativ bewegt, oder
sich während des Trennens des zweiten Gemischs (MX2) in die dritte Würze (WO3) und die dritte Restmaische (RM3) die dritte Oberfläche (FA3) um eine dritte Achse oder dritte Mittelachse (AX3) der dritten Trennvorrichtung (LT3) dreht; und
wobei die relative Bewegung oder die Drehbewegung der dritten Oberfläche (FA3) während der gesamten Dauer des Trennens des zweiten Gemischs (MX2) ununterbrochen oder zeitweise, vorzugsweise in regelmäßigen zeitlichen Intervallen, erfolgt.

Das erfindungsgemäße Verfahren kann ferner die Schritte aufweisen:
(11) Mischen von Wasser oder einer verdünnten Würze mit der bei der Trennung gemäß Schritt (1k) erhaltenen dritten Restmaische (RM3) in einem vordefinierten Volumenstromverhältnis, wobei ein drittes Gemisch (MX3) erhalten wird;
(1m) vor Schritt (11): kontinuierliches oder diskontinuierliches Zuführen der dritten Restmaische (RM3) zu einer vierten Aufnahmeeinrichtung (AG4) der vierten Läutervorrichtung (LV4); oder
(1n) nach Schritt (11): kontinuierliches oder diskontinuierliches Zuführen des dritten Gemischs (MX3) zur vierten Aufnahmeeinrichtung (AG4) der vierten Läutervorrichtung (LV4);
wobei die vierte Läutervorrichtung (LV4) vorzugsweise eine Gestalt aufweist, welche identisch ist zur ersten Läutervorrichtung (LV1), wie sie vorstehend definiert ist;
(1o) kontinuierliches oder diskontinuierliches Trennen des so erhaltenen dritten Gemischs (MX3) in die vierte Würze (WO4) und eine vierte Restmaische (RM4), mittels der wenigstens einen vierten Trennvorrichtung (LT4) oder mittels Trennen oder Filtrieren des dritten Gemischs (MX3) unter Zuhilfenahme einer vierten Oberfläche (FA4) der vierten Trennvorrichtung (LT4) in der vierten Läutervorrichtung (LV4);
wobei das Filtrat oder Permeat die vierte Würze (WO4) und der Filterrückstand oder das Retentat die vierte Restmaische (RM4) oder der Treber (SP) ist;
wobei das Trennen durch den hydrostatischen Druck des dritten Gemischs (MX3) und/oder einen anderen auf das dritte Gemisch (MX3) einwirkenden Druck und/oder einen auf die vierte Restmaische (RM4) einwirkenden Unterdruck angetrieben wird;
wobei sich während des Trennens des dritten Gemischs (MX3) in die vierte Würze (WO4) und die vierte Restmaische (RM4) die vierte Oberfläche (FA4) zum in der vierten Läutervorrichtung (LV4) vorhandenen dritten Gemisch (MX3), zur in der vierten Läutervorrichtung (LV4) vorhandenen, vierten Restmaische (RM4) und/oder zur vierten Aufnahmeeinrichtung (AG4) relativ bewegt, oder
sich während des Trennens des dritten Gemischs (MX3) in die vierte Würze (WO4) und die vierte Restmaische (RM4) die vierte Oberfläche (FA4) um eine vierte Achse oder vierte Mittelachse (AX4) der vierten Trennvorrichtung (LT4) dreht; und
wobei die relative Bewegung oder die Drehbewegung der vierten Oberfläche (FA4) während der gesamten Dauer des Trennens des dritten Gemischs (MX3) ununterbrochen oder zeitweise, vorzugsweise in regelmäßigen zeitlichen Intervallen, erfolgt.

Beim erfindungsgemäßen Verfahren kann die relative Bewegung eine Drehbewegung im oder gegen den Uhrzeigersinn, vorzugsweise gegen den Uhrzeigersinn, sein, wobei die Drehrichtung aus der Blickrichtung bestimmt wird, bei der das zu trennende, einströmende Medium, vorzugsweise die zu trennende Maische (MA) oder Restmaische (RM1, RM2, RM3) oder das Gemisch (MX1, MX2, MX3) von links in die Vorrichtung einströmt und die abzuführende Restmaische die jeweilige Läutervorrichtung (LV1, LV2, LV3, LV4) nach rechts verlässt; und/oder
kann die relative Bewegung der ersten Oberfläche (FA1), der zweiten Oberfläche (FA2), der dritten Oberfläche (FA3) und/oder der vierten Oberfläche (FA4) mit einer Geschwindigkeit im Bereich von 0,01 bis 2,5 m/s, insbesondere 0,01 bis 1,8 m/s, erfolgen; und/oder
kann die Drehbewegung der ersten Oberfläche (FA1), der zweiten Oberfläche (FA2), der dritten Oberfläche (FA3) und/oder der vierten Oberfläche (FA4) mit einer Drehzahl im Bereich von 1 bis 60 U/min, vorzugsweise 1 bis 40 U/min, vorzugsweise 1 bis 30 U/min, vorzugsweise 1 bis 20 U/min, insbesondere 1 bis 12 U/min, erfolgen; und/oder
kann die Drehbewegung der ersten Oberfläche (FA1), der zweiten Oberfläche (FA2), der dritten Oberfläche (FA3) und/oder der vierten Oberfläche (FA4) mit einer Umfangsgeschwindigkeit oder Spitzengeschwindigkeit (tip velocity) im Bereich von 0,01 bis < 2,0 m/s, vorzugsweise 0,05 bis 1,8 m/s, vorzugsweise 0,1 bis 1,5 m/s, insbesondere 0,2 bis 1,5 m/s, erfolgen.

Beim erfindungsgemäßen Verfahren kann das Zuführen der Maische (MA) in Schritt (1a), das Zuführen der ersten Restmaische (RM1) in Schritt (1d) oder des ersten Gemisches (MX1) in Schritt (1e), das Zuführen der zweiten Restmaische (RM2) in Schritt (1h) oder des zweiten Gemisches (MX2) in Schritt (1i) und/oder das Zuführen der dritten Restmaische (RM3) in Schritt (1m) oder des dritten Gemisches (MX3) in Schritt (1n) mit einer Strömungsgeschwindigkeit im Bereich von 0,25 bis < 2,0 m/s, vorzugsweise 0,3 bis 1,8 m/s, vorzugsweise 0,5 bis 1,5 m/s, insbesondere 0,8 bis 1,5 m/s, erfolgen.

Das erfindungsgemäße Verfahren kann ferner den Schritt aufweisen:
(1p) Verwenden der Würze (WO), enthaltend wenigstens eine Würze, ausgewählt aus der ersten Würze (WO1), der zweiten Würze (WO2), der dritten Würze (WO3) und der vierten Würze (WO4), zur Herstellung eines Biers, eines Biermischgetränks oder eines sonstigen Getränks.

Das erfindungsgemäße Verfahren kann ferner die Schritte aufweisen:
(1q) Herstellen eines Gemischs (WOMX) aus wenigstens zwei beliebigen Würzen, insbesondere aus zwei, drei oder vier beliebigen Würzen, ausgewählt aus der Gruppe, bestehend aus der ersten Würze (WO1), der zweiten Würze (WO2), der dritten Würze (WO3) und der vierten Würze (WO4); und
(1r) Verwenden des in Schritt (1q) resultierenden Gemischs (WOMX) zur Herstellung eines Biers, eines Biermischgetränks oder eines sonstigen Getränks.

Beim erfindungsgemäßen Verfahren kann während des Trennens der Maische (MA) der Kontakt der ersten Oberfläche (FA1) oder einer Teilfläche derselben mit der in der ersten Aufnahmeeinrichtung (AG1) vorhandenen Maische (MA) durch die Ausführung der relativen Bewegung oder Drehbewegung der ersten Oberfläche (FA1) zeitweise unterbrochen und nach erfolgter Unterbrechung wiederhergestellt werden;
wobei das Unterbrechen und Wiederherstellen des Kontakts der ersten Oberfläche (FA1) oder einer Teilfläche derselben mit der Maische (MA) vorzugsweise wiederholt wird.

Beim erfindungsgemäßen Verfahren kann während des Trennens der ersten Restmaische (RM1) der Kontakt der zweiten Oberfläche (FA2) oder einer Teilfläche derselben mit der in der zweiten Aufnahmeeinrichtung (AG2) vorhandenen ersten Restmaische (RM1) durch die Ausführung der relativen Bewegung oder Drehbewegung der zweiten Oberfläche (FA2) zeitweise unterbrochen und nach erfolgter Unterbrechung wiederhergestellt werden;
wobei das Unterbrechen und Wiederherstellen des Kontakts der zweiten Oberfläche (FA2) oder einer Teilfläche derselben mit der ersten Restmaische (RM1) vorzugsweise wiederholt wird.

Beim erfindungsgemäßen Verfahren kann während des Trennens der zweiten Restmaische (RM2) der Kontakt der dritten Oberfläche (FA3) oder einer Teilfläche derselben mit der in der dritten Aufnahmeeinrichtung (AG3) vorhandenen zweiten Restmaische (RM2) durch die Ausführung der relativen Bewegung oder Drehbewegung der dritten Oberfläche (FA3) zeitweise unterbrochen und nach erfolgter Unterbrechung wiederhergestellt werden;
wobei das Unterbrechen und Wiederherstellen des Kontakts der dritten Oberfläche (FA3) oder einer Teilfläche derselben mit der zweiten Restmaische (RM2) vorzugsweise wiederholt wird.

Beim erfindungsgemäßen Verfahren kann während des Trennens der dritten Restmaische (RM3) der Kontakt der vierten Oberfläche (FA4) oder einer Teilfläche derselben mit der in der vierten Aufnahmeeinrichtung (AG4) vorhandenen dritten Restmaische (RM3) durch die Ausführung der relativen Bewegung oder Drehbewegung der vierten Oberfläche (FA4) zeitweise unterbrochen und nach erfolgter Unterbrechung wiederhergestellt werden;
wobei das Unterbrechen und Wiederherstellen des Kontakts der vierten Oberfläche (FA4) oder einer Teilfläche derselben mit der dritten Restmaische (RM3) vorzugsweise wiederholt wird.

Beim erfindungsgemäßen Verfahren kann während des Trennens der Maische (MA) gemäß Schritt (1b) die erste Oberfläche (FA1) zu einem Anteil im Bereich von 1 bis 95 %, vorzugsweise 5 bis 95 %, vorzugsweise 5 bis 25 %, vorzugsweise 5 bis 20 %, vorzugsweise 5 bis 15 %, vorzugsweise 5 bis 10 %, vorzugsweise 10 bis 90 %, vorzugsweise 15 bis 80 %, vorzugsweise 20 bis 80 %, vorzugsweise 20 bis 70 %, vorzugsweise 20 bis 60 %, vorzugsweise 20 bis 50 %, vorzugsweise 20 bis 40 %, vorzugsweise 30 bis 40 %, insbesondere 20 bis 30 %, von der Maische (MA) bedeckt sein oder in die Maische (MA) eintauchen, und
die erste Oberfläche (FA1) im Umfang des restlichen Anteils vorzugsweise in einem ersten gasgefüllten Raum (GR1) über oder oberhalb der Maische (MA) angeordnet sein oder darin hineinragen.

Beim erfindungsgemäßen Verfahren kann während des Trennens gemäß Schritt (1f) die zweite Oberfläche (FA2) zu einem Anteil im Bereich von 1 bis 95 %, vorzugsweise 5 bis 95 %, vorzugsweise 5 bis 25 %, vorzugsweise 5 bis 20 %, vorzugsweise 5 bis 15 %, vorzugsweise 5 bis 10 %, vorzugsweise 10 bis 90 %, vorzugsweise 15 bis 80 %, vorzugsweise 20 bis 80 %, vorzugsweise 20 bis 90 %, vorzugsweise 30 bis 80 %, vorzugsweise 35 bis 70 %, insbesondere 40 bis 60 %, vom ersten Gemisch (MX1) bedeckt sein oder in das erste Gemisch (MX1) eintauchen.

Beim erfindungsgemäßen Verfahren kann während des Trennens gemäß Schritt (1k) die dritte Oberfläche (FA3) zu einem Anteil im Bereich von 1 bis 95 %, vorzugsweise 5 bis 95 %, vorzugsweise 5 bis 25 %, vorzugsweise 5 bis 20 %, vorzugsweise 5 bis 15 %, vorzugsweise 5 bis 10 %, vorzugsweise 10 bis 90 %, vorzugsweise 20 bis 90 %, vorzugsweise 30 bis 80 %, vorzugsweise 35 bis 70 %, insbesondere 40 bis 60 %, vom zweiten Gemisch (MX2) bedeckt sein oder in das zweite Gemisch (MX2) eintauchen.

Beim erfindungsgemäßen Verfahren kann während des Trennens gemäß Schritt (1o) die vierte Oberfläche (FA4) zu einem Anteil im Bereich von 1 bis 95 %, vorzugsweise 5 bis 95 %, vorzugsweise 5 bis 25 %, vorzugsweise 5 bis 20 %, vorzugsweise 5 bis 15 %, vorzugsweise 5 bis 10 %, vorzugsweise 10 bis 90 %, vorzugsweise 20 bis 90 %, vorzugsweise 30 bis 80 %, vorzugsweise 35 bis 70 %, insbesondere 40 bis 60 %, vom dritten Gemisch (MX3) bedeckt sein oder in das dritte Gemisch (MX3) eintauchen.

Beim erfindungsgemäßen Verfahren kann wenigstens ein Medium, ausgewählt aus der Gruppe, bestehend aus der Maische (MA), der ersten Würze (WO1), der zweiten Würze (WO2), der dritten Würze (WO3), der vierten Würze (WO4), der ersten Restmaische (RM1), der zweiten Restmaische (RM2), der dritten Restmaische (RM3), der vierten Restmaische (RM4), des ersten Gemisches (MX1), des zweiten Gemisches (MX2) und des dritten Gemisches (MX3), während wenigstens einer der Schritte (1a), (1b), (1d), (1e), (1h), (1i), (1m) und (1n) schwerkraftgetrieben, insbesondere nur schwerkraftgetrieben, bewegt werden.

Beim erfindungsgemäßen Verfahren (VO) kann das zweite Teilverfahren (TV2) ferner den Schritt aufweisen:
(2c) wenigstens teilweises Klären der Würze (WO);
wobei das Zugeben gemäß Schritt (2b) vorzugsweise vor dem wenigstens teilweisen Klären der Würze (WO) erfolgt.

Beim erfindungsgemäßen Verfahren (VO) kann das zweite Teilverfahren (TV2) ferner wenigstens einen der nachfolgenden Schritte umfassen:
(2d) vor Schritt (2a): thermisches Behandeln, vorzugsweise Heißhalten oder Kochen, der Würze (WO); und/oder
(2e) nach Schritt (2b): Kühlen der Würze (WO) auf eine zweite Temperatur (T2) zwischen der ersten Temperatur (T1) und 0 °C.

Beim erfindungsgemäßen Verfahren (VO) kann die erste Temperatur (T1) in einem Bereich von 40 bis 85 °C, vorzugsweise 40 bis 84 °C, vorzugsweise 40 bis 80 °C, vorzugsweise 40 bis 55 °C; vorzugsweise 45 bis 50 °C; vorzugsweise 50 bis 80 °C, vorzugsweise 70 bis 85 °C, vorzugsweise 80 bis 85 °C; vorzugsweise 70 bis 80 °C, vorzugsweise 70 bis 78 °C, vorzugsweise 72 bis 78 °C, vorzugsweise 72 bis 76 °C, vorzugsweise 73 bis 75 °C, insbesondere bei etwa 74 °C, liegen.

Beim erfindungsgemäßen Verfahren (VO) kann das zweite Teilverfahren (TV2) ferner den Schritt umfassen:
(2f) nach dem Zugeben gemäß Schritt (2b) und Verstreichenlassen einer vorgegebenen Zeitspanne: Erwärmen der Würze (WO) auf eine dritte Temperatur (T3) zwischen 82 und 99 °C, vorzugsweise zwischen 82 bis 95 °C, vorzugsweise zwischen 82 bis 90 °C, insbesondere zwischen 82 bis 85 °C.

Beim erfindungsgemäßen Verfahren (VO) kann das Verhältnis des Volumens der zugegebenen Portion (PES) des enzymhaltigen Substrats (ES), vorzugsweise der wenigstens einen Portion (PMA) einer Maische (MA) und/oder Portion (PMAA) wenigstens eines Maischeauszugs (MAA) und/oder Portion (PVW) enthaltend eine nicht über 80 °C erwärmte, enzymhaltige Würze (WOE), vorzugsweise einer Portion (PVW) einer Vorderwürze (VW), vorzugsweise der ersten Würze (WO1), oder eines Gemisches aus wenigstens zwei der Portion (PMA), der Portion (PMAA) und der Portion (PVW), zum Pfanne-voll-Volumen der Würze (WO) in einem Bereich von 0,1 bis 30 %, vorzugsweise von 0,5 bis 20 %, vorzugsweise von 1 bis 5 %, vorzugsweise von 1 bis 3 %, insbesondere etwa 2 %, sein.

Beim erfindungsgemäßen Verfahren (VO) kann die Portion (PES), vorzugsweise die wenigstens eine Portion (PMA) und/oder die wenigstens eine Portion (PMAA) und/oder die Portion (PVW) oder ein Gemisch aus wenigstens zwei dieser Portionen, vor dem Zugeben gemäß Schritt (2b) zwischengelagert werden.

Beim erfindungsgemäßen Verfahren (VO) kann das Einstellen der Temperatur, insbesondere Kühlen, der Würze (WO) auf die erste Temperatur (T1) und/oder das Kühlen der Würze (WO) auf die zweite Temperatur (T2) und/oder das Erwärmen der Würze (WO) auf die dritte Temperatur (T3) in demselben Wärmeüberträger durchgeführt werden.

Beim erfindungsgemäßen Verfahren (VO) kann das Verfahren (VO) ferner ein drittes Teilverfahren (TV3) zum Hopfen der Würze (WO) oder eines daraus erzeugten Bieres oder Getränkes oder einer Vorstufe desselben umfassen; wobei das dritte Teilverfahren (TV3) wenigstens die Schritte aufweist:
(3a) Bereitstellen eines Isomerisierungssubstrates (IS), enthaltend eine Würze oder bestehend aus einer Würze, insbesondere ein Nachgussablauf oder ein Glattwasser, wobei die Würze vorzugsweise einen Extraktgehalt im Bereich von 0,2 bis 8 °P, vorzugsweise von 0,5 bis 5 °P, aufweist;
wobei das Isomerisierungssubstrat (IS) einen Extraktgehalt im Bereich von 0,2 bis 8 °P, vorzugsweise von 0,5 bis 5 °P, aufweist;
wobei das Isomerisierungssubstrat (IS) vorzugsweise einen Gehalt an Grobpartikeln mit Partikelgrößen von 40 bis 400 µm von > 100 mg/l, vorzugsweise > 200 mg/l, insbesondere > 400 mg/l, aufweist;
(3b) Erwärmen des Isomerisierungssubstrates (IS) auf eine Temperatur zwischen 80 und 105 °C, vorzugsweise 93 bis 98 °C;
(3c) Mischen des Isomerisierungssubstrates (IS) mit einem Hopfensubstrat (IH) unter Erhalt eines Gemisches (IG);
wobei das Hopfensubstrat (IH) wenigstens einen isomerisierbaren Hopfenbestandteil, vorzugsweise wenigstens eine α-Säure, enthält;
(3d) Einstellen der Temperatur des resultierenden Gemisches (IG) auf eine Temperatur innerhalb eines Bereichs (TB) zwischen 80 und 105 °C, vorzugsweise 93 bis 100 °C;
wobei der Temperaturbereich (TB) vorzugsweise die Temperaturen von 15 °C unterhalb bis 2 °C, vorzugsweise von 15 °C unterhalb bis 5 °C, unterhalb einer Temperatur (TMAX) umfasst, welche die Würze (WO) während der thermischen Behandlung derselben in einem Bierbereitungsverfahren, welches das Verfahren (VO), vorzugsweise das dritte Teilverfahren (TV3), umfasst, höchstens erreicht; und
Halten der Temperatur des resultierenden Gemisches (IG) innerhalb des Bereichs (TB) für eine vorbestimmte Zeitdauer (tI);
wobei die Zeitdauer (tI) vorzugsweise um 20 bis 50 min länger, vorzugsweise 20 bis 45 min länger, ist als eine Zeitdauer (tK) der thermischen Behandlung der Würze (WO) im Bierbereitungsverfahren (als Formel ausgedrückt: tI = tK + (20 bis 50 min) = tK + 20 min bis tK + 50 min); und
(3e) vorzugsweise wenigstens teilweises Abtrennen von festen Bestandteilen aus dem aus Schritt (3d) erhaltenen Gemisch (IG); und
(3f) Mischen des aus Schritt (3c) oder (3d) oder (3e) erhaltenen Gemisches (IG) mit der Würze (WO), die vorzugsweise nach dem zweiten Teilverfahren (TV2) erhalten worden ist, oder einem aus der Würze (WO) entstandenen Bier oder Getränk oder einer Vorstufe desselben;
wobei die Würze (WO) vor dem Mischen des Gemisches (IG) mit der Würze (WO) für wenigstens 30 min separat vom Gemisch (IG) thermisch behandelt worden war, wobei die Würze (WO) der Temperatur (TMAX) als der höchsten Temperatur ausgesetzt war, und
vorzugsweise die festen Bestandteile der Würze (WO), vorzugsweise der Heißtrub, nach dem Erwärmen der Würze (WO) und vor dem Mischen mit dem Gemisch (IG) zu wenigstens 80 %, vorzugsweise zu wenigstens 90 %, aus der Würze (W) entfernt worden waren; und
wobei das dritte Teilverfahren (TV3) vorzugsweise unter Einsatz der Isomerisierungsvorrichtung (IV) durchgeführt wird, wie sie vorstehend definiert ist.

Das dritte Teilverfahren (TV3) wird vorzugsweise in der Reihenfolge (3a), (3b), (3c), (3d), (3e), (3f) durchgeführt werden. Jedoch ist das dritte Teilverfahren (TV3) nicht hierauf beschränkt, sondern es kann auch wie nachfolgend aufgeführt gestaltet sein:
Das erfindungsgemäße Verfahren (VO) kann ferner ein drittes Teilverfahren (TV3) zum Hopfen der Würze (WO) oder eines daraus erzeugten Bieres oder Getränkes oder einer Vorstufe desselben umfassen;
wobei das dritte Teilverfahren (TV3) wenigstens die Schritte aufweist:
   (3a) Bereitstellen eines Isomerisierungssubstrates (IS), enthaltend eine Würze oder bestehend aus einer Würze, wobei die Würze vorzugsweise einen Extraktgehalt im Bereich von 0,2 bis 8 °P, vorzugsweise von 0,5 bis 5 °P, aufweist;
wobei das Isomerisierungssubstrat (IS) einen Extraktgehalt im Bereich von 0,2 bis 8 °P, vorzugsweise von 0,5 bis 5 °P, aufweist;
wobei das Isomerisierungssubstrat (IS) vorzugsweise einen Gehalt an Grobpartikeln mit Partikelgrößen von 40 bis 400 µm von > 100 mg/l, vorzugsweise > 200 mg/l, insbesondere > 400 mg/l, aufweist;
(3b) Mischen des Isomerisierungssubstrates (IS) mit einem Hopfensubstrat (IH) unter Erhalt eines Gemisches (IG);
wobei das Hopfensubstrat (IH) wenigstens einen isomerisierbaren Hopfenbestandteil, vorzugsweise wenigstens eine α-Säure, enthält;
(3c) Einstellen der Temperatur des resultierenden Gemisches (IG) auf eine Temperatur innerhalb eines Bereichs (TB) zwischen 80 und 105 °C, vorzugsweise 93 bis 100 °C;
wobei der Temperaturbereich (TB) vorzugsweise die Temperaturen von 15 °C unterhalb bis 2 °C, vorzugsweise von 15 °C unterhalb bis 5 °C, unterhalb einer Temperatur (TMAX) umfasst, welche die Würze (WO) während der thermischen Behandlung derselben in einem Bierbereitungsverfahren, welches das Verfahren (VO), vorzugsweise das dritte Teilverfahren (TV3), umfasst, höchstens erreicht; und
(3d) Halten der Temperatur des resultierenden Gemisches (IG) innerhalb des Bereichs (TB) für eine vorbestimmte Zeitdauer (tI);
wobei die Zeitdauer (tI) vorzugsweise um 20 bis 50 min länger, vorzugsweise 20 bis 45 min länger, ist als eine Zeitdauer (tK) der thermischen Behandlung der Würze (WO) im Bierbereitungsverfahren (als Formel ausgedrückt: tI = tK + (20 bis 50 min) = tK + 20 min bis tK + 50 min); und
(3e) vorzugsweise wenigstens teilweises Abtrennen von festen Bestandteilen aus dem aus Schritt (3d) erhaltenen Gemisch (IG); und
(3f) Mischen des aus Schritt (3b), (3c), (3d) oder (3e) erhaltenen Gemisches (IG) mit der Würze (WO), die vorzugsweise nach dem zweiten Teilverfahren (TV2) erhalten worden ist, oder einem aus der Würze (WO) entstandenen Bier oder Getränk oder einer Vorstufe desselben;
wobei die Würze (WO) vor dem Mischen des Gemisches (IG) mit der Würze (WO) für wenigstens 30 min thermisch behandelt worden war, wobei die Würze (WO) der Temperatur (TMAX) als der höchsten Temperatur ausgesetzt war, und vorzugsweise die festen Bestandteile der Würze (WO), vorzugsweise der Heißtrub, nach dem Erwärmen der Würze (WO) und vor dem Mischen mit dem Gemisch (IG) zu wenigstens 80 %, vorzugsweise zu wenigstens 90 %, aus der Würze (WO) entfernt worden waren; und
wobei das dritte Teilverfahren (TV3) vorzugsweise unter Einsatz der Isomerisierungsvorrichtung (IV) durchgeführt wird, wie sie vorstehend definiert ist.

Dabei beträgt in Schritt (3d) die Zeitdauer (tK) der thermischen Behandlung vorzugsweise 40 bis 120 min, insbesondere 50 bis 90 min. Folglich beträgt die Zeitdauer (tI) des Haltens der Temperatur in Schritt (3d) erhaltenen Gemischs (IG) vorzugsweise 60 bis 150 min, insbesondere 70 bis 135 min.

Erfindungsgemäß erstreckt sich folglich der in Schritt (3c/3d) genannte Temperaturbereich (TB) der Temperatur des Gemisches (IG) auf einen Bereich von 15 °C unterhalb der höchsten Temperatur (TMAX), welcher die Würze (WO) während der thermischen Behandlung ausgesetzt war, bis 2 °C unterhalb dieser höchsten Temperatur (TMAX). Als Formel ausgedrückt: TB = (TMAX - 15 °C) bis (TMAX - 2 °C). Als erläuterndes Beispiel kann hinzugefügt werden: Entspricht die höchste Temperatur TMAX, welcher die Würze während der thermischen Behandlung ausgesetzt ist, beispielsweise einer Würzekochtemperatur von 100 °C, so erstreckt sich der Temperaturbereich TB zwischen (100 - 15) °C und (100 - 2) °C = 85 bis 98 °C.

Beim erfindungsgemäßen Verfahren (VO) kann wenigstens während des Schrittes (3d) das Gemisch (IG) ausdampfen gelassen werden,
wobei das Ausdampfen des Gemisches (IG) gegen den Umgebungsdruck oder gegen einen Druck unterhalb des Umgebungsdrucks erfolgt.

Beim erfindungsgemäßen Verfahren (VO) kann das Isomerisierungssubstrat (IS) einen Nachgussablauf und/oder ein Glattwasser enthalten oder daraus bestehen.

Beim erfindungsgemäßen Verfahren (VO) kann in Schritt (3d) die Zeitdauer (It) wenigstens 60 min, vorzugsweise wenigstens 90 min, insbesondere wenigstens 120 min betragen.

Das erfindungsgemäße Verfahren (VO) kann ferner ein viertes Teilverfahren (TV4) zum wenigstens teilweisen Klären der Würze (WO), vorzugsweise einer Ausschlagwürze, vorzugsweise mittels der Klärvorrichtung (KV) wie vorstehend definiert, umfassen;
wobei das vierte Teilverfahren (TV4) wenigstens die Schritte aufweist:
(4a) Einbringen der zu klärenden Würze (WO) in ein Gefäß (KVB) zum Aufnehmen der Würze (WO) durch wenigstens eine Einlassöffnung (EKVB);
wobei die in das Gefäß (KVB) einströmende Würze (WO) eine Temperatur von wenigstens 50 °C aufweist,
(4b) Verweilen lassen der Würze (WO) im Gefäß (KVB) für eine vorbestimmte mittlere Verweildauer (tS), wobei die in der Würze (WO) vorhandenen Feststoffe wenigstens teilweise sedimentieren;
(4c) Abziehen der resultierenden, geklärten Würze (WO) aus dem Gefäß (KVB) durch wenigstens eine Auslassöffnung (AKVB);
dadurch gekennzeichnet, dass
während des Schrittes (4b) die im Gefäß (KVB) vorhandene Würze (WO) oder ein Teilvolumen derselben im Bereich einer oberen oder unteren Hälfte des Gefäßes (KVB), vorzugsweise im Bereich eines oberen oder unteren Drittels des Gefäßes (KVB), gekühlt wird; und
wobei das vierte Teilverfahren (TV4) vorzugsweise unter Einsatz der Klärvorrichtung (KV) durchgeführt wird, wie sie vorstehend definiert ist.

Beim erfindungsgemäßen Verfahren (VO) kann während des Schrittes (4b) die im Bereich der oberen oder unteren Hälfte des Gefäßes (KVB), vorzugsweise im Bereich des oberen oder unteren Drittels des Gefäßes (KVB), vorhandene Würze (WO) auf eine Temperatur gekühlt werden, die um wenigstens 10 °C, vorzugsweise 20 °C, geringer als die Temperatur der in das Gefäß (KVB) einströmenden Würze (WO) ist.

Beim erfindungsgemäßen Verfahren (VO) kann in Schritt (4a) das Einbringen der Würze (WO) durch Einströmen der Würze (WO) in tangentialer oder im Wesentlichen tangentialer Richtung zur Wand des Gefäßes (KVB) erfolgen.

Beim erfindungsgemäßen Verfahren kann in Schritt (4c) das Abziehen der Würze (WO) an unterschiedlichen Stellen bezogen auf die Höhe des Gefäßes (KVB) erfolgen.

Beim erfindungsgemäßen Verfahren kann in Schritt (4c) das Abziehen der Würze (WO) über eine Mehrzahl von Auslassöffnungen (AKVB) erfolgen;
wobei mit dem Abziehen bei einer ersten Auslassöffnung (AKVB 1) begonnen wird, welche mit der Würze (WO) bedeckt ist und von allen Auslassöffnungen (AKVB) den kürzesten Abstand zum höchsten, im Gefäß (KVB) bei der Durchführung des Verfahrens erreichten Würzespiegel (WS) aufweist;
wobei nach Verstreichen einer ersten vordefinierten Zeitspanne (tS1) seit Beginn des Abziehens der Würze (WO) oder nach Abzug eines ersten vordefinierten Würzevolumens (WOV1) seit Beginn des Abziehens das Abziehen durch eine zweite Auslassöffnung (AKVB2) anstelle des Abziehens durch die erste Auslassöffnung (AKVB 1) fortgesetzt oder zusätzlich zum Abziehen durch die erste Auslassöffnung (AKVB1) vorgenommen wird, wobei die zweite Auslassöffnung (AKVB2) mit der Würze (WO) bedeckt ist und von allen Auslassöffnungen (AKVB) den zweitkürzesten Abstand zum höchsten, bei der Durchführung des Verfahrens im Gefäß (KVB) erreichten Würzespiegel (WS) aufweist; und
wobei vorzugsweise nach Verstreichen einer zweiten vordefinierten Zeitspanne (tS2) seit Beginn des Abziehens der Würze (WO) oder nach Abzug eines zweiten vordefinierten Würzevolumens (WOV2) seit Beginn des Abziehens das Abziehen durch eine dritte Auslassöffnung (AKVB3) anstelle des Abziehens durch die erste Auslassöffnung (AKVB1) und/oder die zweite Auslassöffnung (AKVB2) fortgesetzt oder zusätzlich zum Abziehen durch die erste Auslassöffnung (AKVB 1) und/oder die zweite Auslassöffnung (AKVB2) vorgenommen wird, wobei die dritte Auslassöffnung (AKVB3) mit der Würze (WO) bedeckt ist und von allen Auslassöffnungen (AKVB) den drittkürzesten Abstand zum höchsten, bei der Durchführung des Verfahrens im Gefäß (KVB) erreichten Würzespiegel (WS) aufweist.

Das erfindungsgemäße Verfahren (VO) kann ferner ein fünftes Teilverfahren (TV5) zum Behandeln einer feststoffhaltigen Würze (WO) und vorzugsweise zum Hopfen der Würze (WO), umfassen;
wobei das fünfte Teilverfahren (TV5) wenigstens die Schritte aufweist:
   (5a) Bereitstellen der Würze (WO), vorzugsweise der Würze (WO) gemäß dem ersten Teilverfahren (TV1); und
   (Sb) Mischen der Würze (WO) mit einem Zuschlagstoff (Z) unter Erhalt einer den Zuschlagstoff (Z) enthaltenden Würze (WO), vorzugsweise vor Schritt (2a) oder vor oder während Schritt (2d) gemäß dem zweiten Teilverfahren (TV2);
wobei der Zuschlagstoff (Z) wenigstens ein Material enthält, ausgewählt aus einer Gruppe, bestehend aus einem Hopfentrub, einem Heißtrub, einem Kühltrub, einer Kieselgur, einem Kieselgel, PVPP, Bentonit, Reisschalen, Getreideschalen, Holzhackschnitzeln, Aktivkohle, einem Naturhopfen, Hopfenpellets, und festen Bestandteilen von Naturhopfen oder von Hopfenpellets.

Das erfindungsgemäße Verfahren kann ferner den Schritt aufweisen:
(5c) wenigstens teilweises Homogenisieren der in Schritt (5b) erhaltenen, den Zuschlagstoff (Z) enthaltenden Würze (WO), vorzugsweise vor Schritt (2a) oder vor oder während Schritt (2d) gemäß dem zweiten Teilverfahren (TV2).

Das erfindungsgemäße Verfahren kann ferner das Verfahren ferner den Schritt aufweisen:
(5d) thermisches Behandeln, vorzugsweise Heißhalten bei einer Temperatur von wenigstens 95 °C oder Kochen, der in Schritt (5b) oder (5c) erhaltenen, den Zuschlagstoff (Z) enthaltenden Würze (WO), vorzugsweise vor Schritt (2a) oder vor oder während Schritt (2d) gemäß dem zweiten Teilverfahren (TV2).

Das erfindungsgemäße Verfahren kann ferner den Schritt aufweisen:
(5e) Mischen der in Schritt (5b), (5c) oder (5d) erhaltenen, den Zuschlagstoff (Z) enthaltenden Würze (WO) mit einem Hopfensubstrat, vorzugsweise einem isomerisierten Hopfensubstrat, dem Hopfensubstrat (IH) oder dem Gemisch (IG) gemäß dem dritten Teilverfahren (TV3);
wobei das Mischen gemäß Schritt (5e) vorzugsweise 5 bis 15 min vor dem Abschluss der thermischen Behandlung gemäß Schritt (5d) erfolgt.

Das erfindungsgemäße Verfahren kann ferner den Schritt aufweisen:
(5f) vor Schritt (5e), vorzugsweise nach Schritt (5d) und vor Schritt (5e), wenigstens teilweises Abtrennen der Feststoffe (F) in der den Zuschlagstoff (Z) enthaltenden Würze (WO) auf ein Gehalt an Feststoffen (F) von höchstens 100 mg/L, vorzugsweise höchstens 70 mg/L.

Des Weiteren wird eine Verwendung eines enzymhaltigen Substrats (ES) zum Behandeln einer Würze (WO) beansprucht;
wobei die Würze (WO) einen Gehalt an Feststoffen (F) von wenigstens 300 mg/L, vorzugsweise wenigstens 500 mg/L, vorzugsweise wenigstens 1.000 mg/L, insbesondere wenigstens 2.000 mg/L, aufweist; und/oder
wobei die Würze (WO) vorzugsweise mittels Oberflächenfiltration erzeugt worden ist; oder
wobei die Würze (WO) mittels Oberflächenfiltration mittels der wenigstens einen ersten Läutervorrichtung (LV1) erzeugt worden ist;
wobei die wenigstens eine erste Läutervorrichtung (LV1) wenigstens aufweist:
   eine erste Aufnahmeeinrichtung (AG1) zum Aufnehmen einer Maische (MA);
   wenigstens eine erste Trennvorrichtung (LT1) mit jeweils einer ersten Oberfläche (FA1);
   wobei die erste Oberfläche (FA1) eine Vielzahl von Öffnungen (OP) aufweist;
   wobei die erste Oberfläche (FA1) oder ein Teil derselben mit der Maische (MA) in Kontakt bringbar ist, wenn die Maische (MA) zum Trennen in eine erste Würze (WO1) und eine erste Restmaische (RM1) in der ersten Aufnahmeeinrichtung (AG1) vorhanden ist;
   wobei die erste Oberfläche (FA1) während des Betriebs der ersten Läutervorrichtung (LV1) zur in der ersten Aufnahmeeinrichtung (AG1) aufgenommenen Maische (MA), zur ersten Restmaische (RM1) und/oder zur ersten Aufnahmeeinrichtung (AG1) relativ beweglich oder bewegbar oder drehbar angeordnet ist.

Des Weiteren wird eine Würze (WO) oder ein unter Verwendung der Würze (WO) hergestelltes Bier oder Getränk oder einer Vorstufe derselben beansprucht;
wobei die Würze (WO) unter Verwendung der erfindungsgemäßen Brauanlage (OM) erzeugt worden ist; und/oder
wobei die Würze (WO) mit dem erfindungsgemäßen Verfahren (VO) erzeugt und behandelt worden ist.

Die vorliegende Erfindung basiert auf der Beobachtung der Erfinder, dass sich die Qualität der Würzen, die mit den neuartigen, im Wesentlichen oder vollständig auf Oberflächenfiltration basierten Verfahren zur Schnellläuterung einer Maische in der Bier- oder Getränkeherstellung erzeugt werden und eine gegenüber herkömmlich hergestellten Würzen starke Feintrübung aufweisen, durch den Einsatz eines enzymhaltigen Substrats weiter verbessern lässt. Auf die Merkmale und Vorteile der Schnellläuterung gemäß dem ersten Teilverfahren der vorliegenden Erfindung wird auf die Seiten 23 bis 40 und 56 bis 65 der deutschen Patentanmeldung DE 10 2014 116 308 und die darin zitierten Textpassagen und Nummern (Seiten 4 bis 22) sowie den Figuren 1 bis 4 samt zugehöriger Beschreibungsteile und die Ansprüche selbiger Anmeldung verwiesen, auf die hiermit vollinhaltlich Bezug genommen wird.

So wird bei diesen Läutervorrichtungen durch die relative Bewegung zwischen Maische und der Oberfläche einer Trennvorrichtung der Aufbau einer Filterschicht aus Maischebestandteilen zumindest weitestgehend vermieden. Hierdurch werden die Strömungskanäle in der mit Öffnungen versehenen Oberfläche der Trennvorrichtung freigehalten, sodass die Würze beim Durchströmen der Oberfläche der Trennvorrichtung einen geringeren Strömungswiderstand gegenüber den herkömmlichen Würzegewinnungsverfahren erfährt.

Im Gegensatz zum klassischen Läuterbottich oder Maischefilter sorgt eine relative Bewegung der Trennvorrichtung zur Maische dafür, dass sich keine nennenswerte Filterschicht aus Maischebestandteilen beim Durchtritt der Würzeteilchen unter Zurückhaltung von Feststoffen auf der Oberfläche der Trennvorrichtung aufbaut. Indem die Maische bedingt durch die relative Bewegung gewissermaßen permanent oder zumindest zeitweise mit einer gewissermaßen "frischen", zur Trennung geeigneten Oberfläche in Kontakt kommt, bleibt der Strömungswiderstand beim Durchströmen der Würze durch die Trennvorrichtung im Verlauf der Trennung unverändert hoch.

Bei der vorstehend beschriebenen Maischetrennung werden im Wesentlichen nur Grobpartikel abgetrennt. Dagegen gehen im Gegensatz zu althergebrachten Würzegewinnungsverfahren, wie beim Läuterbottich, verstärkt feinere Maischebestandteile (der sogenannte Feinteig) in die Würze über. Folglich wird bei der erfindungsgemäßen Maischetrennung eine Würze mit einer höheren Trübung und Feststoffgehalt als üblicherweise gewünscht oder angestrebt, gewonnen. Andererseits kann mit den neuen Trenntechnologien eine erhebliche Verkürzung der Läuterzeit erzielt werden. So kann erfindungsgemäß ein großtechnischer Sud in 45 min, 30 min oder sogar weniger abgeläutert werden.

Da erfindungsgemäß auch bei hohen Volumendurchsätzen von Maische, wenn überhaupt, nur eine minimale Verblockung der Oberfläche der Trennvorrichtung auftritt, kann die Würzegewinnung kontinuierlich oder diskontinuierlich und mit hoher Standzeit durchgeführt werden. Im Gegensatz zu den althergebrachten, als Batchverfahren durchgeführten Läuterverfahren (Läuterbottich; Maischefilter) erzielt die Erfindung, wenn als kontinuierliches Verfahren (VO) oder kontinuierlich betriebene Vorrichtung bzw. Brauanlage (OM) gestaltet, kürzere Trennzeiten, kleinere Vorrichtungen und sonstige mit kontinuierlichen Verfahren verbundene Vorteile.

Abgesehen von der hohen Trübung der mit der neuartigen Läutertechnologie gemäß der erfindungsgemäßen ersten Läutervorrichtung bzw. dem ersten Teilverfahren gewonnenen Würze, war bislang wenig über deren Zusammensetzung und Eigenschaften bekannt. In ihren Untersuchungen haben die Erfinder der vorliegenden Anmeldung herausgefunden, dass sich die gewonnenen trüben Würzen zu einer schnellen Gärung mit einem schnellen Extraktabbau und hohen (scheinbaren) Endvergärungsgraden führen.

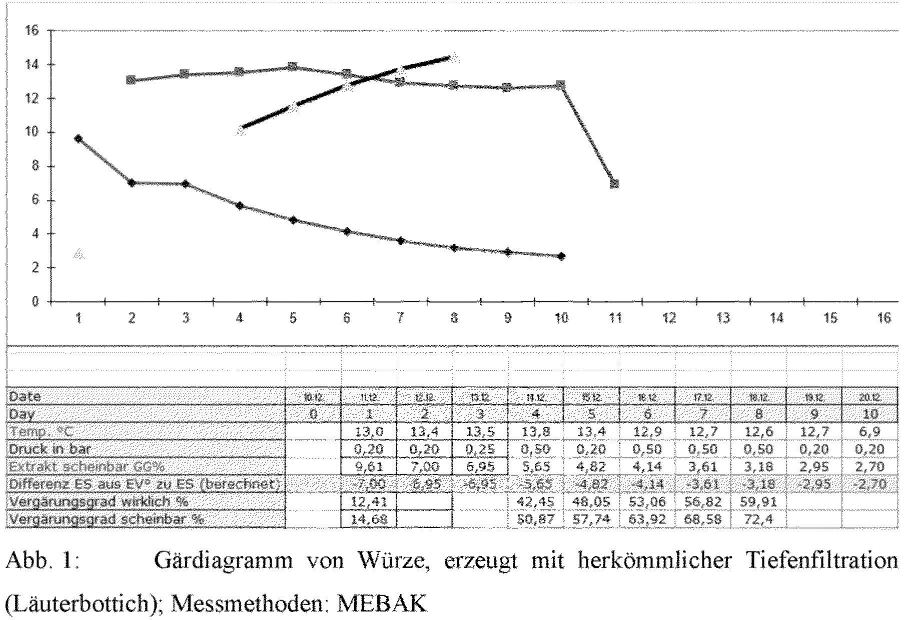

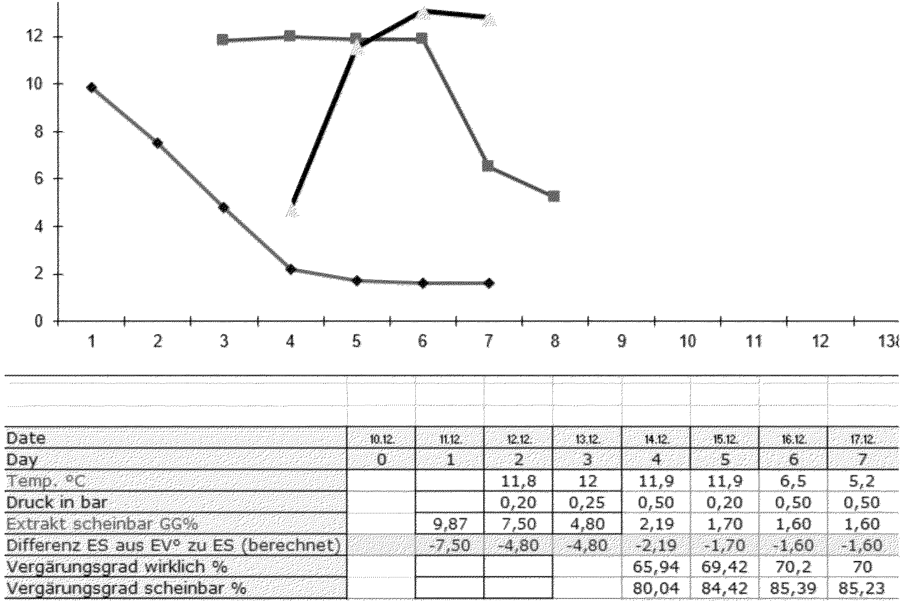

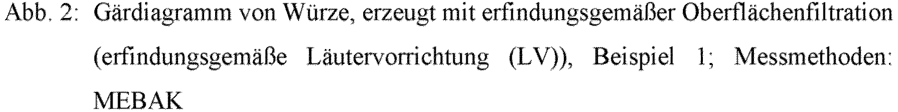

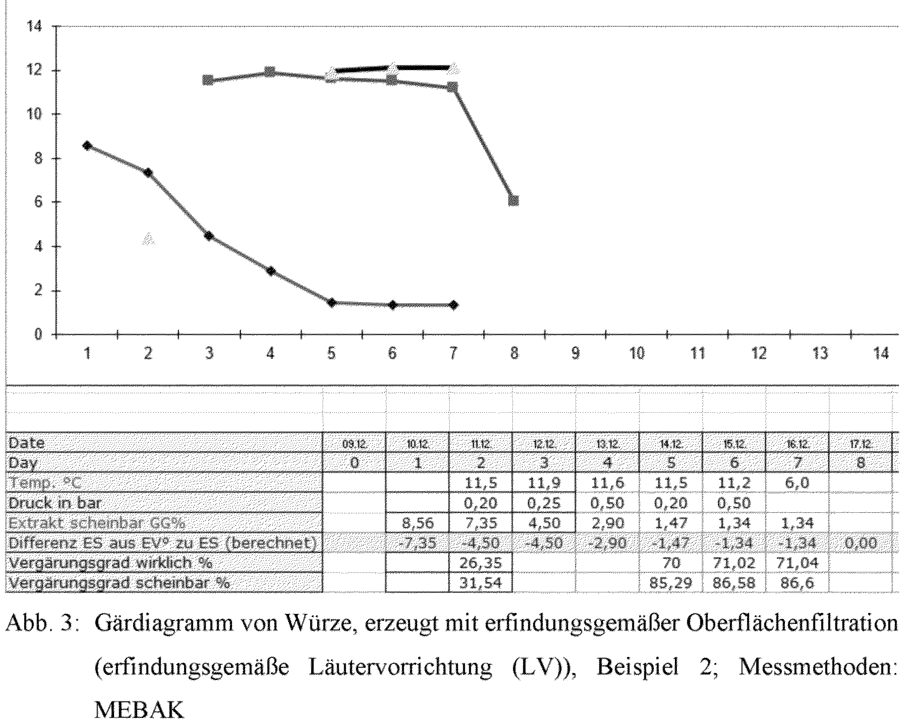

So wurde bei dem in den vorstehenden Diagrammen dargestellten Gärversuchen der Endvergärungsgrad bei den oberflächenfiltrierten Würzen (bei sogar geringerer Temperatur von 12 °C) bereits nach etwa fünf Tagen ab Anstellen erzielt wurde. Dagegen wurde der Endvergärungsgrad bei einer mittels eines Läuterbottichs herkömmlich gewonnenen Würze unter günstigeren Bedingungen (höhere Temperatur von 13 bis 14 °C) erst in frühestens acht Tagen erreicht werden.

Darüber hinaus war der scheinbare Vergärungsgrad bei den erfindungsgemäß oberflächenfiltrierten Würzen mit 85 bis 86 % (erreicht nach spätestens sechs Tagen) wesentlich erhöht gegenüber dem der Läuterbottichwürze (ca. 72 %, erreicht nach acht Tagen).

Darüber hinaus haben die Erfinder herausgefunden, dass sich die oberflächenfiltrierten Würzen gegenüber herkömmlichen, mittels eines Läuterbottichs erzeugten Würzen bei ansonsten gleichen Bedingungen durch erheblich höhere Gehalte an Zink und langkettigen, insbesondere ungesättigten Fettsäuren, wie Palmitinsäure, Linolsäure und Linolensäure, auszeichnen (vgl. nachstehende Tabelle 1). Nach Erkenntnis der Erfinder sind die höheren Gehalte an Zink und langkettigen Fettsäuren die Ursache für die beschleunigte Gärung.

**Tabelle 1: Vergleich der Gehalte an Zn und verschiedener langkettiger Fettsäuren in der Würze in Abhängigkeit vom Gewinnungsverfahren (herkömmlich mit Läuterbottich, neuartig mittels Oberflächenfiltration und erfindungsgemäß mittels Oberflächenfiltration und Enzymbehandlung; Methoden nach MEBAK)**

| Nr. | Verfahren Würzegewinnung | Zink | Palmitinsäu re | Linolsäure | Linolensäure |
|---|---|---|---|---|---|
| | | Zn | C16:0 | C18:2 | C18:3 |
| | | [mg/l] | [mg/l] | [mg/l] | [mg/l] |
| 1 | Läuterbottich | 0,080 | 0,278 | 0,422 | 0,069 |
| | | | | | |
| 2 | Oberflächenfiltration | 0,200 | 1,124 | 2,360 | 0,207 |
| | Δ (2) zu (1) | + 150% | +304% | + 459 % | + 200 % |
| | | | | | |
| 3 | Oberflächenfiltration + Enzymbehandlung | 0,320 | 1,280 | 2,440 | 0,214 |
| | Δ (3) zu (2) | + 60 % | + 13,9% | + 3,4 % | + 3,4 % |

Überraschend hierbei ist, dass durch eine Kombination der Gewinnung der Würze durch eine im Wesentlichen auf dem Prinzip einer Oberflächenfiltration basierenden Läuterung (erstes Teilverfahren der Erfindung) und der Behandlung der mit auf diese Weise gewonnenen Würze gemäß dem erfindungsgemäßen zweiten Teilverfahren die Würzequalität weiter verbessert werden kann.

Die Erfinder stellten fest, dass sich durch die erfindungsgemäße Kombination aus erstem und zweitem Teilverfahren bzw. der ersten Läutervorrichtung (LV1) und der zweiten Vorrichtung (V2) gemäß vorstehender Nr. 1 der Gehalt an Zink und langkettigen Fettsäuren in der Würze (Kühlmitte-Würze) weiter steigern lässt. So konnte der Zink-Gehalt der Würze nochmals um 60 % gegenüber der nach dem ersten Teilverfahren schnell abgeläuterten Würze gesteigert werden. Zudem stiegen die Gehalte der wichtigen Fettsäuren Palmitinsäure, Linolsäure und Linolensäure um nochmals 3 bis 14 % (vgl. vorstehende Tabelle 1).

Darüber hinaus haben die Erfinder gefunden, dass sich durch das erfindungsgemäße Verfahren bzw. den Einsatz der erfindungsgemäßen Brauanlage die Filtrierbarkeit der aus der Würze (WO) resultierenden Bieres steigern lässt. Die hohe Trübung der Würze (WO) beim Abläutern derselben in einer der erfindungsgemäßen Läutervorrichtungen geht mit einer hohen Fracht an Dextrinen einher, welche die Ursache für das Verblocken des Filters bei der späteren Bierfiltration sein könnte. Mit der Durchführung des zweiten Teilverfahrens (TV2) bzw. Einsatz der zweiten Vorrichtung (V2) wird dieser Nachteil überwunden, so dass gegenüber herkömmlich hergestellten Bieren keine Verschlechterungen bei der Filtrierbarkeit mehr festzustellen waren.

Des Weiteren wurde festgestellt, dass die erfindungsgemäß erzeugte und behandelte Würze wegen derer hervorragender Nährstoffausstattung eine optimale Versorgung der Hefe, beispielsweise mit langkettigen Fettsäuren, bieten. Hierdurch kann die Belüftung der Hefe beim Anstellen erheblich reduziert werden, mit den damit verbundenen technologischen Vorteilen. Zudem wurde beobachtet, dass die Hefevermehrung mit den erfindungsgemäß erzeugten und behandelten Würzen stark ansteigt, weshalb die Hefegabe verringert werden kann.

**Tabelle 2: Vergleich der Gesamtzellzahl der Hefe während der Gärung in Abhängigkeit vom Gewinnungsverfahren (Oberflächenfiltration und Oberflächenfiltration und Enzymbehandlung)**

| Gesamtzellzahl der Hefe während der Gärung | Oberflächenfiltration | Oberflächenfiltration + Enzymbehandlung (erfindungsgemäß) | Δ |
|---|---|---|---|
| Tag 1 | 1,51 * 10⁷/ml | 1,40 * 10⁷/ml | - 7,3 % |
| Tag 2 | 0,66 * 10⁷/ml | 4,75 * 10⁷/ml | + 620 % |
| Tag 3 | 4,28 * 10⁷/ml | 4,82 * 10⁷/ml | + 12,6 % |
| Tag 4 | 1,30 * 10⁷/ml | 3,03 * 10⁷/ml | + 133 % |

**Tabelle 3: Vergleich der Lebendzellzahl der Hefe während der Gärung in Abhängigkeit vom Gewinnungsverfahren (Oberflächenfiltration und Oberflächenfiltration und Enzymbehandlung)**

| Lebendzellzahl der Hefe während der Gärung | Oberflächenfiltration | Oberflächenfiltration + Enzymbehandlung (erfindungsgemäß) | Δ |
|---|---|---|---|
| Tag 1 | 0,81 * 10⁷/ml | 0,94 * 10⁷/ml | + 16,0 % |
| Tag 2 | 0,48 * 10⁷/ml | 3,34 * 10⁷/ml | + 596 % |
| Tag 3 | 2,95 * 10⁷/ml | 3,55 * 10⁷/ml | + 20,3 % |
| Tag 4 | 1,00 * 10⁷/ml | 1,95 * 10⁷/ml | + 95,0 % |

Wie in den vorstehenden Tabellen 2 und 3 wiedergeben, sind im Gärversuch bei der Würze, welche mittels Oberflächenfiltration hergestellt wurde, eine gute Vermehrung der Hefe, insbesondere zum dritten Gärtag, festgestellt worden.

Wenn erfindungsgemäß die Würzegewinnung per Oberflächenfiltration (erstes Teilverfahren (TV1)) noch um die Enzymbehandlung der Würze (zweites Teilverfahren (TV2)) ergänzt wird, steigt die Gesamtzellzahl sowie die Lebendzellzahl nochmals an. So ist am vierten Gärtag, also während der Hochphase der Gärung, sowohl die Gesamtzellzahl als auch die Lebendzellzahl in etwa doppelt so hoch wie der oberflächenfiltrierten Würze ohne Enzymbehandlung.

Ferner wurde festgestellt, dass sich das erfindungsgemäße Verfahren für die Verarbeitung von Maischen aus schwer aufschließbaren Malzen oder anderen schwer aufschließbaren Rohstoffen eignet. Darüber hinaus eignet sich das erfindungsgemäße Verfahren zur Verarbeitung von Maischen, welche mit verkürzten Maischverfahren gewonnen wurden, bei denen bei einer relativ geringen Temperatur (ca. 65 °C oder darunter) abgemaischt wird. Die üblicherweise bei diesen Fällen auftretenden Schwierigkeiten, wie bspw. eine schlechte Filtrierbarkeit, treten bei der erfindungsgemäß erzeugten Würze nicht oder nur in geringerem Maße auf.

Es wird hiermit offenbart, dass die Teilvorrichtungen der erfindungsgemäßen Brauanlage (OM), nämlich die Läutervorrichtung (LV), die zweite Vorrichtung (V2), die Isomerisierungsvorrichtung (IV) und die Klärvorrichtung (KV), wie sie jeweils vorstehend definiert sind, auch einzeln und unabhängig voneinander vorteilhaft betrieben werden können. Daher werden hiermit auch alle Teilvorrichtungen wie vorstehend beschrieben separat offenbart.

Analog gilt für das Verfahren: Die Teilverfahren des erfindungsgemäßen Verfahrens, also das erste Teilverfahren (TV1), das zweite Teilverfahren (TV2), das dritte Teilverfahren (TV3), das vierte Teilverfahren (TV4) und das fünfte Teilverfahren (TV5), wie sie jeweils vorstehend definiert sind, auch einzeln und unabhängig voneinander vorteilhaft betrieben werden können. Daher werden hiermit auch alle Teilverfahren wie vorstehend beschrieben separat offenbart.

Weitere Offenbarung, Alternativen und Vorteile zur ersten, zweiten, dritten und/oder vierten Läutervorrichtung (LV1, LV2, LV3, LV4) und zum ersten Teilverfahren (TV1)

Erfindungsgemäß kann die Oberfläche der Trennvorrichtung und/oder die Trennvorrichtung als solche beispielsweise aus Edelstahl, Kupfer, Kunststoff, vorzugsweise Polypropylen, oder ein Gewebe/Textil bestehen.

Indem die Relativbewegung der Oberfläche während der gesamten oder wenigstens überwiegenden Dauer des Trennens durchgeführt wird, wird eine dauernde und damit zeitlich eine maximale Abreinigung der Oberfläche der Trennvorrichtung erzielt.

Die relativ bewegte Oberfläche der Trenneinrichtung kann während des Trennvorgangs nur in einem beschränkten Umfang mit Maische bedeckt sein bzw. in die Maische eingetaucht sein.

Wenn die Oberfläche der Trenneinrichtung nur teilweise mit Maische bedeckt ist, können sich Feststoffpartikel, die sich aufgrund der Relativbewegung der Trennvorrichtung im Bereich des Maischespiegels bzw. der Maischeoberfläche ansammeln, von der sich bewegenden Oberfläche der Trenneinrichtung überraschend leicht und effektiv "mitgenommen" und somit aus der Maische und letztlich aus der Läutervorrichtung ausgetragen werden. Die ausgetragenen Partikel, also die Restmaische oder ein Teil davon, können mit einem Trockensubstanzgehalt von bis zu 75 % verhältnismäßig "trocken" ausgetragen werden. Ein derart trockener Austrag von Restmaische oder Treberpartikeln ist von den bisher eingesetzten Läutertechniken, insbesondere von Läuterbottich und Maischefilter, nicht erreicht worden.

Der Vorteil eines hohen Bedeckungsgrades der Oberfläche der Trennvorrichtung mit Maische ist eine hohe Filterfläche und damit ein hoher Durchsatz an Maische oder Restmaische und ein hoher Volumenstrom an gewonnener Würze.

Der Vorteil eines mittleren bis geringeren Bedeckungsgrades der Oberfläche der Trennvorrichtung mit Maische ist, dass der für eine Anreicherung und Austragung, vorzugsweise möglichst "trockene" Austragung, von Feststoffen aus der Maische und letztlich aus der Läutervorrichtung vorhanden Raum im Bereich der Oberfläche der Trennvorrichtung oberhalb des Maischespiegels ausreichend zur Verfügung steht. Als besonders vorteilhaft hat sich mittlerweile herausgestellt, wenn der Bedeckungsgrad der Oberfläche der Trennvorrichtung auf der Filtratseite gering (< 5 %, vorzugsweise < 2%) eingestellt wird, insbesondere wenn die Würze abgezogen wird, ohne an der Trennvorrichtung anzustauen.

Dabei hat sich ein Bedeckungsgrad oder Eintauchgrad der Oberfläche der Trennvorrichtung auf der Filtrat- oder Permeatseite im Bereich von 0,1 bis 10 %, vorzugsweise 0,5 bis 5 %, insbesondere 0,5 bis 2 %, als besonders vorteilhaft erwiesen. So kann hierdurch ein höherer Durchgangsvolumenstrom durch die Trennvorrichtung sichergestellt werden. Darüber hinaus kann ein Rückstrom von Würze durch die Trennvorrichtung in der entgegengesetzten Strömungsrichtung unterbunden werden. Somit wird der Verlust an Würze verringert und damit die Ausbeute gesteigert.

Mit Blick auf die vorstehend beschriebenen Gegebenheiten hat sich ein Bedeckungsgrad oder Eintauchgrad der Oberfläche der Trennvorrichtung auf der Feedseite im Bereich von 0,5 bis 30 %, vorzugsweise 0,5 bis 20 %, vorzugsweise 1 bis 10 %, vorzugsweise 1 bis 5 %, als besonders vorteilhaft erwiesen.

Erfindungsgemäß kann der erste, zweite, dritte und/oder vierte gasgefüllte Raum der ersten Läutervorrichtung ein Gas enthalten, das Luft oder vorzugsweise ein Inertgas wie Kohlenstoffdioxid, Stickstoff oder Helium oder Mischungen derselben enthält oder daraus besteht. Durch den Einsatz von Inertgasen kann eine nachteilige Oxidation der Maische oder Würze verhindert werden.

Durch die Wahl der optimalen Porengröße können, je nach Zusammensetzung der Maische, der Volumenstrom der gewonnenen Würze und deren Eigenschaften in Bezug auf deren stoffliche Zusammensetzung vorteilhaft eingestellt werden. So wird bei einer Porengroße von wenigstens 65 µm ein zufriedenstellender Volumenstrom der gewonnen Würze erzielt. Wird ein Porendurchmesser von größer 350 µm gewählt, so wird zwar ein hoher Volumenstrom an gewonnener Würze erreicht, jedoch findet gegebenenfalls eine hinreichende Abscheidung von gröberen Partikeln nicht mehr statt.

Ferner kann die Trennvorrichtung als eine drehgelagerte Trennvorrichtung oder als drehgelagertes Filter ausgeführt sein. Insbesondere kann die Drehachse der Trennvorrichtung mit dem Flüssigkeitsspiegel einer in die Aufnahmeeinrichtung der Läutervorrichtung eingefüllten Flüssigkeit einen wie vorstehend beschriebenen kleinen Winkelbetrag einschließen. Durch diese Anordnung, bei der die mit den Öffnungen vorgesehene Oberfläche der Trennvorrichtung senkrecht oder annähernd senkrecht zum Maischespiegel angeordnet ist, wird beim Drehen der Trennvorrichtung eine hohe Relativgeschwindigkeit der Maische zu der Oberfläche der Trennvorrichtung erzielt. Hierdurch wird eine gute Reinigung der Oberfläche erzielt.

Bei Ausgestaltung der Trennvorrichtung in scheibenförmiger Gestalt, bei der die Grundfläche als Oberfläche, welche die Öffnungen aufweist, bzw. Trennfläche ausgebildet ist, kann eine Trenneinrichtung kompakter Bauart mit einem hohen Verhältnis von Oberfläche mit Trennwirkung zur Gesamtfläche erzielt werden.

Indem die räumliche Anordnung der Mittelachse oder der Drehachse der Trennvorrichtung oder seiner Oberfläche vorzugsweise in etwa parallel zum Maischespiegel gewählt wird, wobei Abweichungen von der parallelen Ausrichtung in bestimmten Grenzen zur Erzielung der erfindungsgemäßen Wirkungen durchaus möglich sind, lassen sich die Relativbewegung der Oberfläche, das teilweise Bedecken der Oberfläche bzw. das teilweise Eintauchen in die Maische, eine gute Abreinigung der Oberfläche und ein hoher Feststoffaustrag mit einer konstruktiv einfachen Läutervorrichtung bei leichter Handhabbarkeit erzielen.

Darüber hinaus gelingt durch eine mehr oder weniger senkrechte Anordnung der Oberfläche zum Maischespiegel in Kombination mit der nur teilweisen Bedeckung der Oberfläche mit der Maische und der Drehbewegung zu dem auch ein Abscheiden von verhältnismäßigen "trockenen" Treberpartikeln im Bereich, wo die Oberfläche der Trennvorrichtung im Zuge der Drehbewegung aus der Maischeoberfläche austritt. Überraschenderweise gelingt hierdurch sogar der Austrag einer relativ "dicken" Restmaische oder sogar von verhältnismäßig trockenen Treberpartikeln aus der Maische und letztlich aus der Trennvorrichtung.

Es ist besonders vorteilhaft, wenn die Oberfläche der Trennvorrichtung derart relativ zur Maische, zur Restmaische und/oder zur Aufnahmeeinrichtung der Läutervorrichtung beweglich oder bewegbar ist, dass eine Mehrzahl von Oberflächenelementen, der Oberfläche der Trennvorrichtung, die beim Trennen von der Maische bedeckt sind, im Zuge der Relativbewegung aus der Maische austreten und zumindest zeitweise nicht von Maische bedeckt sind, um im weiteren Verlauf der Relativbewegung wieder in die Maische einzutauchen.

Wenn die Maische oder eine Restmaische die erfindungsgemäße Läutervorrichtung allein durch die Schwerkraft durchströmen kann, vereinfacht sich die Konstruktion der erfindungsgemäßen Läutervorrichtung, bspw. durch Wegfall von Pumpen etc., erheblich.

Zudem wird erfindungsgemäß der Energieverbrauch zum Betrieb der Läutervorrichtung um 40 % oder mehr gegenüber dem herkömmlichen Betrieb eines Läuterbottichs herabgesetzt. Ferner werden durch den geringeren Verbrauch und/oder die geringere Anzahl von Verbrauchern die Strom-Verbrauchsspitzen der erfindungsgemäßen Läutervorrichtungen gesenkt. Hierdurch kann die erforderliche installierte Leistung verringert werden. Des Weiteren ist der Energieeintrag in das zu trennende Medium und damit dessen Erwärmung geringer, was sich produktschonend auswirkt. Indem auf das Pumpen verzichtet werden kann, ist der Anströmdruck der einströmenden Maische oder Restmaische geringer, wodurch die Oberfläche der Trennvorrichtung vor Verblocken zusätzlich geschützt wird.

Die Oberfläche der Trennvorrichtung kann eine vielfältige Gestalt aufweisen, was eine hohe Flexibilität der Anlagengestaltung mit sich bringt. Bevorzugte Konturen der Oberfläche, wie bspw. konvexe, konkave, wellenförmige oder zickzackförmige Konturen, können in der Nähe der Oberfläche, welche sich in der Maische oder Restmaische und relativ zur Maische oder Restmaische bewegt, zusätzliche Strömungseffekte oder Verwirbelungen an der Oberfläche der Trennvorrichtung verursachen. Hierdurch wird die Abreinigung der Oberfläche weiter verbessert.

Das Vorsehen von Vorsprüngen, wie bspw. Stege oder Paddel, welche von der Oberfläche der Trennvorrichtung vorstehen, und vorzugsweise senkrecht oder im Wesentlichen senkrecht oder schräg zur Richtung der Relativbewegung der Oberfläche der Trennvorrichtung angeordnet sind, verbessern den Feststoffaustrag aus der Maische oder Restmaische und aus der Läutervorrichtung.

Besonders bevorzugt ist das Vorsehen von zwei Trennvorrichtungen je Läutervorrichtung, deren trennwirksame Oberflächen im Wesentlichen parallel zueinander angeordnet sind und einen Abstand von nicht mehr als 50 cm, besser nicht mehr als 30 cm, zueinander aufweisen.

Auf diese Weise wird eine Läutervorrichtung von hoher Kompaktheit bei großer wirksamer Trennfläche durch das Vorhandensein von zwei (trennaktiven) Oberflächen der Trennvorrichtungen bzw. Trennflächen. Wenn beide Oberflächen zudem dieselbe oder in etwa dieselbe Richtung der relativen Bewegung, insbesondere dieselbe Drehrichtung im Raum ausweisen, und die beiden Oberflächen der Trennvorrichtungen hinreichend gering voneinander beabstandet angeordnet sind, wird ein besonders effektiver Austrag von Feststoffen aus der Maische oder Restmaische und aus der Läutervorrichtung erzielt, wobei die ausgetragenen Feststoffe einen relativ hohen Trockensubstanzgehalt aufweisen.

Ähnliche Wirkungen werden erzielt, wenn bei Vorhandensein wenigstens einer Trennvorrichtung in der Läutervorrichtung der Abstand zu einer Wand der Läutervorrichtung oder insbesondere der Aufnahmevorrichtung hinreichend gering ist, vorzugsweise nicht mehr als 50 cm, besser nicht mehr als 30 cm, beträgt.

Die erfindungsgemäße Läutervorrichtung ist nicht auf die Würzegewinnung beschränkt. Sie kann vielmehr vorteilhaft für eine Mehrzahl von Medien aus der Brauerei oder Getränkeindustrie zur Abtrennung von Feststoffen eingesetzt werden. Dabei werden jeweils ähnliche Vorteile wie die vorstehend für die Maischetrennung/Würzegewinnung diskutierten erzielt.

Erfindungsgemäß können die Steuervorrichtungen als separate Steuervorrichtungen ausgebildet sein. Sie können jedoch auch in einer einzigen Steuervorrichtung realisiert sein, welche die Funktionen der erfindungsgemäßen ersten, zweiten, dritten und/oder vierten Steuervorrichtung ausübt.

Indem mehrere, vorzugsweise zwei bis vier oder mehr, insbesondere bis zu zehn, erfindungsgemäße Läutervorrichtungen in Serie geschaltet werden, kann eine mehrstufige Abtrennung von Feststoffen realisiert werden. Bei einem System mit mehrstufiger Abtrennung kann durch Abstimmung der Porengrößen der Öffnungen der Oberflächen der einzelnen Läutervorrichtungen, bspw. stromabwärts immer kleiner werdende Porengrößen, ein Zusetzen oder Verblocken der Trennoberfläche gänzlich vermieden werden oder zumindest länger hinausgezögert werden. Hierdurch ist der erzielbare Gesamtvolumenstrom des zu trennenden Mediums über das System hoch.

Darüber hinaus lassen sich auch andere Parameter, wie der Bedeckungsgrad oder Eintauchgrad der Oberfläche der Trennvorrichtung bezüglich der Maische oder Restmaische, die Gestalt der jeweiligen Trennvorrichtung und insbesondere ihrer jeweiligen Oberfläche und die sonstigen Parameter, die im Rahmen dieser Anmeldung betreffend die erfindungsgemäße Läutervorrichtung genannt sind, bei jeder Trennvorrichtung in der kaskadenartigen Anordnung den jeweiligen technologischen Gegebenheiten und Zielsetzungen individuell anpassen. Hierdurch steigen insgesamt die Flexibilität des erfindungsgemäßen Systems und dessen Anpassbarkeit an das zu trennende oder erhaltene Medium.

Zwischen zwei Trennstufen, d.h. zwischen einer Würzegewinnungsstufe in Gestalt einer erfindungsgemäßen Läutervorrichtung und der folgenden, kann jeweils eine Portion eines Extraktionsmittels, vorzugsweise Wasser oder eine verdünnte Würze, der jeweiligen Restmaische zugemischt werden. In der folgenden Würzegewinnungsstufe wird dann eine Würze in entsprechend hoher Verdünnung (Nachguss bzw. Nachgussabläufen) gewonnen. Je mehr Würzegewinnungsstufen das System umfasst, desto weitreichender kann eine Auswaschung der Restmaische erzielt werden, wodurch sich die Extraktausbeute der Würzeerzeugung insgesamt steigt.

Besonders effizient im Sinne einer hohen Extraktausbeute und Vermeidung einer unerwünscht hohen Verdünnung des resultierenden Würze-Gesamtvolumens ist, wenn das Extraktionsmittel im Gegenstrom zum Maische/Restmaischestrom geführt wird. So kann bspw. am Ende der Serie oder Kaskade von Läutervorrichtungen Wasser als Extraktionsmittel eingesetzt werden und die bei der letzten Stufe gewonnene verdünnte Würze bei der zweitletzten Stufe als Extraktionsmittel eingesetzt werden.

Alternativ kann jedoch ein "frisches", d.h. würzefreies Extraktionsmittel, wie bspw. würzefreies Wasser, bei jedem Extraktionsschritt (Mischschritt) verwendet werden. Vorteilhaft ist hierbei, dass die Auswaschung, im Sinne eines stärkeren Sinkens der Würzekonzentration von Trennstufe zu Trennstufe, effizienter als bei der vorstehend beschriebenen Gegenstromfahrweise ist. Hierdurch werden insgesamt weniger Trennstufen benötigt, was den apparativen Aufwand und die Kosten senkt.

Die Vorteile der erfindungsgemäßen Läutervorrichtung gelten für das erfindungsgemäße Verfahren analog.

Der Einsatz der erfindungsgemäßen Vorrichtung erlaubt die Einstellung einer erhöhten Trübung und einer bestimmten Feststofffracht, zumindest betreffend die Feinpartikelfraktion, in der resultierenden Würze. Die mit den erfindungsgemäßen Würzegewinnungsverfahren erhaltenen Würzen unterscheiden sich eindeutig von den heute im Läuterbottichablauf üblicherweise gewünschten, blanken, fast wasserklaren Würzen. So findet erfindungsgemäß eben keine hochgradige Abreicherung der Maische statt. Vielmehr können beim erfindungsgemäßen Verfahren wertvolle Maischeinhaltsstoffe, wie langkettige Fettsäuren (C16 bis C18:2), Zink und eine Partikelfracht, welche sich positiv auf das Gärverhalten und die Gärgeschwindigkeit und möglicherweise auch auf die Qualität der mit der erfindungsgemäß erzeugten Würze hergestellten Biere auswirkt.

Durch das Zuführen von Wasser oder einer verdünnten Würze zur Restmaische des jeweiligen Trennschritts und das Vorsehen einer Einrichtung hierzu, welche jeweils in einer Trennvorrichtung oder insbesondere stromabwärts zu einer Läutervorrichtung und stromaufwärts zur nachfolgenden Läutervorrichtung angeordnet ist, wird eine gezieltes Aussüßen (Lösen und Separieren von wasserlöslichen Kohlenhydraten aus der jeweiligen Restmaische) erzielt.

Durch das Anordnen eines Stauelements im Strömungsweg stromabwärts zu einer erfindungsgemäßen Läutervorrichtung und stromaufwärts zur nachfolgenden Läutervorrichtung, d.h. im Strömungsweg der Restmaische oder mit Wasser oder Würze verdünnten Restmaische zwischen zwei Läutervorrichtungen, wird die Suspension zum Überströmen eines wehrartigen Hindernisses gezwungen. Hierbei kann eine Sedimentation von Feststoffpartikeln im Staubereich stromaufwärts zum Stauelement erreicht werden, wodurch die Klärwirkung verbessert wird.

Besonders vorteilhaft im Sinne einer weitgehenden Feststoffabtrennung und effizienten Extraktgewinnung ist die Kombination aus einem Stauelement und einer Einrichtung zum Zuführen von Wasser oder einer verdünnten Würze, welche beide jeweils zwischen zwei erfindungsgemäßen Läutervorrichtungen angeordnet sind.

### Weitere Offenbarung, Alternativen und Vorteile zur zweiten Vorrichtung (V2) und zum zweiten Teilverfahren (TV2)

Die zweite Vorrichtung (V2) der erfindungsgemäßen Brauanlage (OM) kann eine erste Einrichtung zum Einstellen der Temperatur, insbesondere Kühlen, der Würze nach dem Heißhalte-/Kochschritt aufweisen, welche geeignet ist, die einströmende, heiße Würze auf die erste Temperatur im Gegenstrom oder Gleichstrom zu der kühleren, aus der Klär-Einrichtung, insbesondere eine Klärvorrichtung (KV) wie vorstehend definiert oder einem Whirlpool, austretenden Würze zu kühlen. Letztere Würze, welche die Temperatur oder eine Temperatur geringfügig darunter aufweist, erwärmt sich dabei auf eine dritte Temperatur, welche in etwa zwischen 82 und 99 °C, vorzugsweise zwischen 82 und 95 °C, vorzugsweise zwischen 82 bis 90 °C, insbesondere zwischen 82 bis 85 °C, liegt. Durch diese erneute Erwärmung werden die Enzyme kontrolliert inaktiviert. In einem weiter stromabwärts angeordneten Würzekühler kann die Würze dann auf die zweite Temperatur, beispielsweise auf eine Anstelltemperatur gekühlt werden. Damit kann erfindungsgemäß auch die nach dem Klärschritt anfallende Würze vorteilhaft zur erfindungsgemäßen Vorkühlung der aus dem Heißhalte-/Kochschritt erhaltenen Würze verwendet werden. Gleichzeitig wird die die Wärme aufnehmende Würze auf die dritte Temperatur zur Enzyminaktivierung erwärmt. Durch diese Vorgehensweise bzw. diesen Aufbau wir eine energieeffiziente Verwirklichung des erfindungsgemäßen Verfahrens einschließlich einer kontrollierten Inaktivierung der zugegebenen Enzyme erzielt. Dabei kann die zur erneuten "Inaktivierungserwärmung" erforderliche Wärme vollständig aus der heißen Ausschlagwürze gewonnen werden.

Damit kann das erfindungsgemäße zweite Teilverfahren (TV2) und/oder die erfindungsgemäße zweite Vorrichtung (V2) derart ausgebildet sein, dass die auf die erste Temperatur temperierte, insbesondere vorgekühlte, Würze (WO) (als Wärmeträger) zum Einstellen der Temperatur, insbesondere Kühlen der wärmeren, nach dem Heißhalten oder Kochen anfallenden Würze (WO) (z.B. Ausschlagwürze) verwendet werden kann. Dabei wird letztere Würze (WO) auf die erste Temperatur eingestellt, insbesondere abgekühlt, während die bereits früher vorgekühlte Würze vorzugsweise auf die dritte Temperatur zur Enzyminaktivierung erwärmt wird, bevor diese dann nach Verstreichen einer vorbestimmten Zeitspanne auf die zweite Temperatur, z.B. die Anstelltemperatur gekühlt wird.

Bei der erfindungsgemäßen zweiten Vorrichtung (V2) kann die Einrichtung zum Einstellen der Temperatur, insbesondere Kühlen, der Würze auf die erste und/oder zweite Temperatur und/oder zum Erwärmen der Würze als ein einziger Wärmeüberträger oder zwei Wärmeüberträger ausgebildet sein.

Besteht die Einrichtung zum Einstellen der Temperatur, insbesondere Kühlen, der Würze erfindungsgemäß aus nur einem Wärmeüberträger, ist der apparative Aufwand zur Umsetzung der Erfindung minimal. Besonders vorteilhaft ist es, wenn in einer bestehenden Anlage auf den bereits vorhandenen Würzekühler bei der Verwirklichung der Erfindung zurückgegriffen werden kann. Besteht die Einrichtung zum Einstellen der Temperatur, insbesondere Kühlen, der Würze aus zwei Wärmeüberträgern, so ist die Flexibilität höher und der jeweilige Wärmeüberträger kann individuell für die ihm zukommende Aufgabe ausgelegt und räumlich angeordnet werden.

Der vorstehend beschriebene Maischeauszug kann beispielsweise mit den folgenden Schritten hergestellt werden: (aa) während des Maischens Entnehmen einer Portion der Maische, wobei die Maische eine vorgegebene Temperatur aufweist; (bb) wenigstens teilweises Abtrennen von Feststoffpartikeln aus der in Schritt (aa) erhaltenen Portion der Maische, vorzugsweise durch Sedimentieren derselben, wodurch der Maischeauszug erhalten wird.

Dabei kann der Maischeauszug auch aus einem Gemisch von Maischeauszügen bestehen, welche bei unterschiedlichen, vorgegebenen Temperaturen oder in unterschiedlichen, vorgegebenen Temperaturbereichen der Maische entnommen wurden und wie beschrieben, wenigstens teilweise von Feststoffpartikeln befreit wurden. Dabei sind die Temperaturbereiche vorzugsweise folgende:

**Tabelle 4: Bevorzugte Temperaturbereiche für die Gewinnung des enzymhaltigen Substrats, die hierzu nach ihrem Wirkoptimum korrespondierenden Enzyme und deren Wirkung**

| **Temperaturbereich** | **Optimum für Enzymaktivität der** | **Wirkung/Verbesserung** |
|---|---|---|
| ca. 35 bis 40 °C | Maltase | Endvergärungsgrad; Zuckerabbau |
| ca. 40 bis 45 °C | Endo-β-1,4-Glucanase | Filtrierbarkeit/Viskosität des Bieres |
| ca. 50 bis 60 °C | Endo-β-1,3-Glucanase | Filtrierbarkeit/Viskosität des Bieres |
| ca. 50 bis 65 °C, insb. 62 bis 65 °C | β-Glucan-Solubilase | Filtrierbarkeit/Viskosität des Bieres |
| ca. 60 bis 65 °C, insb. 62 bis 64 °C | β-Amylase | Endvergärungsgrad |
| ca. 65 bis 75 °C, insbesondere 72 bis 74 °C | α -Amylase | Endvergärungsgrad |
| ca. 45 bis 50 °C | Endopeptidase, Carboxypeptidase, Aminopeptidase, Dipeptidase | Proteinabbau; verringerte Trübungsbildung im fertigen Getränk; Glutenabbau zur Erzeugung glutenfreier Getränke |

Auf Basis der in vorstehender Tabelle angegebenen Temperaturbereiche kann auch die Temperatur bei Ziehen der Portion der Maische gewählt werden.

Beim erfindungsgemäßen Verfahren erfolgt das Einstellen der Temperatur, insbesondere Kühlen, der Würze vorzugsweise unter Berücksichtigung der in vorstehender Tabelle wiedergegebenen Temperaturbereiche auf die erste Temperatur zwischen 0 und 85 °C, vorzugsweise 0 und 80 °C, vorzugsweise zwischen 70 und 85 °C, vorzugsweise 30 bis 80 °C, vorzugsweise 40 bis 80 °C, vorzugsweise 40 bis 55 °C, vorzugsweise 45 bis 50 °C, vorzugsweise 50 bis 78 °C, vorzugsweise 60 bis 78 °C, vorzugsweise 70 bis 76 °C, insbesondere 73 bis 75 °C oder im Bereich von 78 bis 85 °C, vorzugsweise 78 bis 84 °C, vorzugsweise 80 bis 85 °C, insbesondere 80 bis 83 °C. Die in vorstehender Tabelle wiedergegebenen Temperaturbereiche können daher ebenfalls als Temperaturbereiche für die erste Temperatur verwendet werden. D.h., auf der Basis der in vorstehender Tabelle angegebenen Temperaturbereiche kann auch die erste Temperatur beim Einstellen der Temperatur, insbesondere Kühlen, der Würze nach dem Heißhalten oder Kochen gewählt werden.

Beim zweiten Teilverfahren (TV2) des erfindungsgemäßen Verfahrens (VO) kann die der temperierten, insbesondere vorgekühlten, Würze zugegebene Portion der Maische, des Maischeauszugs und/oder enthaltend eine nicht über 80 °C erwärmte, enzymhaltige Würze (WOE), vorzugsweise der Vorderwürze, demselben Sud (Maische- /Würzecharge) entstammen. Die Erfindung ist jedoch nicht notwendigerweise hierauf beschränkt. So können auch die der vorgekühlten Würze zugegebene Portion oder Portionen einem anderen (früheren oder späteren) Sud entstammen. Besonders vorteilhaft ist es dabei, wenn die zugegebene Portion einer enzymreichen Maische oder Würze, wie beispielsweise einer Allmalzmaische entstand, erfindungsgemäß einer Würze zugegeben wird, welche aus enzymarmen Rohstoffen, wie beispielsweise rohfruchtbasierte Würzen, stammt.

Die Erfindung ist nicht notwendigerweise darauf beschränkt, die Portion der Maische, des Maischeauszugs und/oder der Portion enthaltend eine nicht über 80 °C erwärmte, enzymhaltige Würze, vorzugsweise der Vorderwürze, einer nach dem Heißhalten/Kochen temperierten, insbesondere vorgekühlten, Würze zuzugeben. Vielmehr kann eine solche Portion auch einer anderen Maischecharge zur Unterstützung des Enzympotenzials zugeführt werden, insbesondere, wenn es sich, wie vorstehend beschrieben, um enzymarme, beispielsweise rohfruchtbasierte Maischen handelt. Dabei kann, wie hierin beschrieben, wenigstens eine Portion einer Maische, eines Maischeauszugs oder wenigstens eine Portion enthaltend eine nicht über 80 °C erwärmte, enzymhaltige Würze, vorzugsweise eine Vorderwürze, gewonnen werden und einer Maische zu einem beliebigen Zeitpunkt während des Maischens oder nach dem Maischen zugegeben werden oder in das Maischgefäß vor dem Einmaischen vorgelegt werden. Ansonsten ergeben sich alle weiteren Ausführungen, Eigenschaften und Vorteile dieser Variante der Erfindung anlog zur Zugabe der wenigstens einen Portion zur temperierten, insbesondere vorgekühlten, Würze wie vorstehend beschrieben. Damit lassen sich dieselben Beschränkungen in verfahrens- und vorrichtungstechnischer Sicht, wie sie für die Zugabe der Portion(en) zur temperierten, insbesondere vorgekühlten, Würze in dieser Anmeldung beschrieben sind, auch mit der vorstehend beschriebenen Zugabe der Portion(en) zu einer Maische einer anderen Maischecharge kombinieren.

Durch eine wenigstens teilweise Befreiung der Maische- oder Würzeportion von Feststoffpartikeln noch vor der Zugabe, wie dies beispielsweise bei der Erzeugung eines Maischeauszugs der Fall ist, wird nach Erkenntnis der Erfinder die Wirksamkeit des erfindungsgemäßen Verfahrens bezüglich einer Verbesserung der technologischen Eigenschaften der resultierenden Würze erhöht. Hierbei bezieht sich Feststoffpartikeln insbesondere auf Malz-, Malzschrot- und Getreidepartikel.

In einer vorteilhaften Ausführungsform, beispielsweise zur Erzeugung glutenfreier Getränke, kann im Schritt (2a) die Würze auf eine erste Temperatur von höchstens 55 °C (beispielsweise 40 bis 55 °C, insbesondere 45 bis 50 °C) eingestellt werden. Dabei ist es vorteilhaft, wenn das im Schritt (2b) zugegebene enzymhaltige Substrat höchstens eine Temperatur von 55 °C erreicht, wenn ein Maximum an Enzymaktivität der entsprechenden Peptidasen erreicht werden soll.

Möglich und erfindungsgemäß ist jedoch auch, dass die erste Temperatur (T1), auf welche die Würze eingestellt wird, und/oder die Temperatur, welche das enzymhaltige Substrat bis zur Zugabe gemäß Schritt (2b) zumindest vorrübergehend erreicht, geringfügig oberhalb (bspw. +2 bis +10 °C) der Enzymoptimumtemperatur von z.B. 55 °C liegen. Trotz der hierbei eintretenden, temperaturbedingten Enzyminaktivierung kann - vermutlich aufgrund der beschleunigten Umsetzung aufgrund der erhöhten Temperatur - dennoch ein ausreichender Abbau von Gluten oder anderen Zielmolekülen erzielt werden. Um bei diesem Verfahren ein definiertes Ende der Enzymaktivität zu erzielen, kann nach dem Zugeben des enzymhaltigen Substrats und Verstreichenlassen einer vorgegebenen Zeitspanne die Würze auf eine dritte Temperatur von beispielsweise 85 °C erwärmt werden.

Wenn im Schritt (2a) des zweiten Teilverfahren (TV2) die Würze (WO) dagegen auf eine erste Temperatur im Bereich von 80 bis 85 °C oder zumindest auf eine Temperatur oberhalb des üblichen Einsatzbereiches des betrachteten Enzyms (höchstens bis zur Temperatur des größten Stoffumsatzes pro Zeiteinheit, d.h. dem Temperatur- oder Wirkoptimum) eingestellt wird, kann zwar das Wirkoptimum der Enzyme im enzymhaltigen Substrat überschritten sein. Die Erfinder haben dennoch eine ausreichend hohe Enzymaktivität festgestellt, um einen quantitativ hinreichenden enzymatischen Abbau sicherzustellen, bevor die Enzymaktivität aufgrund der voranschreitenden, wärmebedingten Enzyminaktivierung zum Erliegen kommt.

In Schritt (2a) des zweiten Teilverfahren (TV2) besteht somit die Möglichkeit, die Temperatur der Würze auf eine Temperatur von 2 bis 20 °C, vorzugsweise 5 bis 15 °C, oberhalb des Temperaturoptimums eines für den Stoffabbau relevanten Enzyms, wie es bspw. in der vorstehend aufgeführten Tabelle genannt ist, einzustellen. Der besondere Vorteil dieser Vorgehensweise ist, dass eine gezielte Inaktivierung des jeweils betrachteten Enzyms oder der betrachteten Enzyme quasi zugleich oder im Anschluss an den Abbau erzielt wird, ohne dass ein nochmaliges Erwärmen der Würze zur gezielten Inaktivierung erforderlich wäre. Hierdurch wird der Verfahrensablauf vereinfacht, und ein nochmaliges Erwärmen der Würze entfällt. Zudem wird bei dieser Vorgehensweise der zwischen den eingesetzten Medien, wie beispielsweise die Würze (WO) und Wärmeträger bzw. Kälteträger, zu übertragende Wärmestrom gegenüber einer weitergehenden Abkühlung der Würze auf oder insbesondere unterhalb des Temperaturoptimums des betrachteten Enzyms verringert, wodurch sich die Handhabung des Verfahrens vereinfacht. Weiter resultiert hieraus eine geringere Komplexität des Verfahrens zur Rückgewinnung von Wärme aus der zuvor wärmebehandelten Würze (WO) und der hierzu eingesetzten Vorrichtung.

Ferner wird erfindungsgemäß wenigstens eine Portion eines enzymhaltigen Substrats, vorzugsweise der Maische, des Maischeauszugs oder der nicht über 80 °C erwärmten, enzymhaltigen Würze, insbesondere einer Portion einer Vorderwürze, der auf diese Weise auf die erste Temperatur eingestellten, insbesondere vorgekühlten, Würze (WO) zugegeben. Hierdurch können die natürlicherweise im zugegebenen Substrat enthaltenen Enzyme in der bereits wärmebehandelten und damit enzyminaktiven Würze wirken, um den Abbau von hochmolekularen Substanzen, wie beispielsweise der Stärke, weiter voranzutreiben und möglichst zu vervollständigen. Ferner können die möglichen Wirkungen einer beim Abläutern in die Würze übergegangenen Fein- oder Feinstrübung, welche im weiteren Verfahren der Bier- oder Getränkeerzeugung problematisch sein kann, wenigstens teilweise vermieden werden. Darüber hinaus können vorteilhaft die Nachteile eines knapp gelösten Malzes zumindest zu einem gewissen Grad ausgeglichen werden.

Vorzugsweise beträgt das Volumen der Portion des enzymatischen Substrats, beispielsweise einer Vorderwürze, etwa 0,5 bis 4 %, vorzugsweise 1 bis 2 %, des Gesamtvolumens der Würze (WO), welchem die Portion des enzymatischen Substrats zugegeben wird.

Mit dem Verstreichenlassen einer vorgegebenen Zeitspanne (Schritt (2f)) wird sichergestellt, dass ausreichend Zeit für die enzymatische Umsetzung gegeben ist. Dabei bestimmen sowohl die Zusammensetzung des Ausgangsmaterials Würze (WO) als auch das jeweilige Enzym im enzymatischen Substrat und weitere Randbedingungen, wie beispielsweise die Temperatur der Würze (WO), die minimal erforderliche und optimale Einwirkzeit. Durch den zusätzlichen Erwärmungsschritt kann die Aktivität der mit der Zugabe hinzugefügten Enzyme durch thermische Inaktivierung definiert beendet oder zumindest verringert werden. Hierdurch wird die Steuerung der enzymatischen Aktivitäten weiter verbessert. Dabei erfolgt das Erwärmen vorzugsweise nach der Klärung der Würze. Hierbei kann die Zeit während des Klärens, beispielsweise im Whirlpool, vorteilhaft zur Einwirkung der Enzyme genutzt werden. Das Halten der erhöhten dritten Temperatur der Würze ist nur solange erforderlich, bis die betreffende Enzymart in der Würze vollständig oder zu einem ausreichenden Grad inaktiviert wurde.

Als Einwirkdauer für die Enzyme bzw. vorgegebene Zeitspanne kann vorzugsweise eine Dauer von bis zu 60 min, vorzugweise 3 bis 30 min, insbesondere 5 bis 25 min, gewählt werden. Eine derartige Einwirkdauer sichert einerseits eine im Wesentlichen vollständige enzymatische Umsetzung bzw. deren Komplettierung, andererseits wird durch die Beschränkung der Dauer eine mögliche thermische Belastung der Würze verkleinert.

Das Zwischenlagern ermöglicht es, die enzymhaltige Portion der Maische, des Maischeauszugs und/oder der zweiten Würze/Vorderwürze zu einem beliebigen Zeitpunkt später zur Behandlung einer Würze einzusetzen, beispielsweise vor, während und/oder nach einer Whirlpoolrast oder eines anderen Trennschritts. Hierdurch steigt die zeitliche Flexibilität bei der Anwendung des erfindungsgemäßen Verfahrens. Das Zwischenlagern in beispielsweise einem einzigen Speichergefäß macht es zudem möglich, auf einfache Weise und kostengünstig ein Gemisch von verschiedenen Maisch- und/oder Würze-/Vorderwürzeportionen zu erzeugen und für die spätere Verwendung zu lagern. Bei Vorsehen mehrerer Speichergefäße wird die Flexibilität der Handhabung vorteilhaft weiter verbessert.

Das Einstellen der Temperatur, insbesondere Kühlen, der Würze auf die erste Temperatur und/oder das Kühlen der Würze auf die zweite Temperatur und/oder das Erwärmen der Würze auf die dritte Temperatur können in demselben Wärmeüberträger durchgeführt werden.

Indem möglichst alle Kühl- und ggf. Erwärmungsschritte in demselben Wärmeüberträger durchgeführt werden, wird der apparative Aufwand bei der Verwirklichung des erfindungsgemäßen Verfahrens und damit die erforderliche Anlageninvestitionen minimiert.

### Weitere Offenbarung, Alternativen und Vorteile zur Isomerisierungsvorrichtung (IV) und zum dritten Teilverfahren (TV3)

Durch das zusätzliche Vorsehen einer separaten Isomerisierungsvorrichtung (IV) zum Isomerisieren von isomerisierbaren Hopfenbestandteilen bzw. das dritte Teilverfahren (TV3) und der vorstehend aufgeführten spezifischen Ausführungsformen ergeben sich die nachfolgenden Vorteile:
Erfindungsgemäß wird folglich die Temperatur des Gemisches (IG) aus dem Hopfensubstrat (IH) und dem Isomerisierungssubstrat (IS) unterhalb einer Temperatur (TMAX) gehalten, welche die Würze (WO) während der thermischen Behandlung derselben im Bierbereitungsverfahren höchstens erreicht. Letztere ist üblicherweise die Heißhalte- oder die Kochtemperatur der Würze. Aufgrund der gegenüber der herkömmlichen Würze- und Hopfenbehandlung und insbesondere gegenüber bekannten Hochtemperatur-Schnellisomerisierungsverfahren (mit T = ca. 120 °C) abgesenkten Temperatur läuft die Isomerisierung erfindungsgemäß schonender ab und die thermische Belastung ist geringer, was sich beispielsweise in einem geringeren Anstieg der Thiobarbitursäurezahl (TBZ) ausdrückt. Dies bedeutet auch eine schonendere Behandlung des Hopfenaromas, was sich positiv auf die Qualität des resultierenden Isomerisats auswirkt.

Darüber hinaus ist der Energiebedarf des vorgeschlagenen Verfahrens aufgrund der abgesenkten Temperatur während der Isomerisierung geringer.

In Zusammenhang mit dem Vorhandensein einer Fracht von Partikeln, die gröber sind als die in herkömmlich erzeugten Würzen (z.B. Läuterbottich-Würzen), in den mittels der erfindungsgemäßen Läutervorrichtung erzeugten Würzen haben die Erfinder festgestellt, dass bei Vorhandensein dieser Partikeln, die Isomerisierungsausbeute der Hopfenbestandteile steigt.

Das Isomerisierungssubstrat (IS) weist vorzugsweise ein Volumen im Bereich von 25 bis 45 %, vorzugsweise 30 bis 40 %, des Pfanne-voll-Volumens des jeweiligen Sudes auf. Die restliche Würzemenge wird der thermischen Behandlung zugeführt.

Die aufgrund der abgesenkten Temperatur geringere Isomerisierungsgeschwindigkeit wird im erfindungsgemäßen Verfahren durch eine um wenigstens 20 Minuten gegenüber der herkömmlichen thermischen Behandlung verlängerten Isomerisierungsdauer (tI) kompensiert, so dass beim Isomerisierungsgrad bzw. bei der Isomerisierungsausbeute keine Einbußen in Kauf genommen werden müssen. Während die Isomerisierungsdauer bei der herkömmlichen Würzekochung im Wesentlichen auf die Kochzeit beschränkt ist, wird erfindungsgemäß mit der separaten Behandlung des Hopfensubstrats (IH) bzw. des Gemisches (IG) unabhängig von der Wärmebehandlung des Würzebatches eine Verlängerung der Isomerisierungsdauer möglich. Somit kann die Isomerisierungsdauer (tI) völlig unabhängig von der eigentlichen thermischen Behandlung der Würze (WO) eingestellt werden. So kann erfindungsgemäß neben der Kochdauer beispielsweise auch die Dauer der Heißtrubabscheidung im Whirlpool schritt genutzt werden, um parallel die Hopfenisomerisierung voranzutreiben und hierdurch die Ausbeute an isomerisierten Hopfenbestandteilen zu erhöhen. Anders gesagt, gelingt es durch das vorgeschlagene Verfahren, eine optimale Ausbeute an isomerisierten Hopfenbestandteilen, wie α-Säuren, zu erzielen, ohne dass die Temperatur während der Isomerisierung auf die übliche Temperatur während der thermischen Behandlung der Würze (WO) oder sogar darüber angehoben werden muss.

Es ist ferner vorteilhaft, bei der Durchführung der Isomerisierung eine Unterschreitung der im Anspruch definierten, unteren Grenztemperatur des Temperaturbereichs zu vermeiden. Hierdurch wird sichergestellt, dass die Isomerisierungsreaktion bis zum Erreichen des gewünschten Isomerisierungsgrades noch in akzeptabler Zeit abläuft. Eine Absenkung der Isomerisierungstemperatur unter die untere Grenztemperatur hätte eine starke Verlangsamung der Isomerisierungsreaktion zufolge, so dass der gewünschte Isomerisierungsgrad in der vorgegebenen Zeit möglichweise nicht erreicht werden kann.

Da erfindungsgemäß die Konzentration des eingesetzten Isomerisierungssubstrats (IS) aufgrund des geringen Extraktgehaltes gering ist und zudem der Feststoffgehalt beispielsweise im Vergleich zur Vorderwürze bzw. der ersten Würze (WO1) desselben Suds geringer ist, ist der Verlust an wertvollen Hopfenbestandteilen vermindert. Ferner sind die Verluste an wertvollen Bestandteilen, welche im Hopfentrub zurückbleiben, geringer. Nebenbei wird aufgrund der geringeren Menge an Hopfentrub auch ein geringerer Verlust an im Hopfentrub zurückbleibender Würze erzielt, was die letztendlich mit dem Brauverfahren erzielbare Extraktausbeute steigert.

Dagegen kann es nach der Beobachtung der Erfinder vorteilhaft sein, wenn das eingesetzte Isomerisierungssubstrat (IS) einen Anteil an Grobpartikeln aufweist, insbesondere, falls im Isomerisierungssubstrat (IS) auch Feinpartikel anwesend sind. Hierbei versteht man unter Grobpartikeln Partikeln mit Partikelgrößen zwischen 40 und 400 µm, vorzugsweise zwischen 40 und 300 µm, insbesondere zwischen 40 und 200 µm. Unter Feinpartikel werden hier Partikel mit einer Partikelgröße von kleiner 40 µm, vorzugsweise von etwa 1 µm bis kleiner 40 µm, verstanden. Dabei wird die Partikelgrößenmessung gemäß der im Anhang aufgeführten Methode durchgeführt.

Die Konzentration der vorstehend definierten Grobpartikel im Isomerisierungssubstrat (IS) kann bei > 100 mg/l, vorzugsweise bei > 200 mg/l, insbesondere bei > 400 mg/l, liegen. Wenn die Grobpartikel im Isomerisierungssubstrat (IS) in einer Menge von > 100 mg/l, vorzugsweise bei > 200 mg/l, insbesondere von > 400 mg/l, vorhanden sind, wurde eine weitere Steigerung der Isomerisierungsausbeute der Hopfenbestandteile, insbesondere der α-Säuren, beobachtet. Vermutlich haben die Grobpartikel im Gegensatz zu den Feinpartikeln aufgrund ihrer geringeren spezifischen Oberfläche eine geringere Affinität zu anderen Substanzen, so dass diese die Hopfenbestandteile weniger binden. Möglicherweise absorbieren die Grobpartikel auch die im Isomerisierungssubstrat (IS) vorhandenen Feinpartikel, so dass die Feinpartikel ihre adsorbierende Wirkung auf die Hopfenbestandteile nicht mehr oder nur vermindert ausüben können.

Die Kombination aus im Vergleich zu herkömmlichen Verfahren geringerer Konzentration des eingesetzten Isomerisierungssubstrats (IS) und der abgesenkten Isomerisierungstemperatur wirkt sich positiv auf die Qualität des resultierenden Isomerisats aus, da die thermische Belastung geringer ist.

Besonders vorteilhaft ist, wenn als Isomerisierungssubstrat (IS) ein Nachguss bzw. Nachgussablauf oder ein Glattwasser aus dem herkömmlichen Bierbereitungsverfahren verwendet werden, da diese Substrate sowohl einen geringen Extraktgehalt, als auch einen geringen Feststoffgehalt bzw. eine geringe Partikelfracht beispielsweise im Vergleich zur Vorderwürze bzw. der ersten Würze (WO1) desselben Suds aufweisen, was zu geringeren Verlusten an isomerisierten Hopfenbestandteilen führt. Darüber hinaus ist die thermische Belastung geringer, da eine geringere Menge an organischer Fracht im Isomerisierungssubstrat (IS) vorhanden ist. Zudem ist der pH-Wert dieser Substrate relativ hoch, was ebenfalls die Isomerisierung fördert.

Durch die Möglichkeit der Ausdampfung, bspw. durch Vorsehen des Dunstrohrs (ID), kann vorteilhaft eine Abreicherung unerwünschter Hopfenbestandteile im Gemisch (IG), wie Myrcen, erzielt werden. Durch die im Vergleich zur herkömmlichen Würzekochung verringerte Ausdampfung von Hopfenbestandteilen während des Schrittes (3d) wird eine selektive Ausdampfung unerwünschter Hopfenbestandteile in einem nachgeschalteten Schritt ermöglicht.

Wenn das Gemisch gemäß Schritt (3f) mit der Würze (WO) erst nach dem Abtrennen wenigstens eines Teils der Feststoffe der Würze (WO) in Kontakt kommt, bspw. wenn die Zugabe des Gemischs (IG) zur Würze (WO) erst nach Whirlpool schritt erfolgt, kommen die isomerisierten Hopfenstoffe erst mit der gekochten und feststoffabgereicherten Würze (WO) in Kontakt. Hierdurch werden die Verluste an Iso-α-Säuren durch Adsorption an Heißtrub oder sonstigen Partikeln minimiert.

In Schritt (3d) des erfindungsgemäßen dritten Teilverfahrens kann die Temperatur des Gemisches (IG) auch auf eine Temperatur innerhalb eines der nachfolgenden Temperaturbereiche (TB) eingestellt werden:
15 °C unterhalb bis 2 °C unterhalb,
vorzugsweise 10 °C unterhalb bis 2 °C unterhalb,
vorzugsweise 12 °C unterhalb bis 3 °C unterhalb,
vorzugsweise 8 °C unterhalb bis 2 °C unterhalb,
vorzugsweise 10 °C unterhalb bis 3 °C unterhalb,
vorzugsweise 15 °C unterhalb bis 5 °C unterhalb,
vorzugsweise 10 °C unterhalb bis 4 °C unterhalb,
vorzugsweise 8 °C unterhalb bis 3 °C unterhalb,
vorzugsweise 7 °C unterhalb bis 3 °C unterhalb,
der Temperatur (TMAX), welche eine Würze (WO) während einer thermischen Behandlung derselben im Bierbereitungsverfahren höchstens erreicht.

Der Temperaturbereich (TB) kann alternativ auch einen der folgenden Bereiche umfassen: 85 bis 98 °C; 85 bis 97 °C; 85 bis 96 °C; 85 bis 95 °C; 88 bis 98 °C; 88 bis 95 °C; 88 bis 94 °C; 90 bis 98 °C; 90 bis 97 °C; 90 bis 96 °C; 90 bis 95 °C; und 92 bis 97 °C.

Weitere Offenbarung, Alternativen und Vorteile zur Klärvorrichtung (KV) und zum vierten Teilverfahren (TV4):
Durch das Kühlen der Würze im oberen Bereich des Gefäßes (KVB) wird die Klärung der Würze beschleunigt. Die Trubpartikel sinken signifikant früher ab, so dass die Klärdauer vorteilhaft verkürzt werden kann. Zudem ist das resultierende Sediment kompakter und fester, wodurch insgesamt eine schnellere und bessere Feststoffabtrennung resultiert. Analoges gilt beim Kühlen im unteren Bereich des Gefäßes (KVB).

Wenn der Behälter als Konus oder Zylindrokonus ausgeführt ist, kann durch die Einstellung des Öffnungswinkels auf einen bestimmten Winkelbereich eine optimale Geometrie für die Feststoffabscheidung erzielt werden.

Indem die Würze in tangentialer oder im Wesentlichen tangentialer Richtung zur Wand des Gefäßes (KVB) einströmen gelassen wird, kommt der Würzekörper in Rotationsbewegung, wodurch sich die Feststoffsedimentation beschleunigt.

Durch das Vorsehen von mehreren Auslassöffnungen in unterschiedlichen Höhen kann mit dem Würzeabzug sehr schnell von oben bei dem sich am schnellsten klärenden Würzeteilvolumen begonnen werden und der Abzug Schritt für Schritt nach unten fortgesetzt werden. Insgesamt resultieren hieraus eine Zeitersparnis und eine geringere thermische Belastung der Würze bei der Klärung, da mit dem Abzug früher begonnen und dieser schneller beendet werden kann.

Erfindungsgemäß kann das Kühlen nur auf die obere oder untere Hälfte oder nur auf das obere oder untere Drittel des Gefäßes (KVB) beschränkt sein. Eine Beschränkung der Kühlung auf die genannten Bereiche hat sich im Vergleich zu einer vollständigen Kühlung oder zu keiner Kühlung des Gefäßes (KVB) als besonders vorteilhaft in Bezug auf eine schnelle und vollständige Abtrennung der Feststoffpartikeln herausgestellt.

Weitere Offenbarung, Alternativen und Vorteile zum fünften Teilverfahren (TV5):
Durch ihre Untersuchungen sind die Erfinder ferner zur Erkenntnis gekommen, dass sich durch das Mischen eines bestimmten Zuschlagstoffs, welcher bestimmte Feststoffe enthält, mit einer trüben, aus einer mittels Oberflächenfiltration als Läutermethode erhaltenen Würze, die die Feintrübung verursachende Feststofffracht letztlich (d.h., nach erneuter Feststoffabtrennung) verringern lässt.

Die hier betroffene, aus dem Teilverfahren (TV1) erhaltene Würze (WO) weist oft eine Feststofffracht von wenigstens 300 mg/L, oftmals wenigstens 1.000 mg/L oder sogar von mehr als 2.000 mg/L auf. Überraschenderweise scheint der Zuschlagstoff in der trüben Würze auf irgendeine Weise ein Binden oder Agglomerieren der die Fein- oder Feinsttrübung verursachenden Partikel zu verursachen, so dass eine unerwartete Klärwirkung bezüglich der Feintrübung erzielt werden kann. So vermuten es jedenfalls die Erfinder in ihrer Arbeitshypothese, ohne dass bisher hierzu belastbare veröffentlichte Forschungsergebnisse vorliegen würden.

Eine zusätzliche Erkenntnis ist, dass sich durch das Mischen mit dem Zuschlagstoff die Ausbeute an Hopfenbestandteilen, wie beispielsweise isomerisierten α-Säuren, bei einer nachgeschalteten Hopfung der Würze bzw. des Gemisches aus Würze und Zuschlagstoff steigern lässt, vor allem, wenn die Feststoffe, also die an den Zuschlagstoff gebundenen Feinpartikel, wenigstens teilweise vor der Hopfung entfernt werden.

Das teilweise und insbesondere das weitgehende oder vollständige Homogenisieren des Gemisches erlaubt ein intensives Inkontaktkommen der Trübungspartikel mit den Feststoffen des Zuschlagstoffs. Hierdurch wird eine Klärung oder Abreicherung der Feststofffracht in der Würze wie vorstehend beschrieben beschleunigt.

Wenn der Zuschlagstoff noch vor der thermischen Behandlung der Würze, insbesondere vor der Würzekochung, zugegeben wird und eine thermische Behandlung stattfindet, wird eine weiter verbesserte Abreicherung der Würze an fein dispergierten Feststoffpartikeln erzielt. Die liegt vermutlich daran, dass sich die zur Würze zugegebenen Feststoffteilchen und die beim Heißhalten oder Kochen der Würze in Gestalt des Heißtrubes ausfallenden Eiweißagglomerate in ihrer klärenden Wirkung ergänzen, sodass die verbleibende Feintrübung der Würze bzw. des Gemisches noch weiter gesenkt werden kann.

Eine weitere, nicht absehbare Erkenntnis ist, dass die spätere Zugabe eines Hopfensubstrats zu der wie vorstehend beschrieben behandelten Würze zu einer erhöhten Ausbeute an wertvollen Hopfenbestandteilen, wie beispielsweise isomerisierten α-Säuren, in der erfindungsgemäß behandelten und gehopften Würze bzw. im Gemisch zur Folge hat.

Dabei kann die Zugabe des Hopfensubstrats bevorzugt 5 bis 15 min vor dem Abschluss der thermischen Behandlung gemäß Schritt (5d) erfolgen. Die Zugabe könnte aber auch erst am Ende oder nach Abschluss der thermischen Behandlung erfolgen. Zum Zeitpunkt der Hopfengabe ist in diesen Fällen die Abreicherung der Trübungspartikel bereits fortgeschritten. Zudem ist noch eine ausreichende Menge an thermischer Energie vorhanden und die Isomerisierungsdauer ausreichend lange, um eine hohe Ausbeute an isomerisierten Hopfenbestandteilen zu erzielen. Besonders vorteilhaft ist dabei, wenn die Hopfengabe nach einem wenigstens teilweisen Abtrennen der in der den Zuschlagstoff (Z) enthaltenden Würze (WO) bzw. im Zuschlagstoff-Gemisch (ZG) enthaltenen Feststoffe erfolgt, wodurch der Verlust an Hopfenbestandteilen, insbesondere an isomerisierten Hopfenbestandteilen, verringert wird. Vorteilhaft können nach dem Erhalt der den Zuschlagstoff (Z) enthaltenden Würze (WO) oder nach dem thermischen Behandeln der den Zuschlagstoff (Z) enthaltenden Würze (WO), insbesondere vor der Hopfengabe, die in der Würze (WO) enthaltenen Feststoffe derart abgetrennt werden, dass die resultierende Würze (WO) ein Gehalt an Feststoffen von höchstens 100 mg/L, vorzugsweise höchstens 70 mg/L, aufweist.

Es wird vermutet, dass die Feststoffe, die aus dem Zuschlagstoff stammen, durch den Kontakt mit der Würze die Trübungspartikel wenigstens teilwiese binden oder zur Sedimentation bringen. Folglich wird durch ein teilweises oder vollständiges Abtrennen der Feststoffe der Würze (WO) sichergestellt, dass auch ein erheblicher Teil der Trübungspartikel aus der Würze bzw. dem Gemisch (mit-)entfernt wird, bevor das Hopfenprodukt zugegeben wird. Durch das Vorhandensein einer geringeren Feststoffmenge in der Würze wird eine weitere Steigerung der Ausbeute an isomerisierten Hopfenbestandteilen erzielt. Dies ist vermutlich auf geringere Absorptionsverluste der Hopfenbestandteile an Feststoffpartikeln zurückzuführen.

Die vorstehend beschriebenen, erfindungsgemäßen Gegenstände, die Brauanlage, die Vorrichtungen und das Verfahren zur Gewinnung und/oder zur Behandlung von Würze in der Bierbrauerei und Getränkeindustrie und entsprechende Verwendungen sind geeignet, Würzen aus Maischen zu erzeugen und/oder zu behandeln, wobei die Maischen unter Verwendung eines herkömmlichen, zum Einsatz in einem Läuterbottich geeigneten Malz- und/oder Rohfruchtschrotes hergestellt wurden, insbesondere von Schrot, der mittels einer 4- oder 6-Walzenmühle erzeugt wurde.

Überraschenderweise sind die erfindungsgemäßen Gegenstände zudem auch geeignet sein, eine Würze aus einer Maische oder ein anderes Medium zu gewinnen und/oder zu behandeln, die aus einem Malz- und/oder Rohfruchtschrot hergestellt wurden, der zum Einsatz in einem Maischefilter geeignet ist, insbesondere von Schrot, der mittels einer Hammermühle erzeugt wurde.

Darüber hinaus sind die erfindungsgemäßen Gegenstände auch geeignet, eine Maische oder ein anderes Medium zu behandeln, insbesondere eine Würze aus einer Maische zu gewinnen und/oder zu klären, wobei die Maische oder das Medium aus einem oder mehreren vermälzten oder unvermälzten Rohstoffen hergestellt wurde, ausgewählt aus der Gruppe von zur Erzeugung vom Bier oder sonstigen Getränken geeigneten Rohstoffen.

Damit zeigen die erfindungsgemäßen Gegenstände eine hohe, bisher ungekannte Flexibilität hinsichtlich der einsetzbaren Rohstoffe und Vorbehandlung, insbesondere Schrotung, derselben. Bei allen einsetzbaren Rohstoffen und entsprechenden Vorbehandlungen wird eine hohe Extraktausbeute erzielt.

Es ist ausdrücklich Teil der Erfindung, dass sich die vorstehend beschriebenen Brauanlage, Vorrichtungen und Teilvorrichtungen derselben, Verfahren, Teilverfahren und Verwendungen zur Gewinnung von Würze aus Maische oder zum Behandeln der Würze jeweils miteinander kombinieren lassen. Insbesondere lassen sich auch alle in dieser Anmeldung genannten Merkmale vorteilhafter Ausführungsformen mit allen beschriebenen oder beanspruchten, erfindungsgemäßen Gegenständen kombinieren.

Insbesondere ist es Teil der Erfindung, dass sich alle vorstehend beschriebenen Vorrichtungen zur Gewinnung und/oder Behandlung von Würze, insbesondere die jeweiligen, vorstehend separat beschriebenen (Teil-)Vorrichtungen, welche Teil der Brauanlage sein können, oder alle erfindungsgemäßen Verfahren zur Gewinnung und/oder Behandlung einer Würze, insbesondere die vorstehend beschriebenen Teilverfahren, jeweils einzeln oder in beliebiger Kombination miteinander in dieser Anmeldung offenbart werden.

Alle erfindungsgemäßen Vorrichtungen und die darauf aufbauende Brauanlage können diskontinuierlich im Batchverfahren betrieben werden. Es ist jedoch besonders vorteilhaft, wenn die erfindungsgemäßen Vorrichtungen und die darauf aufbauende Brauanlage kontinuierlich betrieben werden. Entsprechend können die in dieser Anmeldung beschriebenen, erfindungsgemäßen Verfahren und Teilverfahren diskontinuierlich, d.h., batchweise, oder besonders vorteilhaft, kontinuierlich betrieben werden. Besteht das erfindungsgemäße Verfahren aus mehreren Schritten, so können alle Schritte jeweils kontinuierlich und damit das gesamte Verfahren kontinuierlich durchgeführt werden. Alternativ können jedoch alle Schritte jeweils diskontinuierlich und damit das gesamte Verfahren diskontinuierlich durchgeführt werden. Die Erfindung ist jedoch nicht hierauf beschränkt. Es ist demnach auch Teil der Erfindung, dass im Rahmen des erfindungsgemäßen Verfahrens kontinuierliche und diskontinuierliche Verfahrensschritte beliebig miteinander kombiniert werden können. Entsprechendes gilt für die Ausgestaltung der erfindungsgemäßen Brauanlage und der erfindungsgemäßen Verwendungen.

Besonders vorteilhaft ist, wenn die Läutervorrichtung (LV) eine erste Läutervorrichtung (LV1), eine zweite Läutervorrichtung (LV2), eine dritte Läutervorrichtung (LV3) und eine vierte Läutervorrichtung (LV4) aufweist, welche in Serie geschaltet sind. Dabei werden vorzugsweise die erste Würze (WO1), die mit der ersten Läutervorrichtung (LV1) erzeugt wurde, und die zweite Würze (WO2), die mit der zweiten Läutervorrichtung (LV2) erzeugt wurde, als Gemisch (= Würze (WO)) der thermischen Behandlung und den weiteren Schritten der Würzebehandlung, wie Klärung und Kühlung, zugeführt. Vorteilhaft wird ein Teil der ersten Würze (WO1) als enzymhaltiges Substrat (ES) im zweiten Teilverfahren verwendet, da die erste Würze (WO1) als Vorderwürze eine verhältnismäßig hohe Konzentration an Enzymen aufweist.

Dagegen wird ein Gemisch aus der dritten Würze (WO3), die mit der dritten Läutervorrichtung (LV3) erzeugt wurde, und der vierten Würze (WO4), die mit der vierten Läutervorrichtung (LV4) erzeugt wurde, oder die vierte Würze (WO4) vorzugsweise als Isomerisierungssubstrat (IS) bei der Durchführung des dritten Teilverfahrens (TV3) verwendet. Durch die geringere Partikelfracht und die höheren pH-Werte dieser Würzefraktionen ist die Isomerisierungsausbeute der Hopfenbestandteile im dritten Teilverfahrens (TV3) erhöht.

Alternativ oder ergänzend zu den vorstehend beschriebenen Ausführungsformen der Erfindung kann die Einrichtung (WH) zum Klären der Würze (WO) bzw. zum wenigstens teilweisen Klären der Würze (WO) aus wenigstens einer Einrichtung ausgebildet sein, welche identisch oder baugleich mit der in dieser Anmeldung beschriebenen ersten Läutervorrichtung (LV1) oder einer in dieser Anmeldung beschriebenen Abwandlung davon ist. Die Einrichtung (WH) zum Klären der Würze (WO) kann dabei als eine oder eine Mehrzahl von Einrichtungen nach der Art der ersten Läutervorrichtung (LV1) sein. Falls eine Mehrzahl von Einrichtungen (WH) eingesetzt wird, können alle eingesetzten Einrichtungen (WH) dieselben sein. Es können jedoch auch unterschiedlich ausgestaltete, erste Läutervorrichtungen (LV1) eingesetzt werden. Ferner können die Einrichtungen (WH) in Serie und/oder parallel angeordnet sein. Für die Einrichtung (WH) zum Klären der Würze (WO) gelten dabei erfindungsgemäß die gleichen Abwandlungs- und Kombinationsmöglichkeiten wie vorstehend für die erste und die weiteren Läutervorrichtungen (LV1, LV2, ...) beschrieben, analog. Erfindungsgemäß kann insbesondere vorgesehen sein, beispielsweise einen herkömmlich verwendeten Whirlpool oder einen Setzbottich, durch eine in diesem Absatz beschriebene Einrichtung (WH) zu ersetzen. Bezüglich der Anordnungsmöglichkeiten der in diesem Absatz beschriebenen Einrichtung (WH) innerhalb der erfindungsgemäßen Brauanlage (OM) und der Verwendung derselben im erfindungsgemäßen Verfahren (VO) gilt das vorstehend in dieser Anmeldung allgemein für die Einrichtung (WH) beschriebene.

Beispielhafte Ausführungsformen der Erfindung sind Gegenstand der Zeichnung. So zeigen:
- Fig. 1: eine schematische Ansicht einer ersten Ausführungsform der erfindungsgemäßen Brauanlage (OM);
- Fig. 2: eine schematische Ansicht einer zweiten Ausführungsform der erfindungsgemäßen Brauanlage (OM);
- Fig. 3: eine schematische Ansicht einer dritten Ausführungsform der erfindungsgemäßen Brauanlage (OM); und
- Fig. 4: eine schematische Ansicht einer vierten Ausführungsform der erfindungsgemäßen Brauanlage (OM).

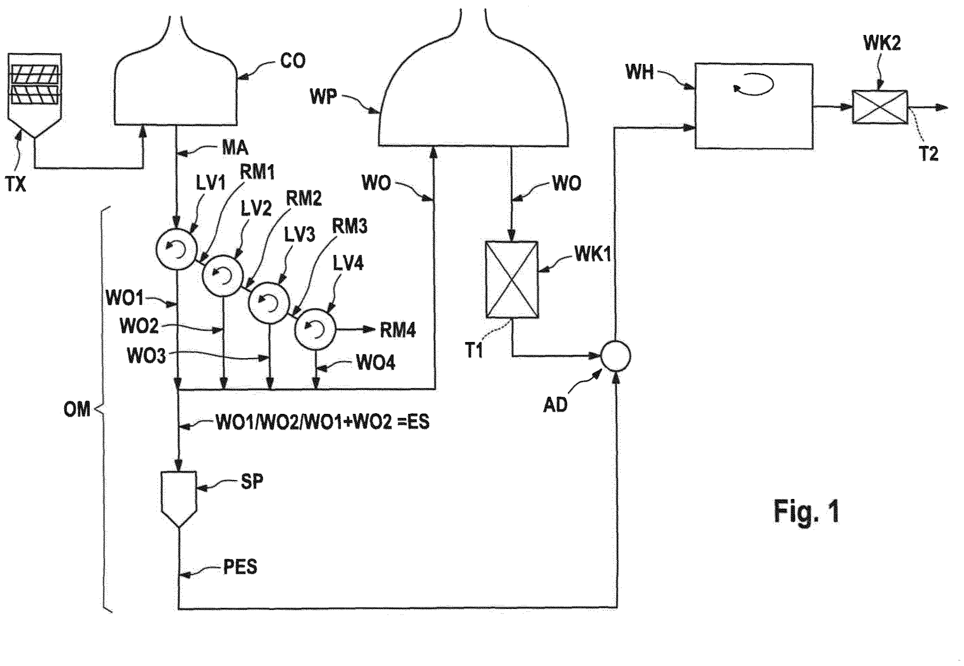

Fig. 1 zeigt eine erste Ausführungsform einer erfindungsgemäßen Brauanlage (OM) zur Gewinnung und Behandlung einer Würze in der Bierbrauerei oder Getränkeindustrie. Die Brauanlage (OM) gemäß dieser Ausführungsform weist eine Läutervorrichtung (LV), bestehend aus einer ersten Läutervorrichtung (LV1), einer zweiten Läutervorrichtung (LV2), einer dritten Läutervorrichtung (LV3) und einer vierten Läutervorrichtung (LV4), auf, welche in Serie geschaltet sind. Die Erfindung ist jedoch nicht hierauf beschränkt, sondern kann auch aus nur einer oder zwei oder drei oder mehr Läutervorrichtungen bestehen. Wenn zwei oder mehr Läutervorrichtungen vorgesehen sind, können diese in Bezug auf den Strömungsweg der Maische oder Würze parallel, seriell oder parallel/seriell kombiniert werden. Die Läutervorrichtung (LV) ist stromabwärts zu einer Mühle (TX) und einer Maischvorrichtung (CO) angeordnet, welche nicht Teil der Brauanlage (OM) sind, jedoch sein können. Die Läutervorrichtung (LV) ist ferner stromaufwärts zu einer Einrichtung (WP) zum Heißhalten oder Kochen der Würze (WO) angeordnet, welche ebenfalls nicht Teil der Brauanlage (OM) ist, aber sein kann.

Die Brauanlage (OM) gemäß dieser Ausführungsform weist ferner eine zweite Vorrichtung (V2) auf. Die zweite Vorrichtung (V2) weist eine erste Einrichtung (WK1) zum Einstellen der Temperatur der Würze (WO) auf eine erste Temperatur (T1) zwischen 0 und 85 °C auf. Die erste Einrichtung (WK1) ist stromabwärts zur Einrichtung (WP) zum Heißhalten oder Kochen der Würze (WO) angeordnet. Ferner weist die zweite Vorrichtung (V2) eine Einrichtung (AD) zum Zugeben wenigstens einer Portion (PES) eines enzymhaltigen Substrats (ES) auf. Die Einrichtung (AD) ist stromabwärts zur ersten Einrichtung (WK1) angeordnet.

Die Brauanlage (OM) kann eine Einrichtung (WH) zum wenigstens teilweisen Klären der Würze (WO), vorzugsweise einen Whirlpool oder einen Setzbottich, vorsehen. Die Klär-Einrichtung (WH) wird vorzugsweise stromabwärts zur Einrichtung (AD) und stromaufwärts zu einer zweiten Einrichtung (WK2) zum Kühlen der in der Einrichtung (WH) behandelten Würze (WO) auf eine zweite Temperatur (T2), vorzugsweise Anstelltemperatur, angeordnet.

Ferner kann die Brauanlage (OM) eine Einrichtung (SP) zum Abziehen und/oder Speichern der wenigstens einer Portion (PES) eines enzymhaltigen Substrats (ES) aufweisen.

Erfindungsgemäß kann eine Maische mit einem beliebigen Verfahren erzeugt werden. Dies schließt ein breite Variation von Rohstoffen einschließlich Rohfrucht und schlecht aufgeschlossenen Malzen mit ein. Verfahrenstechnisch können erfindungsgemäß alle herkömmlichen Maischverfahren einschließlich Kurzmaischverfahren und/oder Maischverfahren mit geringen Abmaischtemperaturen von 65 °C oder darunter zum Einsatz kommen. Die Maischetrennung erfolgt erfindungsgemäß in der Läutervorrichtung (LV), die in dieser Ausführungsform in Gestalt der ersten bis vierten Läutervorrichtung (LV1, LV2, LV3, LV4) ausgeführt ist. Eine Drehbewegung der jeweiligen Trennvorrichtung einer jeden Läutervorrichtung (LV1, LV2, LV3, LV4) ist in der Figur angedeutet. Eine detaillierte Beschreibung möglicher Ausgestaltungen der jeweiligen Läutervorrichtung sowie der seriellen Schaltung von vier dieser Läutervorrichtungen findet sich beispielsweise in der deutschen Patentanmeldung DE 10 2014 116 308, veröffentlicht als Offenlegungsschrift DE 10 2014 116 308 A1, beschrieben (vgl. Seiten 4 bis 22 und 56 bis 67 der Anmeldung, und die Figuren 1 bis 4 und Seiten 75 bis 77 der Anmeldung), auf deren Offenbarung hiermit vollinhaltlich Bezug genommen wird.

Die Maische wird innerhalb der ersten Läutervorrichtung (LV1) in eine erste Würze (WO1) und eine erste Restmaische (RM1) getrennt. Letztere wird unter Zugabe eines Extraktionsmittels, vorzugsweise Wasser oder eine verdünnte Würze, als erstes Gemisch (MX1) in die zweite Läutervorrichtung (LV2) überführt, wo das erste Gemisch (MX1) in eine zweite Würze (WO2) und eine zweite Restmaische (RM2) getrennt wird. Die zweite Restmaische (RM2) wird wiederum unter Zugabe eines Extraktionsmittels, vorzugsweise Wasser oder eine verdünnte Würze, zum zweiten Gemisch (MX2), welches in die dritte Läutervorrichtung (LV3) überführt wird, wo es in eine dritte Würze (WO3) und eine dritte Restmaische (RM3) getrennt wird. Die dritte Restmaische (RM3) wird wiederum unter Zugabe eines Extraktionsmittels, vorzugsweise Wasser oder eine verdünnte Würze, zum dritten Gemisch (MX3), welches in die vierte Läutervorrichtung (LV4) überführt wird, wo es in eine vierte Würze (WO4) und eine vierte Restmaische (RM4) getrennt wird. Die vierte Restmaische (RM4) wird als Treber verworfen oder anderweitig verwertet. Die Zugabe des Extraktionsmittels zur jeweiligen Restmaische (RM1, RM2, RM3), beispielsweise zwischen oder in den Läutervorrichtungen (LV1, LV2, LV3, LV4) ist in der Figur zum Erhalt der Übersichtlichkeit wegelassen.

Die Extraktgehalte und Trübungen der ersten bis vierten Würze (WO1, WO2, WO3, WO4) nehmen in der Reihenfolge WO1, WO2, WO3, WO4 ab, wobei die erste Würze (WO1) einer Vorderwürze entspricht, die zweite Würze (WO2) und ggf. die dritte Würze (WO3) einem Nachgussablauf und die vierte Würze (WO4) einem Glattwasser entspricht. Dagegen nehmen die pH-Werte der Würzen in dieser Reihenfolge zu. So hatte in einem Versuch die erste Würze (WO1) einen Extraktgehalt von 13,4 °P und einen pH-Wert von 5,9, die zweite Würze (WO2) einen Extraktgehalt von 3,6 °P und einen pH-Wert von 6,7, die dritte Würze (WO3) einen Extraktgehalt von 1,1 °P und einen pH-Wert von 7,2, die vierte Würze (WO4) einen Extraktgehalt von 0,6 °P und einen pH-Wert von 7,5.

Ein Teilvolumen der ersten Würze (WO1) oder der zweiten Würze (WO2) oder eine Mischung derselben wird bei dieser Ausführungsform abgezweigt und als Portion (PES) des enzymhaltigen Substrats (ES) wie nachstehend beschrieben verwendet. Diese Portion (PES) weist beispielsweise 2,5 Volumen-% des Pfanne-voll-Volumens der Würze (WO) dieses Suds auf. Dabei wird darauf geachtet, dass die Temperatur der Portion (PES) und der ersten Würze (WO1) bzw. der zweiten Würze (WO2), aus der bzw. denen die Portion (PES) gewonnen wird, vorzugsweise 76 °C nicht überschreitet, um die darin enthaltenen Enzyme nicht oder nur unwesentlich zu inaktivieren. Die Portion (PES) wird durch die Einrichtung (SP) abgezogen und darin gespeichert.

Die restliche erste bis vierte Würze (WO1, WO2, WO3, WO4) wird als Gemisch (= Würze (WO)) einer thermischen Behandlung, vorzugsweise Heißhalten oder Kochen, in der Einrichtung (WP) zugeführt. Während dieser Behandlung, welche der klassischen Würzekochung entsprechen kann, kann die Würze (WO) zudem nach allen bekannten Verfahren gehopft werden. Die nach Abschluss der thermischen Behandlung resultierende Ausschlagwürze (WO) wird in der ersten Einrichtung (WK1) auf eine erste Temperatur (T1) zwischen 0 und 85 °C, beispielsweise 74 °C, gekühlt. Dabei wird die erste Temperatur (T1) so gewählt, dass die Aktivität wenigstens eines Enzyms noch möglich ist, in Abhängigkeit von der zu erzielenden Wirkung. Mittels der Einrichtung (AD) wird der wie vorstehend beschrieben gekühlten Würze (WO) die zuvor gewonnene Portion (PES) des enzymhaltigen Substrats (ES) in einem Volumenanteil von ca. 2 bis 2,5 % zugegeben. Da die Temperatur der Würze (WO), welcher das enzymhaltige Substrat (ES) zugesetzt worden ist, im Temperaturoptimumbereich wenigstens eines Enzyms liegt, kann dieses Enzym seine Aktivität im anschließenden Klärschritt, d.h., bei der Abtrennung des Heißtrubs im Whirlpool, fortsetzen, sodass die Zeit der Whirlpoolrast vorteilhaft für die Enzymwirkung genutzt werden kann. Dazu wird die Würze (WO) der Klär-Einrichtung (WH), welche als herkömmlicher Whirlpool ausgebildet sein kann, zugeführt und der Heißtrub weitgehend entfernt.

Nach dem Abziehen der Würze (WO) aus der Klär-Einrichtung (WH) wird die Würze mittels der zweiten Einrichtung (WK2) auf die zweite Temperatur (T2), vorzugsweise Anstelltemperatur bei 8 °C, gekühlt und kann wie herkömmlich zu Bier weiterverarbeitet werden. Dies schließt die Schritte Belüftung der Würze (WO), Hefegabe und Vergärung der Würze (WO) ein.

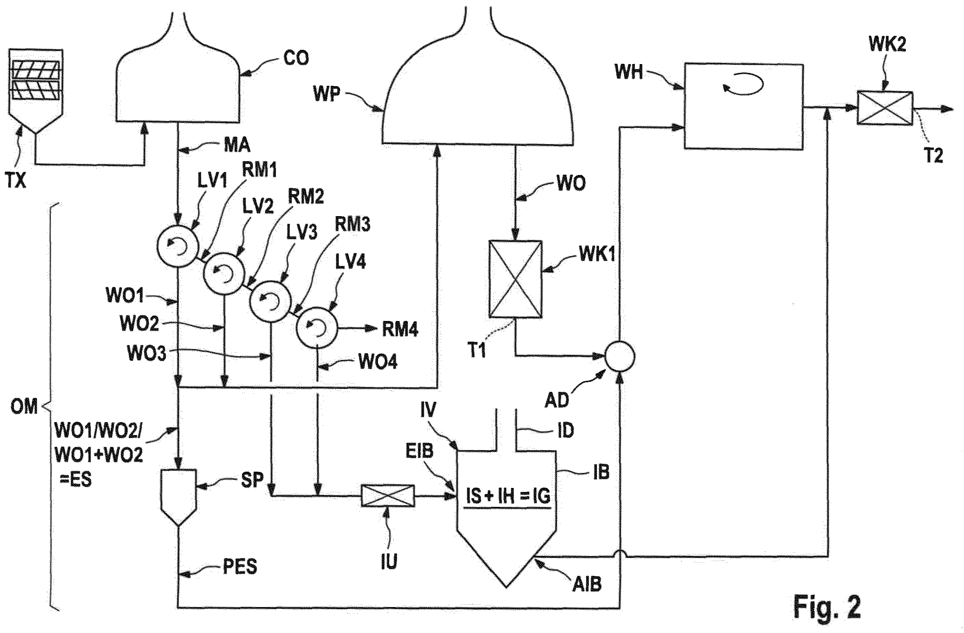

Fig. 2 zeigt eine zweite Ausführungsform einer erfindungsgemäßen Brauanlage (OM). Die Brauanlage (OM) und das Verfahren gemäß dieser Ausführungsform basieren auf demselben Grundlage wie die erste Ausführungsform, so dass nachfolgend nur auf die Unterschiede zur vorstehend beschriebenen, ersten Ausführungsform eingegangen wird.

So weist die Brauanlage (OM) gemäß dieser Ausführungsform zusätzlich eine Isomerisierungsvorrichtung (IV) zum Isomerisieren von isomerisierbaren Hopfenbestandteilen in einem Isomerisierungssubstrat (IS) auf. Die Isomerisierungsvorrichtung (IV) umfasst einen Behälter (IB), der vorzugsweise zylindrokonisch ausgestaltet ist. Die Einlassöffnung (EIB) des Behälters (IB) steht mit der Läutervorrichtung (LV), insbesondere der dritten Läutervorrichtung (LV3) und/oder der vierten Läutervorrichtung (LV4), in Fluidverbindung. Vorteilhaft kann in Zusammenhang mit der Isomerisierungsvorrichtung (IV) ein Wärmeüberträger (IU) vorgesehen sein, der geeignet ist, das Isomerisierungssubstrat (IS) oder das Gemisch (IG) zu temperieren, vorzugsweise zu erwärmen ist, während es sich im Behälter (IB) oder auf dem Weg zum Behälter (IB) befindet. In dieser Ausführungsform ist der Wärmeüberträger (IU) in der Leitung zwischen der Läutervorrichtung (LV), genauer zwischen der dritten Läutervorrichtung (LV3) und/oder der vierten Läutervorrichtung (LV4), und dem Behälter (IB) angeordnet ist.

Im Rahmen des erfindungsgemäßen dritten Teilverfahrens (TV3) wird die dritte Würze (WO3) oder die vierte Würze (WO4) oder ein Gemisch derselben als das Isomerisierungssubstrat (IS) unter Erwärmen auf eine Temperatur von etwa 96 °C durch die Einlassöffnung (EIB) in den Behälter (IB) eingebracht. Die dritte Würze (WO3) und insbesondere die vierte Würze (WO4) zeichnen sich durch einen im Vergleich zur ersten und zweiten Würze (WO1, WO2) geringeren Extrakt- und Feststoffgehalt (bspw. < 8 °P, < 800 mg/l) aus. Das so temperierte Isomerisierungssubstrat (IS) weist ein Volumen von etwa 30 % des Pfanne-voll-Volumens der Würze (WO) desselben Sudes auf und wird mit einem Hopfensubstrat (IH), beispielsweise Naturhopfen, Hopfenpellets oder Hopfenextrakt, in der gewünschten Menge unter Erhalt eines Gemisches (IG) gemischt. Vorzugsweise wird das Gemisch (IG) homogenisiert und die Temperatur, falls erforderlich, auf eine Temperatur zwischen 85 und 98 °C, vorzugsweise 93 bis 97 °C, eingestellt, wenn die maximale Temperatur (TMAX) der thermischen Behandlung des Hauptbatches der Würze (WO) 100 °C beträgt. Das Gemisch (IG) wird auf eine Temperatur innerhalb des vorstehend genannten Bereiches für eine vorbestimmte Zeitdauer (tI) gehalten, während dessen eine thermische Umwandlung der Hopfenbestandteile, insbesondere die Isomerisierung der α-Säuren, stattfindet und weitestgehend zum Abschluss kommt. Da die thermische Behandlung des Gemisches (IG) separat und parallel zur thermischen Behandlung des Hauptbatches der Würze (WO) stattfindet, kann die Zeitdauer (tI) optimal gewählt werden, z.B. in Abhängigkeit vom Fortschritt der Isomerisierung eingestellt werden. So kann beispielsweise bei einer Kochzeit der Würze von 60 Minuten die Zeitdauer (tI) für die Isomerisierung des Gemisches (IG) von beispielsweise 80 bis 100 Minuten gewählt werden.

Nach dieser thermischen Behandlung des Gemisches (IG) werden vorzugsweise dessen feste Bestandteile beispielsweise durch Sedimentation entfernt und das so geklärte Gemisch (IG) der Würze (WO) stromabwärts zur Klär-Einrichtung (WH) und stromaufwärts zur zweiten Einrichtung (WK2), wie bspw. ein Plattenwärmeüberträger, zugegeben.

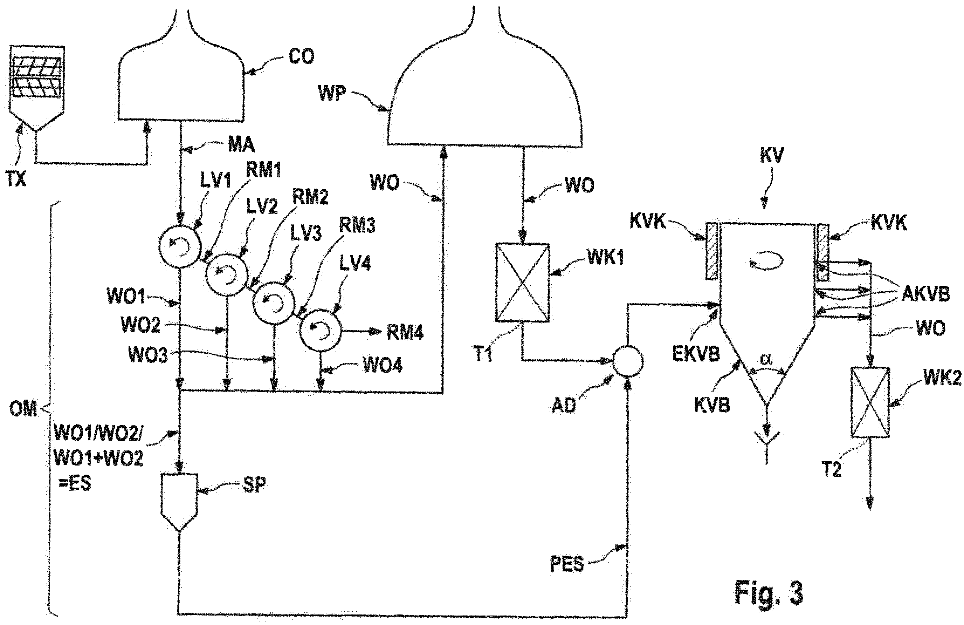

Fig. 3 zeigt eine dritte Ausführungsform der erfindungsgemäßen Brauanlage (OM). Die Brauanlage (OM) und das Verfahren gemäß dieser Ausführungsform basieren auf demselben Grundlage wie die erste Ausführungsform, so dass nachfolgend nur auf die Unterschiede zur vorstehend beschriebenen, ersten Ausführungsform eingegangen wird.

So weist die Brauanlage (OM) gemäß dieser Ausführungsform zusätzlich eine Klärvorrichtung (KV) zum wenigstens teilweisen Abtrennen von Feststoffen aus der Würze (WO). Die Klärvorrichtung (KV) weist ein Gefäß (KVB) zum Aufnehmen der Würze (WO) auf, wobei das Gefäß (KVB) bezogen auf den Strom der Würze (WO) stromabwärts zur Einrichtung (WP) zum thermischen Behandeln der Würze (WO) und der Einrichtung (AD) zum Zugeben der Portion (PES) des enzymhaltigen Substrats (ES); und stromaufwärts zur zweiten Einrichtung (WK2) zum Kühlen der Würze (WO) angeordnet ist. Im Gegensatz zum klassischen Whirlpool weist die Klärvorrichtung (KV) jedoch eine Kühleinrichtung (KVK) auf, die derart in der Brauanlage (OM) angeordnet ist, dass sie die Würze (WO), welche sich in der oberen Hälfte des Gefäßes (KVB), vorzugsweise im oberen Drittel des Gefäßes (KVB), befindet, oder ein Teilvolumen derselben kühlen kann. So kann die Kühleinrichtung (KVK) als eine Wandkühlung des Gefäßes (KVB), vorzugsweise als eine Mantel- oder Seitenwandkühlung, in der oberen Hälfte des Gefäßes (KVB) ausgebildet sein. In dieser Ausführungsform weist das Gefäß (KVB) eine zylindrokonische Gestalt mit einem Öffnungswinkel (α) des Kegels von ca. 60° auf.

Im Rahmen des erfindungsgemäßen vierten Teilverfahrens (TV4) wird die zu klärende Würze (WO) nach Abschluss der thermischen Behandlung des Hauptbatches der Würze (WO) und der Zugabe der Portion (PES) des enzymatischen Substrats (ES) zur thermisch behandelten Würze (WO) in das Gefäß (KVB) zum Aufnehmen der Würze (WO) durch wenigstens eine Einlassöffnung (EKVB) eingebracht. Dabei beträgt die Temperatur der Würze (WO) bspw. etwa 74 °C. Vorzugsweise wird die Würze (WO) tangential in das Gefäß (KVB) einströmen gelassen, um den Würzekörper zur Verbesserung der Feststoffabscheidung in Rotationsbewegung zu bringen. Während des Verweilen lassen der Würze (WO) im Gefäß (KVB) für eine vorbestimmte mittlere Verweildauer (tS) wird wenigstens ein Teilvolumen der Würze, die sich in Bereich der oberen Hälfte des Gefäßes (KVB) befindet, mittels Mantelkühlung, auf eine Temperatur gekühlt, die um wenigstens 10 °C geringer ist als die in das Gefäß (KVB) einströmende Würze (WO). Hierbei sedimentiert wenigstens ein Teil der Feststoffe der Würze (WO) vergleichsweise schnell und lässt sich auf diese Weise gut von der flüssigen Phase der Würze (WO) abtrennen.

Nach dem Erreichen der vorbestimmten Verweildauer (tS) bzw. einer vorgegebenen Abscheiderate für die Feststoffe wird die geklärte Würze (WO) über die wenigstens eine Auslassöffnung (AKVB) des Gefäßes (KVB) abgezogen. Dabei ist es vorteilhaft, wenn das Gefäß (KVB) eine Mehrzahl von Auslassöffnungen (AKVB) aufweist, die an unterschiedlichen Stellen bezogen auf die Höhe des Gefäßes (KVB) angeordnet sind. Nachdem die Klärung der Würze (WO) in der Klärvorrichtung (KV) naturbedingt von oben nach unten fortschreitet, d.h., oben im Gefäß (KVB) wird die Würze (WO) am schnellsten klar, findet vorteilhaft ein Abziehen der Würze (WO) über die verschiedenen Auslassöffnungen (AKVB) zeitlich gestaffelt von oben nach unten statt. Hierdurch wird eine nochmals verbesserte Klärwirkung sowie eine Beschleunigung des Klärschritts unter Einbeziehung der Entleerung der Klärvorrichtung (KV) erzielt. Die abgezogene, geklärte Würze (WO) wird anschließend einem Würzekühler als der zweiten Einrichtung (WK2) zugeführt und dort wie vorstehend beschrieben auf Anstelltemperatur abgekühlt.

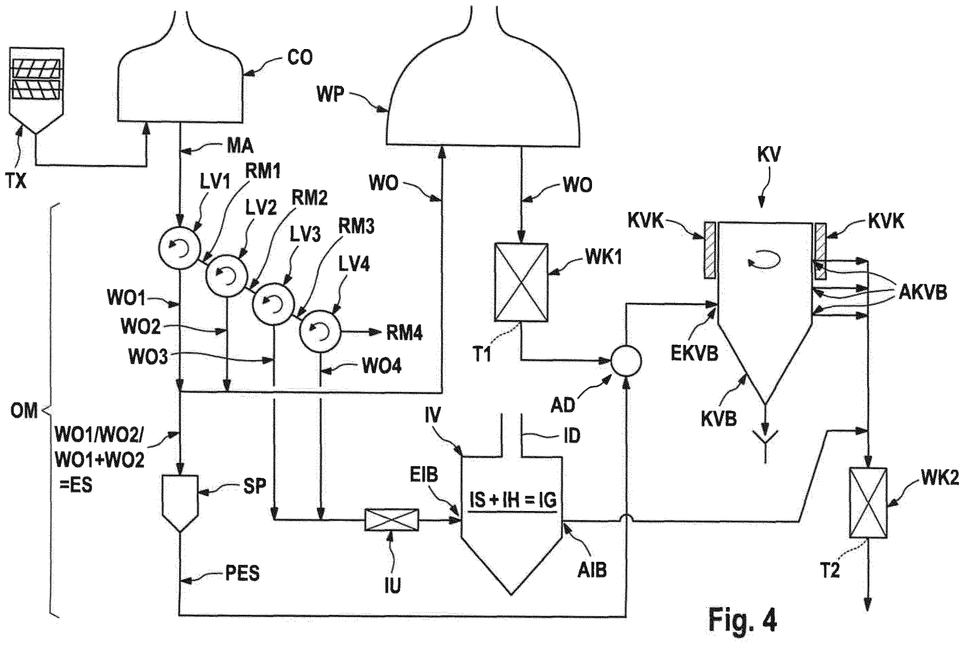

Fig. 4 zeigt eine vierte Ausführungsform der erfindungsgemäßen Brauanlage (OM). Die Brauanlage (OM) und das Verfahren gemäß dieser Ausführungsform basieren auf denselben Grundlagen wie die erste Ausführungsform, so dass nachfolgend nur auf die Unterschiede zur vorstehend beschriebenen, ersten Ausführungsform eingegangen wird.

So weist die Brauanlage (OM) gemäß dieser Ausführungsform zusätzlich eine Isomerisierungsvorrichtung (IV) zum Isomerisieren von isomerisierbaren Hopfenbestandteilen in einem Isomerisierungssubstrat (IS) auf, wie sie vorstehend beispielhaft in Zusammenhang mit der zweiten Ausführungsform beschrieben worden ist. Ferner weist die Brauanlage (OM) zusätzlich eine Klärvorrichtung (KV) zum wenigstens teilweisen Abtrennen von Feststoffen aus der Würze (WO), wie sie vorstehend beispielhaft in Zusammenhang mit der dritten Ausführungsform beschrieben worden ist.

Damit vereint die Brauanlage (OM) gemäß dieser Ausführungsform in vorrichtungstechnischer Hinsicht die Merkmale und Vorteile der Kombination aus der Läutervorrichtung (LV), umfassend wenigstens die erste Läutervorrichtung (LV1) oder eine Mehrzahl derartiger Läutervorrichtungen; die zweite Vorrichtung (V2), die Isomerisierungsvorrichtung (IV) und die Klärvorrichtung (KV), jeweils wie vorstehend beschrieben.

In verfahrenstechnischer Hinsicht vereint diese Ausführungsform die Merkmale und Vorteile der Kombination aus dem ersten Teilverfahren (TV1) zur Gewinnung der Würze (WO) aus einer Maische (MA), dem zweiten Teilverfahren (TV2) zum Behandeln der Würze (WO), das dritte Teilverfahren (TV3) zum Hopfen der Würze (WO) oder einem daraus erzeugten Getränk oder einer Vorstufe desselben und dem vierten Teilverfahren (TV4) zum wenigstens teilweisen Klären der Würze (WO).

Eine fünfte Ausführungsform der vorliegenden Erfindung ist ein Verfahren (VO), das folgende Kombinationen von erfindungsgemäßen Teilverfahren jeweils mit dem fünften Teilverfahren (TV5) verbindet:
- erstes Teilverfahren (TV1) und zweites Teilverfahren (TV2);
- erstes Teilverfahren (TV1) und zweites Teilverfahren (TV2) und drittes Teilverfahren (TV3);
- erstes Teilverfahren (TV1) und zweites Teilverfahren (TV2) und viertes Teilverfahren (TV4); oder
- erstes Teilverfahren (TV1) und zweites Teilverfahren (TV2) und drittes Teilverfahren (TV3) und viertes Teilverfahren (TV4).

Dabei wird die im ersten Teilverfahren (TV1) erhaltene Würze (WO), die einen Gehalt an Feststoffen (F) von wenigstens 300 mg/L aufweist, mit einem Zuschlagstoff (Z) unter Erhalt einer mit dem Zuschlagstoff (Z) angereicherten Würze (WO) gemischt. Diese angereicherte Würze (WO) wird einer thermischen Behandlung, also Heißhalten oder Kochen der angereicherten Würze (WO), wie vorstehend beschrieben, vorzugsweise die herkömmliche Würzekochung, unterzogen. Vorteilhaft findet vor dem Zugeben eines Hopfensubstrats (IH) oder des separat isomerisierten Gemischs (IG) gemäß dem dritten Teilverfahren (TV3) ein wenigstens teilweises Abtrennen der Feststoffe (F) in der angereicherten Würze (WO) auf ein Gehalt an Feststoffen (F) von höchstens 100 mg/L statt. Dabei entfernt der Zuschlagstoff (Z) offensichtlich auch Partikel der Feintrübung in relevanter Menge, wodurch sich die Ausbeute der später stattfindenden Hopfung verbessert.

Das Zugeben des Hopfensubstrats (IH) findet bevorzugt 5 bis 15 min vor dem Abschluss der thermischen Behandlung der angereicherten Würze (WO) statt. Dieser Zeitraum sollte ausreichend sein, um eine hinreichende Isomerisierung des Hopfensubstrats (IH) sicherzustellen. Nachdem das separat isomerisierte Gemisch (IG) gemäß dem dritten Teilverfahren (TV3) bereits ausreichend weit vorisomerisiert ist, kann das Gemisch (IG) alternativ erst nach dem Ende der thermischen Behandlung der Würze (WO), vorzugsweise nach der Heißtrubabscheidung, zugegeben werden.

Dabei kann die Zugabe des enzymhaltigen Substrats (ES) gemäß dem zweiten Teilverfahren (TV2) zur Würze (WO) bzw. angereicherten Würze (WO) erfolgen.

### Anhang

### Messung der Partikelgrößenverteilung

Die Analyse erfolgt mit dem Laserbeugungssensor HELOS der Firma Sympatec GmbH in Kombination mit der automatischen Nassdispergiereinheit SUCELL. Kombiniert hat der Sensor einen Messbereich von 0,1 µm bis 875 µm. Die Auswahl der Linse R4, mit einem Bereich von 0,5/1,8 µm bis 350 µm, dient der weiteren Eingrenzung des Messbereiches. Eine Anregung der Probe erfolgte mit einem HeNe-Laser mit einer Wellenlänge von *λ*=632,8 *nm.* Die Auswertung der Messsignale erfolgt über die geräteeigene Software.

Die zeitliche Abfolge einer Partikelgrößenmessung ist nachfolgend aufgezeigt:
1. Einfüllen von 400 ml entionisiertem Wasser in die Dispergiereinheit
2. 10 s entlüften der Dispergiereinheit
3. 30 s Umpumpen
4. Signaltest (Referenz)
5. Zugabe der Probe mittels Messpipette (bis zu optischer Konzentration von ca. 15 %)
6. 10 s entlüften der Dispergiereinheit
7. 120 s Umpumpen (zur Dispergierung)
8. Messung 1 (Messzeit: 60 s)
9. 60 s Umpumpen
10. Messung 2 (Messzeit: 60 s)
11. 60 s Umpumpen
12. Messung 3 (Messzeit: 60 s)
13. Entleeren und Spülen der Dispergiereinheit

## Patentansprüche

1. Brauanlage (OM) zur kontinuierlichen oder diskontinuierlichen Gewinnung und Behandlung einer Würze (WO) in der Bierbrauerei oder Getränkeindustrie, wobei die Würze (WO) wenigstens eine Würze enthält, die ausgewählt ist aus einer Gruppe, wenigstens bestehend aus einer ersten Würze (WO1), einer zweiten Würze (WO2), einer dritten Würze (WO3) und einer vierten Würze (WO4),
die Brauanlage (OM) mit:
wenigstens einer ersten Läutervorrichtung (LV1) zur kontinuierlichen oder diskontinuierlichen Gewinnung der ersten Würze (WO1) aus einer Maische (MA), wenigstens mit:
einer ersten Aufnahmeeinrichtung (AG1) zum Aufnehmen der Maische (MA); wenigstens einer ersten Trennvorrichtung (LT1) mit jeweils einer ersten Oberfläche (FA1);
wobei die erste Oberfläche (FA1) eine Vielzahl von Öffnungen (OP) aufweist; wobei die erste Läutervorrichtung (LV1) vorzugsweise geeignet ist, mittels der ersten Oberfläche (FA1) der ersten Trennvorrichtung (LT1) die Maische (MA) in die erste Würze (WO1) und eine erste Restmaische (RM1) kontinuierlich oder diskontinuierlich zu trennen;
wobei die erste Oberfläche (FA1) oder ein Teil derselben mit der Maische (MA) in Kontakt bringbar ist, wenn die Maische (MA) zum Trennen in die erste Würze (WO1) und die erste Restmaische (RM1) in der ersten Aufnahmeeinrichtung (AG1) vorhanden ist;
wobei die erste Oberfläche (FA1) während des Betriebs der ersten Läutervorrichtung (LV1) zur in der ersten Aufnahmeeinrichtung (AG1) aufgenommenen Maische (MA), zur ersten Restmaische (RM1) und/oder zur ersten Aufnahmeeinrichtung (AG1) relativ beweglich oder bewegbar oder drehbar angeordnet ist;
wobei die Brauanlage (OM) ferner eine zweite Vorrichtung (V2) umfasst, wobei die zweite Vorrichtung (V2) aufweist:
eine erste Einrichtung (WK1) zum Einstellen der Temperatur, insbesondere Kühlen, der Würze (WO) auf eine erste Temperatur (T1) zwischen 0 und 85 °C nach dem Abschluss des Heißhaltens oder Kochens der Würze (WO); und
eine Einrichtung (AD) zum Zugeben wenigstens einer Portion (PES) eines enzymhaltigen Substrats (ES), vorzugsweise wenigstens einer Portion (PMA) einer Maische (MA) und/oder wenigstens einer Portion (PMAA) wenigstens eines Maischeauszugs (MAA) und/oder einer Portion (PVW) enthaltend eine nicht über 80 °C erwärmte, enzymhaltige Würze (WOE), vorzugsweise einer Portion (PVW) einer Vorderwürze (VW), vorzugsweise der ersten Würze (WO1), zu der nach dem Einstellen, insbesondere Kühlen, auf die erste Temperatur (T1) erhaltenen Würze (WO);
wobei die erste Einrichtung (WK1) zum Einstellen der Temperatur, insbesondere Kühlen, der Würze (WO) stromabwärts zu einer Einrichtung (WP) zum Heißhalten oder Kochen der Würze (WO) angeordnet ist; und
wobei die Einrichtung (AD) stromabwärts zur ersten Einrichtung (WK1) zum Einstellen der Temperatur, insbesondere Kühlen, der Würze (WO) auf die erste Temperatur (T1) angeordnet ist.

2. Brauanlage (OM) nach Anspruch 1, **dadurch gekennzeichnet, dass** die Einrichtung (AD) zum Zugeben der wenigstens einen Portion (PES) des enzymhaltigen Substrats (ES) stromaufwärts zu oder stromabwärts zu oder im Bereich einer Einrichtung (WH) zum Klären der Würze (WO) angeordnet ist.

3. Brauanlage (OM) nach Anspruch 1 oder 2, **dadurch gekennzeichnet, dass** die Brauanlage (OM) ferner wenigstens eine Isomerisierungsvorrichtung (IV) zum Isomerisieren von isomerisierbaren Hopfenbestandteilen in einem Isomerisierungssubstrat (IS), aufweisend:
einen Behälter (IB) zur Aufnahme des Isomerisierungssubstrates (IS) oder eines Gemisches (IG) enthaltend das Isomerisierungssubstrat (IS);
wobei der Behälter (IB) eine Einlassöffnung (EIB) zum Einbringen des Isomerisierungssubstrates (IS) oder des Gemisches (IG) in den Behälter (IB) aufweist; wobei die Einlassöffnung (EIB) mit wenigstens einer der ersten Läutervorrichtung (LV1), der zweiten Läutervorrichtung (LV2), der dritten Läutervorrichtung (LV3) und der vierten Läutervorrichtung (LV4) in Fluidverbindung steht;
wobei der Behälter (IB) eine Auslassöffnung (AIB) zum Ausbringen des Isomerisierungssubstrates (IS) oder des Gemisches (IG) aus dem Behälter (IB) aufweist;
wobei die Auslassöffnung (AIB) mit einem bier- oder würzeführenden Gefäß (L) in Fluidverbindung steht,
wobei das bier- oder würzeführende Gefäß (L) bezogen auf einen Würzestrom vorzugsweise stromabwärts zur Einrichtung (WH) zum wenigstens teilweisen Klären der Würze (WO) angeordnet ist;
ein Dunstrohr (ID) zum Abführen von Dampf oder Dunst des Isomerisierungssubstrates (IS) oder des Gemisches (IG) aus dem Behälter (IB); und
vorzugsweise eine Einrichtung zum Einstellen der Temperatur des Gemisches (IG);
wobei der Behälter (IB) ein zur Einrichtung (WP) zum thermischen Behandeln der in der Brauanlage (OM) erzeugten Würze (WO) separater Behälter ist;
wobei der Behälter (IB) vorzugsweise ein Nutzvolumen von höchstens 60 %, vorzugsweise höchstens 50 %, insbesondere höchstens 40 %, des Nutzvolumens, vorzugsweise des Pfanne-voll-Volumens, der Einrichtung (WP) zum thermischen Behandeln der in der Brauanlage (OM) erzeugten Würze (WO).

4. Brauanlage (OM) nach einem der Ansprüche 1 bis 3, **dadurch gekennzeichnet, dass** die Brauanlage (OM) ferner wenigstens eine Klärvorrichtung (KV) zum wenigstens teilweisen Abtrennen von Feststoffen aus der Würze (WO), vorzugsweise einer Ausschlagwürze, wobei die Würze (WO) eine Temperatur von wenigstens 50 °C aufweist,
wobei die Klärvorrichtung (KV) ein Gefäß (KVB) zum Aufnehmen der Würze (WO) aufweist,
wobei das Gefäß (KVB) bezogen auf den Strom der Würze (WO) vorzugsweise stromabwärts zur Einrichtung (WP) zum Heißhalten oder Kochen der Würze (WO) und stromabwärts zur Einrichtung (AD) zum Zugeben der wenigstens einen Portion (PES) des enzymhaltigen Substrats (ES) angeordnet ist; und
wobei das Gefäß (KVB) bezogen auf den Strom der Würze (WO) vorzugsweise stromaufwärts zur zweiten Einrichtung (WK2) zum Kühlen der Würze (WO) angeordnet ist; und
wobei das Gefäß (KVB) wenigstens eine Einlassöffnung (EKVB) zum Einbringen der Würze (WO) in das Gefäß (KVB) aufweist; und
wobei das Gefäß (KVB) wenigstens eine Auslassöffnung (AKVB) zum Abziehen der Würze (WO) aus dem Gefäß (KVB) aufweist;
wobei die Klärvorrichtung (KV) eine Kühleinrichtung (KVK) aufweist;
wobei die Kühleinrichtung (KVK) geeignet ist, vorzugsweise derart in der Brauanlage (OM) angeordnet ist, die Würze (WO) oder nur die Würze (WO), welche sich in der oberen oder unteren Hälfte des Gefäßes (KVB), vorzugsweise im oberen oder unteren Drittel des Gefäßes (KVB), befindet, oder ein Teilvolumen derselben zu kühlen.

5. Verfahren (VO) zur kontinuierlichen oder diskontinuierlichen Gewinnung und Behandlung einer Würze (WO) in der Bierbrauerei oder Getränkeindustrie;
wobei die Würze (WO) wenigstens eine Würze enthält, die ausgewählt ist aus einer Gruppe, wenigstens bestehend aus einer ersten Würze (WO1), einer zweiten Würze (WO2), einer dritten Würze (WO3) und einer vierten Würze (WO4);
wobei das Verfahren (VO) ein erstes Teilverfahren (TV1) zur Gewinnung der Würze (WO) aus einer Maische (MA) umfasst, wenigstens mit den Schritten:
(1a) kontinuierliches oder diskontinuierliches Zuführen einer Maische (MA) zu einer ersten Aufnahmeeinrichtung (AG1) einer ersten Läutervorrichtung (LV1), vorzugsweise der ersten Läutervorrichtung (LV1) ist, wie sie in Anspruch 1 definiert ist;
(1b) kontinuierliches oder diskontinuierliches Trennen der Maische (MA) in der ersten Läutervorrichtung (LV1) in eine erste Würze (WO1) und eine erste Restmaische (RM1), mittels Trennen oder Filtrieren der Maische (MA) unter Zuhilfenahme wenigstens einer ersten Oberfläche (FA1) einer ersten Trennvorrichtung (LT1);
wobei das Filtrat oder Permeat die erste Würze (WO1) und der Filterrückstand oder Retentat die erste Restmaische (RM1) ist;
wobei das Trennen durch den hydrostatischen Druck der Maische (MA) und/oder einen anderen auf die Maische (MA) einwirkenden Druck und/oder einen auf die erste Restmaische (RM1) einwirkenden Unterdruck angetrieben wird;
wobei sich während des Trennens der Maische (MA) in die erste Würze (WO1) und die erste Restmaische (RM1) die erste Oberfläche (FA1) der ersten Trennvorrichtung (LT1) zur in der ersten Läutervorrichtung (LV1) vorhandenen Maische (MA), zur in der ersten Läutervorrichtung (LV1) vorhandenen, ersten Restmaische (RM1) und/oder zur ersten Aufnahmeeinrichtung (AG1) relativ bewegt, oder
die erste Oberfläche (FA1) sich während des Trennens der Maische (MA) um eine erste Achse oder erste Mittelachse (AX1) der ersten Trennvorrichtung (LT1) dreht; und
wobei die relative Bewegung oder die Drehbewegung der ersten Oberfläche (FA1) während der gesamten Dauer des Trennens der Maische (MA) ununterbrochen oder zeitweise, vorzugsweise in regelmäßigen zeitlichen Intervallen, erfolgt;
wobei die erste Würze (WO1) vorzugsweise einen Gehalt an Feststoffen (F) von wenigstens 300 mg/L, vorzugsweise wenigstens 500 mg/L, vorzugsweise wenigstens 1.000 mg/L, insbesondere wenigstens 2.000 mg/L, aufweist;
wobei das Verfahren (VO) ferner ein zweites Teilverfahren (TV2) zum Behandeln der im ersten Teilverfahren (TV1) erhaltenen Würze (WO) umfasst, wenigstens mit den Schritten:
(2a) nach einer thermischen Behandlung, vorzugsweise einem Heißhalten oder Kochen, der im ersten Teilverfahren (TV1) erhaltenen Würze (WO), Einstellen der Temperatur, insbesondere Kühlen, der Würze (WO) auf eine erste Temperatur (T1) zwischen 0 und 85 °C, vorzugsweise zwischen 0 und 80 °C, vorzugsweise zwischen 70 und 85 °C, vorzugsweise zwischen 72 und 83 °C, vorzugsweise zwischen 80 und 85 °C, vorzugsweise zwischen 80 und 82 °C, vorzugsweise zwischen 72 und 78 °C, vorzugsweise zwischen 40 und 55 °C, vorzugsweise zwischen 45 und 50 °C; und
(2b) Zugeben wenigstens einer Portion (PES) eines enzymhaltigen Substrats (ES), vorzugsweise wenigstens einer Portion (PMA) einer Maische (MA) und/oder wenigstens einer Portion (PMAA) eines Maischeauszugs (MAA) und/oder einer Portion (PVW) enthaltend eine nicht über 80 °C, vorzugsweise nicht über 78 °C, vorzugsweise nicht über 76 °C, vorzugsweise nicht über 74 °C, vorzugsweise nicht über 72 °C, vorzugsweise nicht über 70 °C, vorzugsweise nicht über 68 °C, insbesondere nicht über 66 °C, erwärmte, enzymhaltige Würze (WOE), insbesondere einer Portion (PVW) einer Vorderwürze (VW), vorzugsweise der ersten Würze (WO1), oder vorzugsweise eines Gemischs aus wenigstens zwei der Portion (PMA), der Portion (PMAA) und der Portion (PVW), zur Würze (WO);
wobei die Würze (WO) beim Zugeben höchstens die erste Temperatur (T1) aufweist; und
wobei das zweite Teilverfahren (TV2) vorzugsweise unter Einsatz der zweiten Vorrichtung (V2) durchgeführt wird, wie sie in Anspruch 1 oder 2 definiert ist.

6. Verfahren nach Anspruch 5, **dadurch gekennzeichnet, dass** das erste Teilverfahren (TV1) ferner die Schritte umfasst:
(1c) Mischen von Wasser oder einer verdünnten Würze, vorzugsweise der dritten Würze (WO3), mit der bei der Trennung gemäß Schritt (1b) erhaltenen ersten Restmaische (RM1) in einem vordefinierten Volumenstromverhältnis, wobei ein erstes Gemisch (MX1) erhalten wird;
(1d) vor Schritt (1c): kontinuierliches oder diskontinuierliches Zuführen der ersten Restmaische (RM1) zu einer zweiten Aufnahmeeinrichtung (AG2) einer zweiten Läutervorrichtung (LV2); oder
(1e) nach Schritt (1c): kontinuierliches oder diskontinuierliches Zuführen des ersten Gemischs (MX1) zur zweiten Aufnahmeeinrichtung (AG2) der zweiten Läutervorrichtung (LV2);
wobei die zweite Läutervorrichtung (LV2) vorzugsweise eine Gestalt aufweist, welche identisch ist zur ersten Läutervorrichtung (LV1), wie sie in Anspruch 1 definiert ist;
(1f) kontinuierliches oder diskontinuierliches Trennen des so erhaltenen ersten Gemischs (MX1) in eine zweite Würze (WO2) und eine zweite Restmaische (RM2) mittels wenigstens einer zweiten Trennvorrichtung (LT2) oder mittels Trennen oder Filtrieren des ersten Gemischs (MX1) unter Zuhilfenahme einer zweiten Oberfläche (FA2) der zweiten Trennvorrichtung (LT2) in der zweiten Läutervorrichtung (LV2);
wobei das Filtrat oder Permeat die zweite Würze (WO2) und der Filterrückstand oder das Retentat die zweite Restmaische (RM2) ist;
=wobei das Trennen durch den hydrostatischen Druck des ersten Gemischs (MX1) und/oder einen anderen auf das erste Gemisch (MX1) einwirkenden Druck und/oder einen auf die zweite Restmaische (RM2) einwirkenden Unterdruck angetrieben wird;
wobei sich während des Trennens des ersten Gemischs (MX1) in die zweite Würze (WO2) und die zweite Restmaische (RM2) die zweite Oberfläche (FA2) zum in der zweiten Läutervorrichtung (LV2) vorhandenen ersten Gemisch (MX1), zur in der zweiten Läutervorrichtung (LV2) vorhandenen, zweiten Restmaische (RM2) und/oder zur zweiten Aufnahmeeinrichtung (AG2) relativ bewegt, oder
sich während des Trennens des ersten Gemischs (MX1) in die zweite Würze (WO2) und die zweite Restmaische (RM2) die zweite Oberfläche (FA2) um eine zweite Achse oder zweite Mittelachse (AX2) der zweiten Trennvorrichtung (LT2) dreht; und
wobei die relative Bewegung oder die Drehbewegung der zweiten Oberfläche (FA2) während der gesamten Dauer des Trennens des ersten Gemischs (MX1) ununterbrochen oder zeitweise, vorzugsweise in regelmäßigen zeitlichen Intervallen, erfolgt.

7. Verfahren (VO) nach Anspruch 5 oder 6, **dadurch gekennzeichnet, dass** das zweite Teilverfahren (TV2) ferner wenigstens einen der Schritte aufweist:
(2c) wenigstens teilweises Klären der Würze (WO);
wobei das Zugeben gemäß Schritt (2b) vorzugsweise vor dem wenigstens teilweisen Klären der Würze (WO) erfolgt.

8. Verfahren (VO) nach einem der Ansprüche 5 bis 7, **dadurch gekennzeichnet, dass** das zweite Teilverfahren (TV2) ferner den Schritt umfasst:
(2f) nach dem Zugeben gemäß Schritt (2b) und Verstreichenlassen einer vorgegebenen Zeitspanne: Erwärmen der Würze (WO) auf eine dritte Temperatur (T3) zwischen 82 und 99 °C, vorzugsweise zwischen 82 bis 95 °C, vorzugsweise zwischen 82 bis 90 °C, insbesondere zwischen 82 bis 85 °C.

9. Verfahren (VO) nach einem der Ansprüche 5 bis 8, **dadurch gekennzeichnet, dass** das Verfahren (VO) ferner ein drittes Teilverfahren (TV3) zum Hopfen der Würze (WO) oder eines daraus erzeugten Bieres oder Getränkes oder einer Vorstufe desselben umfasst;
wobei das dritte Teilverfahren (TV3) wenigstens die Schritte aufweist:
(3a) Bereitstellen eines Isomerisierungssubstrates (IS) enthaltend eine Würze oder bestehend aus einer Würze, insbesondere ein Nachgussablauf oder ein Glattwasser, wobei die Würze vorzugsweise einen Extraktgehalt im Bereich von 0,2 bis 8 °P, vorzugsweise von 0,5 bis 5 °P, aufweist;
wobei das Isomerisierungssubstrat (IS) einen Extraktgehalt im Bereich von 0,2 bis 8 °P, vorzugsweise von 0,5 bis 5 °P, aufweist;
wobei das Isomerisierungssubstrat (IS) vorzugsweise einen Gehalt an Grobpartikeln mit Partikelgrößen von 40 bis 400 µm von > 100 mg/l, vorzugsweise > 200 mg/l, insbesondere > 400 mg/l, aufweist;
(3b) Erwärmen des Isomerisierungssubstrates (IS) auf eine Temperatur zwischen 80 und 105 °C, vorzugsweise 93 bis 98 °C;
(3c) Mischen des Isomerisierungssubstrates (IS) mit einem Hopfensubstrat (IH) unter Erhalt eines Gemisches (IG);
wobei das Hopfensubstrat (IH) wenigstens einen isomerisierbaren Hopfenbestandteil, vorzugsweise wenigstens eine α-Säure, enthält;
(3d) Einstellen der Temperatur des resultierenden Gemisches (IG) auf eine Temperatur innerhalb eines Bereichs (TB) zwischen 80 und 105 °C, vorzugsweise 93 bis 100 °C;
wobei der Temperaturbereich (TB) vorzugsweise die Temperaturen von 15 °C unterhalb bis 2 °C, vorzugsweise von 15 °C unterhalb bis 5 °C, unterhalb einer Temperatur (TMAX) umfasst, welche die Würze (WO) während der thermischen Behandlung derselben in einem Bierbereitungsverfahren, welches das Verfahren (VO), vorzugsweise das dritte Teilverfahren (TV3), umfasst, höchstens erreicht; und
Halten der Temperatur des resultierenden Gemisches (IG) innerhalb des Bereichs (TB) für eine vorbestimmte Zeitdauer (tI);
wobei die Zeitdauer (tI) vorzugsweise um 20 bis 50 min länger, vorzugsweise 20 bis 45 min länger, ist als eine Zeitdauer (tK) der thermischen Behandlung der Würze (WO) im Bierbereitungsverfahren (als Formel ausgedrückt: tI = tK + (20 bis 50 min) = tK + 20 min bis tK + 50 min); und
(3e) vorzugsweise wenigstens teilweises Abtrennen von festen Bestandteilen aus dem aus Schritt (3d) erhaltenen Gemisch (IG); und
(3f) Mischen des aus Schritt (3c) oder (3d) oder (3e) erhaltenen Gemisches (IG) mit der Würze (WO), die vorzugsweise nach dem zweiten Teilverfahren (TV2) erhalten worden ist, oder einem aus der Würze (WO) entstandenen Bier oder Getränk oder einer Vorstufe desselben;
wobei die Würze (WO) vor dem Mischen des Gemisches (IG) mit der Würze (WO) für wenigstens 30 min separat vom Gemisch (IG) thermisch behandelt worden war,
wobei die Würze (WO) der Temperatur (TMAX) als der höchsten Temperatur ausgesetzt war, und
vorzugsweise die festen Bestandteile der Würze (WO), vorzugsweise der Heißtrub, nach dem Erwärmen der Würze (WO) und vor dem Mischen mit dem Gemisch (IG) zu wenigstens 80 %, vorzugsweise zu wenigstens 90 %, aus der Würze (W) entfernt worden waren; und
wobei das dritte Teilverfahren (TV3) vorzugsweise unter Einsatz der Isomerisierungsvorrichtung (IV) durchgeführt wird, wie sie in Anspruch 3 definiert ist.

10. Verfahren (VO) nach einem der Ansprüche 5 bis 9, **dadurch gekennzeichnet, dass** das Verfahren (VO) ferner ein drittes Teilverfahren (TV3) zum Hopfen der Würze (WO) oder eines daraus erzeugten Bieres oder Getränkes oder einer Vorstufe desselben umfasst;
wobei das dritte Teilverfahren (TV3) wenigstens die Schritte aufweist:
(3a) Bereitstellen eines Isomerisierungssubstrates (IS) enthaltend eine Würze oder bestehend aus einer Würze, wobei die Würze vorzugsweise einen Extraktgehalt im Bereich von 0,2 bis 8 °P, vorzugsweise von 0,5 bis 5 °P, aufweist;
wobei das Isomerisierungssubstrat (IS) einen Extraktgehalt im Bereich von 0,2 bis 8 °P, vorzugsweise von 0,5 bis 5 °P, aufweist;
wobei das Isomerisierungssubstrat (IS) vorzugsweise einen Gehalt an Grobpartikeln mit Partikelgrößen von 40 bis 400 µm von > 100 mg/l, vorzugsweise > 200 mg/l, insbesondere > 400 mg/l, aufweist;
(3b) Mischen des Isomerisierungssubstrates (IS) mit einem Hopfensubstrat (IH) unter Erhalt eines Gemisches (IG);
wobei das Hopfensubstrat (IH) wenigstens einen isomerisierbaren Hopfenbestandteil, vorzugsweise wenigstens eine α-Säure, enthält;
(3c) Einstellen der Temperatur des resultierenden Gemisches (IG) auf eine Temperatur innerhalb eines Bereichs (TB) zwischen 80 und 105 °C, vorzugsweise 93 bis 100 °C;
wobei der Temperaturbereich (TB) vorzugsweise die Temperaturen von 15 °C unterhalb bis 2 °C, vorzugsweise von 15 °C unterhalb bis 5 °C, unterhalb einer Temperatur (TMAX) umfasst, welche die Würze (WO) während der thermischen Behandlung derselben in einem Bierbereitungsverfahren, welches das Verfahren (VO), vorzugsweise das dritte Teilverfahren (TV3), umfasst, höchstens erreicht; und
(3d) Halten der Temperatur des resultierenden Gemisches (IG) innerhalb des Bereichs (TB) für eine vorbestimmte Zeitdauer (tI);
wobei die Zeitdauer (tI) vorzugsweise um 20 bis 50 min länger, vorzugsweise 20 bis 45 min länger, ist als eine Zeitdauer (tK) der thermischen Behandlung der Würze (WO) im Bierbereitungsverfahren (als Formel ausgedrückt: tI = tK + (20 bis 50 min) = tK + 20 min bis tK + 50 min); und
(3e) vorzugsweise wenigstens teilweises Abtrennen von festen Bestandteilen aus dem aus Schritt (3d) erhaltenen Gemisch (IG); und
(3f) Mischen des aus Schritt (3b), (3c), (3d) oder (3e) erhaltenen Gemisches (IG) mit der Würze (WO), die vorzugsweise nach dem zweiten Teilverfahren (TV2) erhalten worden ist, oder einem aus der Würze (WO) entstandenen Bier oder Getränk oder einer Vorstufe desselben;
wobei die Würze (WO) vor dem Mischen des Gemisches (IG) mit der Würze (WO) für wenigstens 30 min thermisch behandelt worden war, wobei die Würze (WO) der Temperatur (TMAX) als der höchsten Temperatur ausgesetzt war, und
vorzugsweise die festen Bestandteile der Würze (WO), vorzugsweise der Heißtrub, nach dem Erwärmen der Würze (WO) und vor dem Mischen mit dem Gemisch (IG) zu wenigstens 80 %, vorzugsweise zu wenigstens 90 %, aus der Würze (WO) entfernt worden waren; und
wobei das dritte Teilverfahren (TV3) vorzugsweise unter Einsatz der Isomerisierungsvorrichtung (IV) durchgeführt wird, wie sie in Anspruch 3 definiert ist.

11. Verfahren (VO) nach einem der Ansprüche 5 bis 10, **dadurch gekennzeichnet, dass** das Verfahren (VO) ferner ein viertes Teilverfahren (TV4) zum wenigstens teilweisen Klären der Würze (WO), vorzugsweise einer Ausschlagwürze, vorzugsweise mittels der Klärvorrichtung (KV), wie sie in Anspruch 4 definiert ist, umfasst;
wobei das vierte Teilverfahren (TV4) wenigstens die Schritte aufweist:
(4a) Einbringen der zu klärenden Würze (WO) in ein Gefäß (KVB) zum Aufnehmen der Würze (WO) durch wenigstens eine Einlassöffnung (EKVB);
wobei die in das Gefäß (KVB) einströmende Würze (WO) eine Temperatur von wenigstens 50 °C aufweist,
(4b) Verweilen lassen der Würze (WO) im Gefäß (KVB) für eine vorbestimmte mittlere Verweildauer (tS), wobei die in der Würze (WO) vorhandenen Feststoffe wenigstens teilweise sedimentieren;
(4c) Abziehen der resultierenden, geklärten Würze (WO) aus dem Gefäß (KVB) durch wenigstens eine Auslassöffnung (AKVB);
**dadurch gekennzeichnet, dass**
während des Schrittes (4b) die im Gefäß (KVB) vorhandene Würze (WO) oder ein Teilvolumen derselben im Bereich einer oberen oder unteren Hälfte des Gefäßes (KVB), vorzugsweise im Bereich eines oberen oder unteren Drittels des Gefäßes (KVB), gekühlt wird; und
wobei das vierte Teilverfahren (TV4) vorzugsweise unter Einsatz der Klärvorrichtung (KV) durchgeführt wird, wie sie in Anspruch 4 definiert ist.

12. Verfahren (VO) nach einem der Ansprüche 5 bis 11, **dadurch gekennzeichnet, dass** das Verfahren (VO) ferner ein fünftes Teilverfahren (TV5) zum Behandeln einer feststoffhaltigen Würze (WO) und vorzugsweise zum Hopfen der Würze (WO), umfasst;
wobei das fünfte Teilverfahren (TV5) wenigstens die Schritte aufweist:
(5a) Bereitstellen der Würze (WO), vorzugsweise der Würze (WO) gemäß dem ersten Teilverfahren (TV1); und
(5b) Mischen der Würze (WO) mit einem Zuschlagstoff (Z) unter Erhalt einer den Zuschlagstoff (Z) enthaltenden Würze (WO), vorzugsweise vor Schritt (2a) oder vor oder während Schritt (2d) gemäß dem zweiten Teilverfahren (TV2);
wobei der Zuschlagstoff (Z) wenigstens ein Material enthält, ausgewählt aus einer Gruppe, bestehend aus einem Hopfentrub, einem Heißtrub, einem Kühltrub, einer Kieselgur, einem Kieselgel, PVPP, Bentonit, Reisschalen, Getreideschalen, Holzhackschnitzeln, Aktivkohle, einem Naturhopfen, Hopfenpellets, und festen Bestandteilen von Naturhopfen oder von Hopfenpellets.

13. Verwendung eines enzymhaltigen Substrats (ES), vorzugsweise wenigstens einer Portion (PMA) einer Maische (MA) und/oder wenigstens einer Portion (PMAA) wenigstens eines Maischeauszugs (MAA) und/oder einer Portion (PVW) enthaltend eine nicht über 80 °C erwärmte, enzymhaltige Würze (WOE), vorzugsweise einer Portion (PVW) einer Vorderwürze (VW), vorzugsweise der ersten Würze (WO1), zum Behandeln einer Würze (WO);
wobei die Würze (WO) einen Gehalt an Feststoffen (F) von wenigstens 300 mg/L, vorzugsweise wenigstens 500 mg/L, vorzugsweise wenigstens 1.000 mg/L, insbesondere wenigstens 2.000 mg/L, aufweist und vorzugsweise mittels Oberflächenfiltration erzeugt worden ist; oder
wobei die Würze (WO) mittels Oberflächenfiltration mittels der wenigstens einen ersten Läutervorrichtung (LV1), wie sie in Anspruch 1 definiert ist, erzeugt worden ist.

14. Würze (WO) oder ein aus der Würze (WO) hergestelltes Bier oder ein aus der Würze (WO) hergestelltes Getränk oder eine aus der Würze (WO) hergestellte Vorstufe des Bieres oder des Getränks;
wobei die Würze (WO) unter Verwendung der Brauanlage (OM) nach einem der Ansprüche 1 bis 4 erzeugt worden ist; und/oder
wobei die Würze (WO) mit dem Verfahren (VO) nach einem der Ansprüche 5 bis 12 erzeugt und behandelt worden ist.

## Claims

1. Brewing plant (OM) for continuously or discontinuously obtaining and treating a wort (WO) in the beer brewery or beverage industry;
wherein the wort (WO) contains at least one wort which is selected from a group, at least consisting of a first wort (WO1), a second wort (WO2), a third wort (WO3), and a fourth wort (WO4),
the brewing plant (OM) comprising:
at least one first lauter device (LV1) for continuously or discontinuously obtaining a first wort (WO1) from a mash (MA), at least comprising:
a first receiving unit (AG1) for receiving the mash (MA);
at least one first separating device (LT1) each having a first surface (FA1);
wherein the first surface (FA1) has a plurality of openings (OP);
wherein the first lauter device (LV1) is preferably suitable for continuously or discontinuously separating the mash (MA) into the first wort (WO1) and a first residual phase (RM1) by means of the first surface (FA1) of the first separating device (LT1);
wherein the first surface (FA1) or a part thereof can be brought into contact with the mash (MA), if the mash (MA) is present in the first receiving unit (AG1) for separation into the first wort (WO1) and the first residual phase (RM1);
wherein, during the operation of the first lauter device (LV1), the first surface (FA1) is arranged such that it is movable or can be moved or can be rotated relative to the mash (MA) received in the first receiving unit (AG1), to the first residual phase (RM1) and/or to the first receiving unit (AG1);
wherein the brewing plant (OM) further comprises a second device (V2), wherein the second device (V2) comprises:
a first apparatus (WK1) for setting the temperature, in particular for cooling, of the wort (WO) to a first temperature (T1) between 0 and 85 °C after completing of keeping hot or boiling of the wort (WO); and
an apparatus (AD) for adding at least one portion (PES) of an enzyme-containing substrate (ES), preferably at least one portion (PMA) of a mash (MA) and/or at least one portion (PMAA) of at least one mash extract (MAA) and/or one portion containing an enzyme-containing wort (WOE) which has not been heated to more than 80 °C, preferably one portion (PVW) of a first wort (first run) (VW), preferably of the first wort (WO1), to the wort (WO) obtained after setting, in particular cooling to, the first temperature (T1);
wherein the first apparatus (WK1) for setting the temperature, in particular for cooling, of the wort (WO) is arranged downstream to an apparatus (WP) for keeping hot or boiling of the wort (WO); and
wherein the apparatus (AD) is arranged downstream to the first apparatus (WK1) for setting the temperature, in particular for cooling, of the wort (WO) to the first temperature (T1).

2. Brewing plant (OM) according to claim 1, **characterized in that** the apparatus (AD) for adding of the at least one portion (PES) of an enzyme-containing substrate (ES) is arranged upstream or downstream with respect to or in the area of an apparatus (WH) for at least partially clarifying the wort (WO).

3. Brewing plant (OM) according claim 1 or 2, **characterized in that** the brewing plant (OM) further comprises at least one isomerization apparatus (IV) for isomerizing of isomerizable hop components in an isomerization substrate (IS), comprising:
a container (IB) for receiving the isomerization substrate (IS) or a mixture (IG) containing the isomerization substrate (IS);
wherein the container (IB) has an inlet opening (EIB) for introducing the isomerization substrate (IS) or the mixture (IG) into the container (IB); wherein the inlet opening (EIB) is in fluid connection with at least one of the first lauter device (LV1), the second lauter device (LV2), the third lauter device (LV3), and the fourth lauter device (LV4);
wherein the container (IB) has an outlet opening (AIB) for withdrawing the isomerization substrate (IS) or the mixture (IG) from the container (IB);
wherein the outlet opening (AIB) is in fluid connection with a vessel (L) which carries beer or wort;
wherein the vessel (L) which carries beer or wort is preferably arranged downstream to the apparatus (WH) for at least partially clarifying the wort (WO), with respect to the wort flow;
an outlet vent (ID) for discharging of steam or mist of the isomerization substrate (IS) or of the mixture (IG) from the container (IB); and
preferably an apparatus for setting the temperature of the mixture (IG);
wherein the container (IB) is a container which is separate to the apparatus (WP) for thermally treating the wort (WO) produced in the brewery plant (OM);
wherein the container (IB) preferably has an effective volume of 60 % or less, preferably 50 % or less, and particularly 40 % or less, of the effective volume, preferably of the kettle-full volume, of the apparatus (WP) for thermally treating the wort (WO) produced in the brewery plant (OM).

4. Brewing plant (OM) according to one of the claims 1 to 3, **characterized in that** the brewing plant (OM) further comprises at least one clarification device (KV) for at least partially separating the solids from the wort (WO), preferably from a cast wort, wherein the wort (WO) has a temperature of at least 50 °C,
wherein the clarification device (KV) has a container (KVB) for receiving the wort (WO),
wherein the container (KVB) is arranged with respect to the flow of the wort (WO) preferably downstream to the apparatus (WP) for keeping hot or boiling of the wort (WO) and downstream to the apparatus (AD) for adding the at least one portion (PES) of the enzyme-containing substrate (ES); and
wherein the container (KVB) is arranged with respect to the flow of the wort (WO) preferably upstream to the second apparatus (WK2) for cooling the wort (WO); and
wherein the container (KVB) has at least one inlet opening (EKVB) for introducing the wort (WO) into the container (KVB); and
wherein the container (KVB) has at least one outlet opening (AKVB) for withdrawing the wort (WO) from the container (KVB);
wherein the clarification device (KV) has a cooling apparatus (KVK);
wherein the cooling apparatus (KVK) is suitable, preferably arranged such in the brewing plant (OM), to cool the wort (WO) or only the wort (WO), which is present in the upper or lower half of the container (KVB), preferably in the upper or lower third of the container (KVB), or a partial volume thereof.

5. Method (VO) for continuously or discontinuously obtaining and treating a wort (WO) in the beer brewery or beverage industry;
when the wort (WO) contains at least one wort which is selected from a group, at least consisting of a first wort (WO1), a second wort (WO2), a third wort (WO3), and a fourth wort (WO4);
wherein the method (VO) comprises a first partial method (TV1) for obtaining the wort (WO) from a mesh (MA), at least having the steps:
(1a) continuously or discontinuously supplying the mash (MA) to a first receiving unit (AG1) of a first lauter device (LV1), preferably the first lauter device (LV1) as defined in clam 1;
(1b) continuously or discontinuously separating the mash (MA) in the first lauter device (LV1) into a first wort WO1 and a first residual mash (RM1) by means of separating or filtrating the mash (MA) by use of at least one surface (FA1) of a first separating device (LT1);
wherein the filtrate or permeate is the first wort (WO1) and the filter residual or retentate is the first residual mash (RM1);
whereby the separation is driven by the hydrostatic pressure of the mash (MA) and/or another pressure acting on the mash (MA) and/or a vacuum acting on the first residual mash (RM1);
wherein during the separating of the mash (MA) into the first wort (WO1) and the first residual mash (RM1), the first surface (FA1) of the first separating device (LT1) moves relatively to the mash (MA) being contained in the first lauter device (LV1), to the first residual mash (RM1) being contained in the first lauter device (LV1) and/or to the first receiving unit (AG1); or wherein during the separating of the mash (MA), the first surface (FA1) rotates around a first axis or first middle axis (AX1) of the first separating device (LT1); and
wherein during the entire duration of the separating of the mash (MA), the relative movement or rotational movement of the first surface (FA1) is effected in an uninterrupted or intermittent manner, in particular at regular time intervals;
wherein the first wort (WO1) preferably has a content of solid matter (F) of at least 300 mg/L, preferably at least 500 mg/L, preferably at least 1,000 mg/L, in particular at least 2,000 mg/L;
wherein the method (VO) further includes a second partial method (TV2) for treating the wort (WO) obtained in the first partial method (TV1), at least comprising the steps:
(2a) after a thermal treatment, preferably keeping hot or boiling, of the wort (WO) obtained in the first partial method (TV1), setting the temperature, in particular cooling, of the wort (WO) to a first temperature (T1) between 0 and 85 °C, preferably between 0 and 80 °C, preferably between 70 and 85 °C, preferably between 72 and 83 °C, preferably between 80 and 85 °C, preferably between 80 and 82 °C, preferably between 72 and 78 °C, preferably between 40 and 55 °C, preferably between 45 and 50 °C; and
(2b) adding of at least one portion (PES) of an enzyme-containing substrate (ES), preferably of at least one portion (PMA) of a mash and/or at least one portion (PMAA) of a mash extract (MAA) and/or a portion (PVW) containing an enzyme-containing wort (WOE) which has being heated to not more than 80 °C, preferably not more than 78 °C, preferably not more than 76 °C, preferably not more than 74 °C, preferably not more than 72 °C, preferably not more than 70 °C, preferably not more than 68 °C, in particular not more than 66 °C, in particular a portion (PVW) of a first wort (first run) (VW), preferably of the first wort (WO1), or preferably of a mixture of at least two of the portion (PMA), the portion (PMAA) and the portion (PVW), to the wort (WO);
wherein the wort (WO) has the first temperature (T1) or lower at the time of adding; and
wherein the second partial method (TV2) is preferably carried out by using the second device (V2), as is defined in claim 1 or 2.

6. Method (VO) according to claim 5, **characterized in that** the first partial method (TV1) further comprises the steps of:
(1c) mixing of water or a diluted wort, preferably the third wort (WO3), with the first residual mash (RM1) obtained at the separation according to step (1b), in a predefined volumetric flow ratio, whereby a first mixture (MX1) is obtained;
(1d) prior to step (1c): continuous or discontinuous supplying the first residual mash (RM1) to the second receiving unit (AG2) of a second lauter device (LV2);
(1e) after step (1c): continuous or discontinuous supplying the first mixture (MX1) to the second receiving unit (AG2) of the second lauter device (LV2);
wherein the second lauter device (LV2) preferably has a shape which is identical to the first lauter device (LV1), as is defined in claim 1;
(1f) continuous or discontinuous separating of the thus obtained first mixture (MX1) into a second wort (WO2) and a second residual mash (RM2) by means of the at least one second separating device (LT2) or by means of separating or filtrating the first mixture (MX1) by use of a second surface (FA2) of the second separating device (LT2) in the second lauter device (LV2);
wherein the filtrate or permeate is the second wort (WO2) and the filter residual or the retentate is the second residual mash (RM2);
wherein the separation is driven by the hydrostatic pressure of the first mixture (MX1) and/or another pressure acting upon the first mixture (MX1) and/or a negative pressure acting upon the second residual phase (RM2);
wherein, during the separation of the first mixture (MX1) into the second wort (WO2) and the second residual phase (RM2), the second surface (FA2) moves relative to the first mixture (MX1) present in the second lauter device (LV2), to the second residual phase (RM2) present in the second lauter device (LV2) and/or to the second receiving unit (AG2), or
during the separation of the first mixture (MX1) into the second wort (WO2) and the second residual phase (RM2), the second surface (FA2) rotates about a second axis or second middle axis (AX2) of the second separating device (LT2); and
wherein the relative movement or the rotational movement of the second surface (FA2) is effected in an uninterrupted or intermittent manner, preferably at regular time intervals, during the entire period of separation of the first mixture (MX1).

7. Method (VO) according to claim 5 or 6, **characterized in that** the second partial method (TV2) further comprises at least one of the steps:
(2c) at least partially clarifying of the wort (WO);
wherein the adding according to step (2b) is carried out preferably prior to the at least partially of clarifying the wort (WO).

8. Method (VO) according to any one of claims 5 to 7, **characterized in that** the second partial method (TV2) further comprises the step:
(2f) after adding according to step (2b) and allowing a predetermined duration of time to lapse: heating the wort (WO) to a third temperature (T3) between 82 and 99 °C, preferably between 82 and 95 °C, preferably between 82 and 90 °C, particular between 82 and 85 °C.

9. Method (VO) according to any one of claims 5 to 8, **characterized in that** the method (VO) further comprises a third partial method (TV3) for hopping of the wort (WO) or of a beer or beverage obtained thereof or of a precursor thereof;
wherein the third partial method (TV3) at least comprises the steps:
(3a) providing an isomerization substrate (IS) containing a wort or consisting of a wort, in particular a post run or a last run, wherein the wort preferably has an extract content in the range from 0.2 to 8 °P, preferably from 0.5 to 5 °P,
wherein the isomerization substrate (IS) preferably has a content of coarse particles having particles sizes of 40 to 400 µm of more than 100 mg/L, preferably of more than 200 mg/L, preferably of more than 400 mg/L;
(3b) heating of the isomerization substrate (IS) to a temperature between 80 and 105 °C, preferably 93 to 98 °C;
(3c) mixing the isomerization substrate (IS) with a hop substrate (IH), thereby obtaining a mixture (IG);
wherein the hop substrate (IH) contains at least one isomerizable hop component, preferably at least one α acid;
(3d) setting the temperature of the resulting mixture (IG) to a temperature within a range (TB) between 80 and 105 °C, preferably between 93 and 100 °C;
wherein the temperature range (TB) preferably includes the temperatures from 15 °C below to 2 °C, preferably from 15 °C below to 5 °C, below a maximum temperature (TMAX) attained by the wort (WO) during the thermal treatment of the same in a beer manufacturing method which includes the method (VO), preferably the third partial method (TV3); and
maintaining the temperature of the resulting mixture (IG) within the range (TB) for a predetermined period of time (tI);
wherein the period of time (tI) is preferably by 20 to 50 minutes longer, preferably by 20 to 45 minutes longer, than a period of time (tK) of the thermal treatment of the wort (WO) in the beer manufacturing process (expressed as a formula: tI = tK + (20 to 50 min) = (tk + 20 min) to (tK + 50 min)); and
(3e) preferably at least partly separating of solid components from the mixture (IG) obtained in step (3d); and
(3f) mixing of the mixture (IG) obtained in step (3c) or (3d) or (3e), with the wort (WO), which is obtained preferably according to the second partial method (TV2), or with a beer or beverage resulting from the wort (WO), or with a precursor thereof;
wherein prior to the mixing of the mixture (IG) with the wort (WO), the wort (WO) was thermally treated separately from the mixture (IG) for at least 30 minutes, wherein the wort (WO) was exposed to the temperature (TMAX) as the maximum temperature; and
preferably, the solid components of the wort (WO), preferably hot trub, had been removed to at least 80 %, preferably to at least 90 %, from the wort (WO) after heating of the wort (WO) and prior to mixing with the mixture (IG); and
wherein the third partial method (TV3) is carried out preferably by use of the isomerization device (IV), as is defined in claim 3.

10. Method (VO) according to any one of claims 5 to 9, **characterized in that** the method (VO) further comprises a third partial method (TV3) for hopping of the wort (WO) or of a beer or of a beverage obtained thereof or of a precursor thereof;
wherein the third partial method (TV3) at least comprises the steps:
(3a) providing an isomerization substrate (IS) containing a wort or consisting of a wort, wherein the wort preferably has an extract content in the range from 0.2 to 8 °P, preferably from 0.5 to 5 °P,
wherein the isomerization substrate (IS) has an extract content in the range from 0.2 to 8 °P, preferably from 0.5 to 5 °P,
wherein the isomerization substrate (IS) preferably has a content of coarse particles having particles sizes of 40 to 400 µm of more than 100 mg/L, preferably of more than 200 mg/L, preferably of more than 400 mg/L;
(3b) mixing of the isomerization substrate (IS) with a hop substrate (IH), thereby obtaining a mixture (IG);
wherein the hop substrate (IH) contains at least one isomerizable hop component, preferably at least one α acid;
(3c) setting the temperature of the resulting mixture (IG) to a temperature within the range (TB) of 80 to 105 °C, preferably 93 to 100 °C;
wherein the temperature range (TB) preferably includes the temperatures from 15 °C below to 2 °C, preferably from 15 °C below to 5 °C, below a maximum temperature (TMAX) attained by the wort (WO) during the thermal treatment of the same in a beer manufacturing method which includes the method (VO), preferably the third partial method (TV3); and
(3d) maintaining the temperature of the resulting mixture (IG) within the range (TB) for a predetermined period of time (tI);
wherein the period of time (tI) is preferably by 20 to 50 minutes longer, preferably by 20 to 45 minutes longer, than a period of time (tK) of the thermal treatment of the wort (WO) in the beer manufacturing process (expressed as a formula: tI = tK + (20 to 50 min) = (tk + 20 min) to (tK + 50 min)); and
(3e) preferably at least partly separating solid components from the mixture (IG) obtained in step (3d); and
(3 f) mixing of the mixture (IG) obtained in step (3b) or (3c) or (3d) or (3e) with the wort (WO), which is obtained preferably according to the second partial method (TV2), or with a beer or beverage resulting from the wort (WO), or with a precursor thereof;
wherein prior to the mixing of the mixture (IG) with the wort (WO), the wort (WO) was thermally treated separately from the mixture (IG) for at least 30 minutes, wherein the wort (WO) was exposed to the temperature (TMAX) as the maximum temperature; and
preferably, the solid components of the wort (WO), preferably hot trub, had been removed to at least 80 %, preferably to at least 90 %, from the wort (WO), after heating of the wort (WO) and prior to mixing with the mixture (IG); and
wherein the third partial method (TV3) is carried out preferably by use of the isomerization device (IV), as is defined in claim 3.

11. Method (VO) according to any one of claims 5 to 10, **characterized in that** the method (VO) further includes a fourth partial method (TV4) for at least partially clarifying the wort (WO), preferably of a cast wort, preferably by means of the clarification device (KV) according to claim 4;
wherein the fourth partial method (TV4) at least includes the steps:
(4a) introducing the wort (WO) to be clarified in a container (KVB) for receiving the wort (WO) through at least one inlet opening (EKVB);
wherein the wort (WO) flowing into the container (KVB) has a temperature of at least 50 °C;
(4b) allowing the wort (WO) to rest in the container (KVB) for a predetermined period of time (tS), wherein the solid matter contained in the wort (WO) sediments at least partly;
(4c) withdrawing the resulting, clarified wort (WO) from the container (KVB) through at least one outlet opening (AKVB);
wherein during the step (4b), the wort (WO) being present in the container (KVB) or a partial volume thereof is cooled in the area of the upper or lower half of the container (KVB), preferably in the area of the upper or lower third of the container (KVB); and
wherein the fourth partial method (TV4) is preferably carried out by using the clarification device (KV) as is defined in claim 4.

12. Method (VO) according to any one of claims 5 to 11, **characterized in that** the method (VO) has a fifth partial method (TV5) for treating a wort (WO) containing solid matter and preferably, for hopping of a wort (WO);
wherein fifth partial method (TV5) at least comprises the steps:
(5a) providing the wort (WO), preferably the wort (WO) according to the first partial method (TV1); and
(5b) mixing of the wort (WO) with an additive (Z), thereby obtaining a wort (WO) containing the additive (Z), preferably prior to step (2a) or prior to or during step (2d) according to the second partial method (TV2);
wherein the additive (Z) contains at least one material, selected from a group, consisting of a hop trub, a hot trub, a cold trub, a kieselguhr, a silica gel, a PVPP, a bentonite, rice bowls, cereal bowls, wood chips, activated carbon, natural hops, hop pellets, and solid components of natural hops or of hop pellets.

13. Use of an enzyme-containing substrate (ES), preferably at least one portion (PMA) of a mash (MA) and/or at least one portion (PMAA) of at least one mash extract (MAA) and/or one portion containing an enzyme-containing wort (WOE) which has not been heated to more than 80 °C, preferably one portion (PVW) of a first wort (first run) (VW), preferably of the first wort (WO1), for treating a wort (WO);
wherein the wort (WO) has a content of solid matter (F) of at least 300 mg/L, preferably at least 500 g/L, preferably at least 1,000 mg/L, in particular at least 2,000 mg/L; and wherein the wort (WO) is preferably obtained by means of surface filtration; or
wherein the wort (WO) is obtained by means of surface filtration by use of a first lauter device (LV1) as defined in claim 1.

14. Wort (WO) or a beer obtained from the wort (WO) or beverage obtained from the wort (WO) or a precursor of the beer or beverage obtained from the wort (WO);
wherein the wort (WO) is manufactured by using the brewery plant (OM) according to one of claims 1 to 4; and/or
wherein the wort (WO) is manufactured and treated by means of the method (VO) according to one of claims 5 to 12.

## Revendications

1. Installation de brassage (OM) pour l'obtention et le traitement continus ou discontinus d'un moût (WO) dans la brasserie ou l'industrie des boissons,
dans laquelle le moût (WO) contenant au moins un moût choisi dans un groupe comprenant au moins un premier moût (WO1), un deuxième moût (WO2), un troisième moût (WO3) et un quatrième moût (WO4),
l'installation de brassage (OM) comprenant :
au moins un premier dispositif d'affinage (LV1) pour l'obtention continue ou
discontinue du premier moût (WO1) à partir d'une maische (MA), comprenant au moins :
un premier dispositif de réception (AG1) pour recevoir la maische (MA) ;
au moins un premier dispositif de séparation (LT1) avec respectivement une première surface (FA1) ;
dans laquelle la première surface (FA1) présentant une pluralité d'ouvertures (OP)
dans laquelle le premier dispositif d'affinage (LV1) étant de préférence adapté pour séparer, au moyen de la première surface (FA1) du premier dispositif de séparation (LT1), la maische (MA) en le premier moût (WO1) et une première maische résiduelle (RM1) de manière continue ou discontinue ;
dans laquelle la première surface (FA1) ou une partie de celle-ci peut être mise en contact avec la maische (MA) lorsque la maische (MA) destiné à être séparé en le premier moût (WO1) et la première maische résiduelle (RM1) est présent dans le premier dispositif de réception (AG1) ;
dans laquelle, pendant le fonctionnement du premier dispositif d'affinage (LV1), la première surface (FA1) est disposée de manière à pouvoir se déplacer ou se déplacer ou tourner par rapport à la maische (MA) reçu dans le premier dispositif de réception (AG1), à la première maische résiduelle (RM1) et/ou au premier dispositif de réception (AG1) ;
dans laquelle l'installation de brassage (OM) comprenant en outre un deuxième dispositif (V2), le deuxième dispositif (V2) comprenant :
un premier dispositif (WK1) pour ajuster la température, en particulier le refroidissement, du moût (WO) à une première température (T1) comprise entre 0 et 85°C après la fin du maintien à chaud ou de l'ébullition du moût (WO) ; et
un dispositif (AD) pour ajouter au moins une portion (PES) d'un substrat contenant des enzymes (ES), de préférence au moins une portion (PMA) d'une maische (MA) et/ou au moins une portion (PMAA) d'au moins un extrait de maische (MAA) et/ou une portion (PVW) contenant un moût non chauffé à plus de 80°C, moût contenant des enzymes (WOE), de préférence une portion (PVW) d'un moût de tête (VW), de préférence le premier moût (WO1), au moût (WO) obtenu après l'ajustement, en particulier le refroidissement, à la première température (T1) ;
dans laquelle le premier dispositif (WK1) de réglage de la température, en particulier de refroidissement, du moût (WO) étant disposé en aval d'un dispositif (WP) de maintien à chaud ou d'ébullition du moût (WO) ; et
dans laquelle le dispositif (AD) étant disposé en aval du premier dispositif (WK1) pour régler la température, en particulier le refroidissement, du moût (WO) à la première température (T1).

2. L'installation de brassage (OM) selon la revendication 1, **caractérisée en ce que** le dispositif (AD) pour ajouter la au moins une portion (PES) du substrat contenant des enzymes (ES) est disposé en amont ou en aval d'un dispositif (WH) pour clarifier le moût (WO) ou dans la zone de celui-ci.

3. L'installation de brassage (OM) selon la revendication 1 ou 2, **caractérisée en ce que** l'installation de brassage (OM) comprend en outre au moins un dispositif d'isomérisation (IV) pour isomériser des composants de houblon isomérisables dans un substrat d'isomérisation (IS), comprenant :
un récipient (IB) destiné à contenir le substrat d'isomérisation (IS) ou un mélange (IG) contenant le substrat d'isomérisation (IS) ;
dans laquelle le récipient (IB) ayant un orifice d'entrée (EIB) pour introduire le substrat d'isomérisation (IS) ou le mélange (IG) dans le récipient (IB) ; l'orifice d'entrée (EIB) étant en communication fluidique avec au moins l'un du premier dispositif d'affinage (LV1), du deuxième dispositif d'affinage (LV2), du troisième dispositif d'affinage (LV3) et du quatrième dispositif d'affinage (LV4) ;
dans laquelle le récipient (IB) comprend un orifice de sortie (AIB) pour décharger le substrat d'isomérisation (IS) ou le mélange (IG) du récipient (IB) ; dans laquelle l'orifice de sortie (AIB) est en communication fluidique avec un récipient (L) contenant de la bière ou du moût,
dans laquelle le récipient (L) de transport de bière ou de moût étant disposé de préférence en aval du dispositif (WH) de clarification au moins partielle du moût (WO) par rapport à un courant de moût ;
un tuyau de vapeur (ID) pour évacuer la vapeur ou le brouillard du substrat d'isomérisation (IS) ou du mélange (IG) du récipient (IB) ; et
de préférence, un dispositif pour ajuster la température du mélange (IG) ;
dans laquelle le récipient (IB) étant un récipient séparé du dispositif (WP) de traitement thermique du moût (WO) produit dans l'installation de brassage (OM) ; dans laquelle le récipient (IB) ayant de préférence un volume utile d'au plus 60 %, de préférence d'au plus 50 %, en particulier d'au plus 40 %, du volume utile, de préférence du volume plein de la poche, du dispositif (WP) de traitement thermique du moût (WO) produit dans l'installation de brassage (OM).

4. L'installation de brassage (OM) selon l'une des revendications 1 à 3, **caractérisée en ce que** l'installation de brassage (OM) comprend en outre au moins un dispositif de clarification (KV) pour séparer au moins partiellement les matières solides du moût (WO), de préférence un moût de décantation, le moût (WO) présentant une température d'au moins 50°C,
dans laquelle le dispositif de clarification (KV) présentant un récipient (KVB) pour recevoir le moût (WO),
dans laquelle le récipient (KVB) étant disposé, par rapport à l'écoulement du moût (WO), de préférence en aval du dispositif (WP) de maintien à chaud ou de cuisson du moût (WO) et en aval du dispositif (AD) d'addition de la au moins une portion (PES) du substrat contenant l'enzyme (ES) ; et
dans laquelle le récipient (KVB) étant disposé, par rapport à l'écoulement du moût (WO), de préférence en amont du deuxième dispositif (WK2) de refroidissement du moût (WO) ; et
dans laquelle le récipient (KVB) présentant au moins une ouverture d'entrée (EKVB) pour l'introduction du moût (WO) dans le récipient (KVB) ; et
dans laquelle le récipient (KVB) présentant au moins une ouverture de sortie (AKVB) pour extraire le moût (WO) du récipient (KVB) ;
dans laquelle le dispositif de clarification (KV) comprend un dispositif de refroidissement (KVK) ;
dans laquelle le dispositif de refroidissement (KVK) étant adapté, de préférence disposé dans l'installation de brassage (OM), pour refroidir le moût (WO) ou seulement le moût (WO) qui se trouve dans la moitié supérieure ou inférieure du dispositif (KVB), de préférence dans le tiers supérieur ou inférieur du dispositif (KVB), ou un volume partiel de celui-ci.

5. Procédé (VO) pour l'obtention et le traitement en continu ou en discontinu d'un moût (WO) dans la brasserie ou l'industrie des boissons ;
dans lequel le moût (WO) contient au moins un moût choisi dans un groupe constitué au moins d'un premier moût (WO1), d'un deuxième moût (WO2), d'un troisième moût (WO3) et d'un quatrième moût (WO4) ;
dans lequel le procédé (VO) comprenant un premier procédé partiel (TV1) pour obtenir le moût (WO) à partir d'une maische (MA), comprenant au moins les étapes consistant à :
(1a) l'alimentation continue ou discontinue d'une maische (MA) vers un premier dispositif de réception (AG1) d'un premier dispositif d'affinage (LV1), de préférence le premier dispositif d'affinage (LV1) est tel que défini dans la revendication 1 ;
(1b) la séparation continue ou discontinue de la maische (MA) dans le premier dispositif d'affinage (LV1) en un premier moût (WO1) et une première maische résiduelle (RM1), au moyen d'une séparation ou d'une filtration de la maische (MA) à l'aide d'au moins une première surface (FA1) d'un premier dispositif de séparation (LT1) ;
dans lequel le filtrat ou perméat étant le premier moût (WO1) et le résidu de filtration ou rétentat étant la première maische résiduelle (RM1) ;
dans lequel la séparation est entraînée par la pression hydrostatique de la maische (MA) et/ou une autre pression agissant sur la maische (MA) et/ou une dépression agissant sur la première maische résiduelle (RM1) ;
dans lequel, pendant la séparation la maische (MA) en le premier moût (WO1) et la première maische résiduelle (RM1), la première surface (FA1) du premier dispositif de séparation (LT1) se déplace relativement à la maische (MA) présent dans le premier dispositif d'affinage (LV1), à la première maische résiduelle (RM1) présente dans le premier dispositif d'affinage (LV1) et/ou au premier dispositif de réception (AG1), ou
la première surface (FA1) tourne autour d'un premier axe ou d'un premier axe central (AX1) du premier dispositif de séparation (LT1) pendant la séparation de la maische (MA) ; et
dans lequel le mouvement relatif ou le mouvement de rotation de la première surface (FA1) est ininterrompu ou intermittent, de préférence à des intervalles de temps réguliers, pendant toute la durée de la séparation de la maische (MA) ;
dans lequel le premier moût (WO1) ayant de préférence une teneur en matières solides (F) d'au moins 300 mg/L, de préférence d'au moins 500 mg/L, de préférence d'au moins 1 000 mg/L, en particulier d'au moins 2 000 mg/L ;
dans lequel le procédé (VO) comprenant en outre un deuxième procédé partiel (TV2) de traitement du moût (WO) obtenu dans le premier procédé partiel (TV1), comprenant au moins les étapes consistant à :
(2a) après un traitement thermique, de préférence un maintien à chaud ou une cuisson, du moût (WO) obtenu dans le premier procédé partiel (TV1), ajuster la température, en particulier refroidir, du moût (WO) à une première température (T1) comprise entre 0 et 85°C, de préférence entre 0 et 80 °C, de préférence entre 70 et 85 °C, de préférence entre 72 et 83 °C, de préférence entre 80 et 85 °C, de préférence entre 80 et 82 °C, de préférence entre 72 et 78 °C, de préférence entre 40 et 55 °C, de préférence entre 45 et 50 °C ; et
(2b) ajouter au moins une portion (PES) d'un substrat contenant des enzymes (ES), de préférence au moins une portion (PMA) d'une maische (MA) et/ou au moins une portion (PMAA) d'un extrait de maische (MAA) et/ou une portion (PVW) contenant une température pas plus de 80 °C, de préférence pas plus de 78 °C, de préférence pas plus de 76 °C, de préférence pas plus de 74 °C, de préférence pas plus de 72 °C, de préférence pas plus de 70 °C, de préférence pas plus de 68 °C, en particulier pas plus de 66 °C, du moût contenant des enzymes (WOE) chauffé, en particulier une portion (PVW) d'un moût de tête (VW), de préférence du premier moût (WO1), ou de préférence un mélange d'au moins deux de la portion (PMA), de la portion (PMAA) et de la portion (PVW), au moût (WO) ;
dans lequel le moût (WO) présentant au maximum la première température (T1) lors de l'ajout ; et
dans lequel le deuxième procédé partiel (TV2) étant de préférence réalisé en utilisant le deuxième dispositif (V2) tel que défini dans la revendication 1 ou 2.

6. Le procédé selon la revendication 5, **caractérisé en ce que** le premier procédé partiel (TV1) comprend en outre les étapes consistant à :
(1c) mélanger de l'eau ou un moût dilué, de préférence le troisième moût (WO3), avec la première maische résiduelle (RM1) obtenu lors de la séparation selon l'étape (1b), dans un rapport de débit volumique prédéfini, ce qui permet d'obtenir un premier mélange (MX1) ;
(1d) avant l'étape (1c), l'alimentation continue ou discontinue de la première maische résiduelle (RM1) vers un deuxième dispositif de réception (AG2) d'un deuxième dispositif d'affinage (LV2) ; ou
(1e) après l'étape (1c) : l'alimentation continue ou discontinue du premier mélange (MX1) vers le deuxième dispositif de réception (AG2) du deuxième dispositif d'affinage (LV2) ;
dans lequel le deuxième dispositif d'affinage (LV2) ayant de préférence une forme identique au premier dispositif d'affinage (LV1) tel que défini dans la revendication 1 ;
(1f) séparer de manière continue ou discontinue le premier mélange (MX1) ainsi obtenu en un deuxième moût (WO2) et une deuxième maische résiduelle (RM2) au moyen d'au moins un deuxième dispositif de séparation (LT2) ou en séparant ou filtrant le premier mélange (MX1) à l'aide d'une deuxième surface (FA2) du deuxième dispositif de séparation (LT2) dans le deuxième dispositif d'affinage (LV2) ;
dans lequel le filtrat ou perméat étant le second moût (WO2) et le résidu de filtration ou rétentat étant la deuxième maische résiduelle (RM2) ;
dans lequel la séparation étant entraînée par la pression hydrostatique du premier mélange (MX1) et/ou par une autre pression agissant sur le premier mélange (MX1) et/ou par une dépression agissant sur la deuxième maische résiduelle (RM2) ;
dans lequel, pendant la séparation du premier mélange (MX1) en le deuxième moût (WO2) et la deuxième maische résiduelle (RM2), la deuxième surface (FA2) se déplace relativement au premier mélange (MX1) présent dans le deuxième dispositif d'affinage (LV2), à la deuxième maische résiduelle (RM2) présente dans le deuxième dispositif d'affinage (LV2) et/ou au deuxième dispositif de réception (AG2), ou
pendant la séparation du premier mélange (MX1) en le second moût (WO2) et la deuxième maische résiduelle (RM2), la seconde surface (FA2) tourne autour d'un second axe ou d'un second axe central (AX2) du second dispositif de séparation (LT2) ; et
dans lequel le mouvement relatif ou le mouvement de rotation de la deuxième surface (FA2) étant ininterrompu ou intermittent, de préférence à intervalles de temps réguliers, pendant toute la durée de la séparation du premier mélange (MX1).

7. Le procédé (VO) selon la revendication 5 ou 6, **caractérisé en ce que** le deuxième procédé partiel (TV2) comprend en outre au moins une des étapes :
(2c) clarification au moins partielle du moût (WO) ;
dans lequel l'ajout selon l'étape (2b) étant de préférence effectué avant la clarification au moins partielle du moût (WO).

8. Le procédé (VO) selon l'une des revendications 5 à 7, **caractérisé en ce que** le deuxième procédé partiel (TV2) comprend en outre l'étape :
(2f) après l'ajout selon l'étape (2b) et en laissant s'écouler un temps prédéterminé : chauffer le moût (WO) à une troisième température (T3) comprise entre 82 et 99°C, de préférence entre 82 et 95°C, de préférence entre 82 et 90°C, en particulier entre 82 et 85°C.

9. Le procédé (VO) selon l'une quelconque des revendications 5 à 8, **caractérisé en ce que** le procédé (VO) comprend en outre un troisième procédé partiel (TV3) de houblonnage du moût (WO) ou d'une bière ou d'une boisson produite à partir de celui-ci ou d'un précurseur de celui-ci ;
dans lequel le troisième procédé partiel (TV3) comprend au moins les étapes consistant à :
(3a) fournir un substrat d'isomérisation (IS) contenant un moût ou constitué d'un moût, en particulier un effluent de post-coulage ou une eau lisse, le moût ayant de préférence une teneur en extrait dans la plage de 0,2 à 8 °P, de préférence de 0,5 à 5 °P ;
dans lequel le substrat d'isomérisation (IS) ayant une teneur en extrait de l'ordre de 0,2 à 8 °P, de préférence de 0,5 à 5 °P ;
dans lequel le substrat d'isomérisation (IS) ayant de préférence une teneur en particules grossières ayant des tailles de particules de 40 à 400 µm de > 100 mg/l, de préférence > 200 mg/l, en particulier > 400 mg/l ;
(3b) Chauffer le substrat d'isomérisation (IS) à une température comprise entre 80 et 105°C, de préférence entre 93 et 98°C ;
(3c) mélanger le substrat d'isomérisation (IS) avec un substrat de houblon (IH) pour obtenir un mélange (IG) ;
dans lequel le substrat de houblon (IH) contenant au moins un composant de houblon isomérisable, de préférence au moins un acide α ;
(3d) ajuster la température du mélange résultant (IG) à une température comprise dans une plage (TB) allant de 80 à 105°C, de préférence de 93 à 100°C ;
dans lequel la plage de températures (TB) comprenant de préférence les températures de 15°C en dessous à 2°C, de préférence de 15°C en dessous à 5°C, en dessous d'une température (TMAX) que le moût (WO) atteint au maximum pendant le traitement thermique de celui-ci dans un procédé de préparation de bière comprenant le procédé (VO), de préférence le troisième procédé partiel (TV3) ; et maintenir la température du mélange résultant (IG) dans la plage (TB) pendant une durée prédéterminée (tI) ;
dans lequel la durée (tI) étant de préférence de 20 à 50 minutes plus longue, de préférence de 20 à 45 minutes plus longue, qu'une durée (tK) du traitement thermique du moût (WO) dans le procédé de préparation de la bière (exprimée par la formule : tI = tK + (20 à 50 min) = tK + 20 min à tK + 50 min) ; et
(3e) de préférence, séparer au moins partiellement les composants solides du mélange (IG) obtenu à l'étape (3d) ; et
(3f) mélanger le mélange (IG) obtenu à l'étape (3c) ou (3d) ou (3e) avec le moût (WO), de préférence obtenu selon le deuxième procédé partiel (TV2), ou une bière ou une boisson ou un précurseur de celle-ci obtenu à partir du moût (WO) ;
dans lequel le moût (WO) ayant été traité thermiquement séparément du mélange (IG) pendant au moins 30 minutes avant le mélange du mélange (IG) avec le moût (WO), dans lequel le moût (WO) ayant été exposé à la température (TMAX) comme température la plus élevée, et
de préférence, les composants solides du moût (WO), de préférence les lies chaudes, ont été éliminés du moût (W) à au moins 80 %, de préférence à au moins 90 %, après le chauffage du moût (WO) et avant le mélange avec le mélange (IG) ; et dans lequel le troisième procédé partiel (TV3) est de préférence réalisé en utilisant le dispositif d'isomérisation (IV) tel que défini dans la revendication 3.

10. Le procédé (VO) selon l'une des revendications 5 à 9, **caractérisé en ce que** le procédé (VO) comprend en outre un troisième procédé partiel (TV3) de houblonnage du moût (WO) ou d'une bière ou d'une boisson produite à partir de celui-ci ou d'un précurseur de celui-ci ;
dans lequel le troisième procédé partiel (TV3) comprend au moins les étapes consistant à :
(3a) fournir un substrat d'isomérisation (IS) contenant un moût ou consistant en un moût, dans lequel le moût ayant de préférence une teneur en extrait dans la plage de 0,2 à 8 °P, de préférence de 0,5 à 5 °P ;
dans lequel le substrat d'isomérisation (IS) ayant une teneur en extrait dans la plage de 0,2 à 8 °P, de préférence de 0,5 à 5 °P ;
dans lequel le substrat d'isomérisation (IS) ayant de préférence une teneur en particules grossières ayant des tailles de particules de 40 à 400 µm de > 100 mg/l, de préférence > 200 mg/l, en particulier > 400 mg/l ;
(3b) mélanger le substrat d'isomérisation (IS) avec un substrat de houblon (IH) pour obtenir un mélange (IG) ;
dans lequel le substrat de houblon (IH) contenant au moins un composant de houblon isomérisable, de préférence au moins un acide α ;
(3c) ajuster la température du mélange résultant (IG) à une température comprise dans une plage (TB) entre 80 et 105°C, de préférence entre 93 et 100°C ;
dans lequel la plage de températures (TB) comprenant de préférence les températures de 15°C en dessous à 2°C, de préférence de 15°C en dessous à 5°C, en dessous d'une température (TMAX) que le moût (WO) atteint au maximum pendant le traitement thermique de celui-ci dans un procédé de préparation de bière comprenant le procédé (VO), de préférence le troisième procédé partiel (TV3) ; et
(3d) maintenir la température du mélange résultant (IG) dans la plage (TB) pendant une durée prédéterminée (tI) ;
dans lequel la durée (tI) étant de préférence de 20 à 50 minutes plus longue, de préférence de 20 à 45 minutes plus longue, qu'une durée (tK) du traitement thermique du moût (WO) dans le procédé de préparation de la bière (exprimée par la formule : tI = tK + (20 à 50 min) = tK + 20 min à tK + 50 min) ; et
(3e) de préférence, séparer au moins partiellement les composants solides du mélange (IG) obtenu à l'étape (3d) ; et
(3f) mélanger le mélange (IG) obtenu à l'étape (3b), (3c), (3d) ou (3e) avec le moût (WO) obtenu de préférence selon le deuxième procédé partiel (TV2) ou une bière ou une boisson ou un précurseur de celle-ci obtenu à partir du moût (WO) ;
dans lequel le moût (WO) ayant été traité thermiquement pendant au moins 30 minutes avant le mélange du mélange (IG) avec le moût (WO), le moût (WO) ayant été exposé à la température (TMAX) comme étant la température la plus élevée, et de préférence, les composants solides du moût (WO), de préférence les lies chaudes, ont été éliminés du moût (WO) à au moins 80 %, de préférence à au moins 90 %, après le chauffage du moût (WO) et avant le mélange avec le mélange (IG) ; et dans lequel le troisième procédé partiel (TV3) est de préférence réalisé en utilisant le dispositif d'isomérisation (IV) tel que défini dans la revendication 3.

11. Le procédé (VO) selon l'une quelconque des revendications 5 à 10, **caractérisé en ce que** le procédé (VO) comprend en outre un quatrième procédé partiel (TV4) de clarification au moins partielle du moût (WO), de préférence un moût de décantation, de préférence au moyen du dispositif de clarification (KV) tel que défini dans la revendication 4 ;
dans lequel le quatrième procédé partiel (TV4) comprend au moins les étapes consistant à :
(4a) introduire le moût (WO) à clarifier dans un récipient (KVB) pour recevoir le moût (WO) à travers au moins une ouverture d'entrée (EKVB)
dans lequel le moût (WO) entrant dans le récipient (KVB) ayant une température d'au moins 50°C,
(4b) laisser le moût (WO) séjourner dans le récipient (KVB) pendant une durée de séjour moyenne prédéterminée (tS), les matières solides présentes dans le moût (WO) sédimentant au moins partiellement ;
(4c) soutirer le moût clarifié résultant (WO) du récipient (KVB) par au moins une ouverture de sortie (AKVB) ;
**caractérisé en ce que**
pendant l'étape (4b), le moût (WO) présent dans le récipient (KVB) ou un volume partiel de celui-ci est refroidi dans la zone d'une moitié supérieure ou inférieure du récipient (KVB), de préférence dans la zone d'un tiers supérieur ou inférieur du récipient (KVB) ; et
dans lequel le quatrième procédé partiel (TV4) est de préférence réalisé en utilisant le dispositif de clarification (KV) tel que défini dans la revendication 4.

12. Le procédé (VO) selon l'une des revendications 5 à 11, **caractérisé en ce que** le procédé (VO) comprend en outre un cinquième procédé partiel (TV5) de traitement d'un moût contenant des matières solides (WO) et de préférence de houblonnage dudit moût (WO) ;
dans lequel le cinquième procédé partiel (TV5) comprend au moins les étapes consistant à :
(5a) fournir le moût (WO), de préférence le moût (WO) selon le premier procédé partiel (TV1) ; et
(5b) mélanger le moût (WO) avec un additif (Z) pour obtenir un moût (WO) contenant l'additif (Z), de préférence avant l'étape (2a) ou avant ou pendant l'étape (2d) selon le deuxième procédé partiel (TV2) ;
dans lequel l'additif (Z) contient au moins un matériau choisi dans un groupe constitué d'une pulpe de houblon, d'une pulpe chaude, d'une pulpe de refroidissement, d'une terre de diatomées, d'un gel de diatomées, de PVPP, de bentonite, d'écorces de riz, d'écorces de céréales, de copeaux de bois, de charbon actif, d'un houblon naturel, de pellets de houblon, et de composants solides de houblon naturel ou de pellets de houblon.

13. Utilisation d'un substrat contenant des enzymes (ES), de préférence au moins une portion (PMA) d'une maische (MA) et/ou au moins une portion (PMAA) d'au moins un extrait de maische (MAA) et/ou une portion (PVW) contenant un moût contenant des enzymes (WOE) qui n'a pas été chauffé à plus de 80°C, de préférence une portion (PVW) d'un moût de tête (VW), de préférence du premier moût (WO1), pour traiter un moût (WO) ;
dans lequel le moût (WO) ayant une teneur en matières solides (F) d'au moins 300 mg/L, de préférence d'au moins 500 mg/L, de préférence d'au moins 1000 mg/L, en particulier d'au moins 2000 mg/L, et ayant été produit de préférence par filtration de surface ; ou
dans lequel le moût (WO) a été produit par filtration de surface au moyen dudit au moins un premier dispositif d'affinage (LV1) tel que défini dans la revendication 1.

14. Moût (WO) ou une bière ou une boisson préparée à partir du moût (WO) ou un précurseur de la bière ou de la boisson préparé à partir du moût (WO) ;
dans lequel le moût (WO) ayant été produit en utilisant l'installation de brassage (OM) selon l'une des revendications 1 à 4 ; et/ou
dans lequel le moût (WO) ayant été produit et traité par le procédé (VO) selon l'une des revendications 5 à 12.
